# EUROPÄISCHE PATENTSCHRIFT

(11) **EP 3 238 183 B1**
(45) Veröffentlichungstag und Bekanntmachung des Hinweises auf die Patenterteilung: **14.10.2020**
(21) Anmeldenummer: 15721603.7
(22) Anmeldetag: 23.04.2015
(51) Int. Cl.: A47G 29/14, G06Q 10/08, G06Q 20/08, G06Q 20/12, G07C 9/00, G07C 9/27, G07F 5/26, G07F 17/12

(54) **FACHANLAGE**
COMPARTMENT SYSTEM
SYSTÈME À COMPARTIMENTS

(30) Priorität: 23.12.2014 DE 102014119557
(43) Veröffentlichungstag der Anmeldung: 01.11.2017
(73) Patentinhaber: Deutsche Post AG, 53113 Bonn (DE)
(72) Erfinder: JANSEN, Jochen, 53113 Bonn (DE); BENZ, Ramin, 53229 Bonn (DE); DAUTZ, Christoph, 53225 Bonn (DE); CARSTENS, Christian, 53578 Windhagen (DE); SCHUSDZIARA, Dirk, 53117 Bonn (DE); HIRTREITER, Erwin, 93455 Traitsching (DE); SCHIEßL, Franz, A., 93458 Großaign (DE); EISENHART, Christian, 92445 neukirchen-Balbini (DE); BULYGIN, Stanislav, 70794 Filderstadt (DE)
(74) Vertreter: Cohausz & Florack
(86) Internationale Anmeldenummer: PCT/EP2015/058836
(87) Internationale Veröffentlichungsnummer: WO 2016/102079

(56) Entgegenhaltungen:
- WO-A1-00/51750
- WO-A2-01/30213
- DE-A1- 10 246 650
- DE-A1- 10 301 137

## Beschreibung

### Gebiet

Beispielhafte Ausführungsformen der Erfindung betreffen eine Fachanlage zum Einstellen und/oder Abholen von Sendungen, deren Komponenten, insbesondere eine Steuereinheit und eine Schlosssteuereinheit, und von diesen Komponenten ausgeführte Verfahren.

### Hintergrund

Fachanlagen finden beispielsweise in Form von Schließfach- oder Paketfachanlagen mannigfaltig Anwendung. Ein Beispiel für eine Paketfachanlage ist die Packstation der Anmelderin, in die sich ein Empfänger Sendungen liefern lassen kann. Die Sendung wird vom Zusteller in ein Fach einer in der Nähe des Empfängers befindlichen Packstation eingelegt, das Fach verschlossen und der Empfänger entsprechend benachrichtigt. Der Empfänger kann dann das Fach beispielsweise mit einem Code öffnen und die Sendung entnehmen. Durch die Packstation entfällt für den Empfänger die Notwendigkeit, bei der Zustellung einer Sendung zu Hause sein zu müssen. Darüber hinaus kann die Packstation vom Empfänger zu jeder beliebigen Zeit aufgesucht und die Sendung entnommen werden, da zur Entnahme der Sendung kein Personal zugegen sein muss.

Um für den Empfänger den Empfang von Sendungen noch komfortabler zu gestalten, stellt die Anmelderin als weitere Zustellvariante die Lieferung von Sendungen in einen Paketkasten zur Verfügung. Ein Paketkasten ist vom Konzept ähnlich ausgebildet wie ein Briefkasten, also einem Empfänger (oder einer kleinen Gruppe von Empfängern, beispielsweise einer Familie) zugeordnet, aber mit größerem Fassungsvermögen versehen. Sowohl der Zusteller als auch der Empfänger können den Paketkasten mit elektronischen Schlüsseln öffnen. Der Paketkasten ist bevorzugt am oder vor dem Haus des Empfängers angebracht oder aufgestellt. Für den Empfänger entfällt damit im Vergleich zur Packstation der Weg zur Packstation unter Beibehaltung des Vorteils, dass der Empfänger während der Zustellung nicht zu Hause sein muss und die Sendung zu jedem beliebigen Zeitraum aus dem Paketkasten entnehmen kann. Über den Paketkasten kann der Empfänger auch Retouren abwickeln, also Sendungen abholen lassen.

Aus dem Dokument WO 2001/030213 A2 ist eine Cross-Docking-Vorrichtung für die unbeaufsichtigte Paketzustellung bekannt, welche eine Vielzahl von Speichervorrichtungen umfasst, die jeweils eine Tür mit einem Schloss aufweisen, das in Abhängigkeit von Codes ver- und entriegelt wird. Eine mit jedem der Speichervorrichtungen verbundene lokale Schlosssteuerung reagiert auf die Eingabe eines Zugriffscodes, der das Schloss entsperrt, wenn es gesperrt ist, und auf einen Transaktionscode, der das Schloss sperrt, wenn es entsperrt ist Eine zentrale Betriebssteuerung, die mit den lokalen Schlosssteuerungen in Verbindung steht, ist so programmiert, dass sie die in jede lokale Schlosssteuerung eingegebenen Zugriffs- und Transaktionscodes empfängt, bei Empfang eines Transaktionscodes, der das Schloss sperrt, einen Zugriffscode für das Schloss jeder Speichervorrichtung erzeugt und eine Mitteilung über den Zugriffscode ausgibt, der zum Entsperren des Schlosses jeder Speichervorrichtung verwendet wird, wenn es gesperrt ist

Das Dokument DE 103 01 137 A1 betrifft ein Verfahren zum Deponieren von Sendungen durch einen Zusteller in einer elektronischen Schließfachanlage mit mehreren verschließbaren Fächern. Das Verfahren zeichnet sich dadurch aus, dass Steuermittel der Schließfachanlage veranlassen, dass sich ein oder mehrere Fächer zum Deponieren von Sendungen öffnen, und sich automatisch mindestens ein neues Fach öffnet, sobald ein Fach geschlossen wird und Erfassungsmittel der Schließfachanlage zuvor einer Sendung zugeordnete Informationen erfasst haben. Die Erfindung betrifft ferner eine zur Durchführung des Verfahrens geeignete elektronische Schließfachanlage.

Aus dem Dokument WO 2000/051750 A1 ist eine Methode und ein System für den sicheren Empfang von Paketen bekannt Das Verfahren umfasst die folgenden Schritte: Bereitstellen einer Vielzahl von gesteuerten Behältern, Erfassen von Empfängerdaten und Paketdaten, dynamisches Zuweisen eines Behälters geeigneter Größe auf der Grundlage von Paketgrößendaten vor der Lieferung des Pakets, Annehmen der Lieferung an den Behälter, Identifizieren des Empfängers bei Vorlage der Identifizierung durch den Empfänger, und Freigeben des Pakets an den Empfänger. Das System umfasst eine Vielzahl von absicherbaren Lagerbehältern, eine mit den absicherbaren Lagerbehältern gekoppelte Steuerung und einen mit der Steuerung gekoppelten Speicher. Der Speicher enthält eine Datenbank mit Informationen über die Paketzustellung und den Empfänger, eine Datenbank mit dem Behälterstatus und einen Programmcode. Der Programmcode weist die Steuerung an, den Zugriff auf die Lagerbehälter zu erlauben, und weist dynamisch Behälter zu, um die Lagerung von Paketen in einem der absicherbaren Lagerbehälter zu ermöglichen.

Das Dokument DE 102 46 650 A1 betrifft ein Verfahren zum Bestellen und Deponieren von Waren und/oder Paketen in einer Schließfachanlage mit mehreren Schließfächern, die mittels elektrischer Schlösser ver- und entriegelbare Türen oder Klappen aufweisen, die von einem computergesteuerten elektronischen Schließsystem der Anlage angesteuert werden. Das Verfahren stellt eine autarke Arbeitsweise einer Schließfachanlage sicher. Die Waren werden vom Zusteller zugestellt. Die Etikettierungen werden dabei mittels Handscanner ausgelesen. Der Handscanner ist ein Funkscanner und überträgt die Daten an den Computer der Schließfachanlage, der nach Zugangsberechtigungsüberprüfung mindestens ein Schließfach für die Belegung mit den Waren freischaltet. Der Kunde kann die Waren durch Eingabe einer Abholnummer, die ihm zugewiesen wird, abholen.

### Zusammenfassung einiger beispielhafter Ausführungsformen der Erfindung

Der Paketkasten ist im Wesentlichen zur gemeinsamen Nutzung durch wenige Empfänger ausgerichtet Es wäre allerdings wünschenswert, die Vorteile der Zustellung und/oder Abholung von Sendungen mittels des Paketkastens auch einem größeren Empfängerkreis zur Verfügung zu stellen, ohne dass jeder der Empfänger einen jeweiligen Paketkasten anschaffen muss. Insbesondere wäre eine Zustell- und/oder Abholmöglichkeit von Sendungen zum Einsatz in Mehrfamilienhäusern wünschenswert, die die dort vorhandenen Briefkastenanlagen ersetzen oder ergänzen könnte.

Gemäß einem ersten Aspekt wird ein Verfahren offenbart, das Folgendes umfasst:
- Erhalten einer ersten Kennung, die mit zumindest einer Person assoziiert ist, von einem Zusteller oder der Person oder einem tragbaren elektronischen Kommunikationsgerät des Zustellers oder der Person, an einer Steuereinheit einer Fachanlage, die neben der Steuereinheit eine Vielzahl von mit jeweiligen Schlössern versehenen Fächern und den Fächern jeweils zugeordnete Schlosssteuereinheiten aufweist, die zur Kommunikation mit der Steuereinheit eingerichtet sind, wobei die Steuereinheit eine Benutzerschnittstelle aufweist,
- Erhalten, nach dem Erhalten der ersten Kennung (LocklD), von Information an der Steuereinheit, dass ein Fach der Vielzahl von Fächern geschlossen wurde oder dass zumindest eine Sendung von der oder für die Person in ein Fach der Vielzahl von Fächern eingelegt und das Fach geschlossen wurde, wobei die Information von einer dem Fach zugeordneten Schlosssteuereinheit erhalten wird, und wobei die Information mittels eines oder mehrerer Sensoren, die Teil der Schlosssteuereinheit sind oder kommunikativ mit der Schlosssteuereinheit verbunden sind, erfasst wird, und
- Bewirken, durch die Steuereinheit, des Speicherns der ersten Kennung (LockID) in der dem Fach zugeordneten Schlosssteuereinheit, wobei das Bewirken des Speicherns der ersten Kennung (LockID) in der dem Fach zugeordneten Schlosssteuereinheit durch das Erhalten der Information, dass das Fach der Vielzahl von Fächern geschlossen wurde oder dass zumindest eine Sendung von der oder für die Person in ein Fach der Vielzahl von Fächern eingelegt und das Fach geschlossen wurde, ausgelöst wird, oder wobei das Bewirken des Speicherns der ersten Kennung (LockID) in der dem Fach zugeordneten Schlosssteuereinheit durch das Erhalten der Information, dass das Fach der Vielzahl von Fächern geschlossen wurde oder dass zumindest eine Sendung von der oder für die Person in ein Fach der Vielzahl von Fächern eingelegt und das Fach geschlossen wurde, ausgelöst wird und nur unter der zusätzlichen Bedingung erfolgt, dass als weiterer Faktor Information, dass eine zusätzliche Interaktion mit der Benutzerschnittstelle der Steuereinheit stattgefunden hat, erhalten wurde..

Gemäß einem zweiten Aspekt wird ein Verfahren offenbart, das Folgendes umfasst:
- Erfassen, an einer Schlosssteuereinheit, die einem Fach einer Fachanlage zugeordnet ist, die eine Steuereinheit und eine Vielzahl von mit jeweiligen Schlössern versehenen Fächern und den Fächern zugeordnete Schlosssteuereinheiten, die zur Kommunikation mit der Steuereinheit eingerichtet sind, umfasst, dass das Fach geschlossen wurde oder dass zumindest eine Sendung von einer oder für eine Person in das Fach eingelegt und das Fach geschlossen wurde,
- Übermitteln zumindest einer die Schlosssteuereinheit identifizierenden Information an die Steuereinheit, falls erfasst wurde, dass das Fach geschlossen wurde oder dass zumindest eine Sendung von einer oder für eine Person in das Fach eingelegt und das Fach geschlossen wurde,
- Erhalten einer ersten Kennung, die zumindest mit einer Person assoziiert ist, von der Steuereinheit, und
- Speichern der ersten Kennung in der Schlosssteuereinheit.

Der erste Aspekt ist ein Aspekt gemäß der Erfindung und der zweite Aspekt dient dem weiteren Verständnis der Erfindung.

Gemäß jedem dieser Aspekte werden des Weiteren jeweils offenbart:
- Ein Computerprogramm, umfassend Programmanweisungen, die einen Prozessor zur Ausführung und/oder Steuerung des Verfahrens gemäß dem jeweiligen Aspekt veranlassen, wenn das Computerprogramm auf dem Prozessor läuft Unter einem Prozessor sollen in dieser Spezifikation unter anderem Kontrolleinheiten, Mikroprozessoren, Mikrokontrolleinheiten wie Mikrocontroller, digitale Signalprozessoren (DSP), Anwendungsspezifische Integrierte Schaltungen (ASICs) oder Field Programmable Gate Arrays (FPGAs) verstanden werden. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Das Computerprogramm kann beispielsweise über ein Netzwerk wie das Internet, ein Telefon- oder Mobilfunknetz und/oder ein lokales Netzwerk verteilbar sein. Das Computerprogramm kann zumindest teilweise Software und/oder Firmware eines Prozessors sein. Es kann gleichermaßen zumindest teilweise als Hardware implementiert sein. Das Computerprogramm kann beispielsweise auf einem computerlesbaren Speichermedium gespeichert sein, z.B. einem magnetischen, elektrischen, optischen und/oder andersartigen Speichermedium. Das Speichermedium kann beispielsweise Teil des Prozessors sein, beispielsweise ein (nicht-flüchtiger oder flüchtiger) Programmspeicher des Prozessors oder ein Teil davon. Das Speichermedium kann beispielsweise ein gegenständliches oder körperliches Speichermedium sein.
- Eine Vorrichtung, eingerichtet zur Ausführung und/oder Steuerung des Verfahrens gemäß dem jeweiligen Aspekt oder umfassend jeweilige Mittel zur Ausführung und/oder Steuerung der Schritte des Verfahrens gemäß dem jeweiligen Aspekt. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden. Eines oder mehrere der Mittel können auch durch die gleiche Einheit ausgeführt und/oder gesteuert werden. Beispielsweise können eines oder mehrere der Mittel durch einen oder mehrere Prozessoren gebildet sein.
- Eine Vorrichtung, die zumindest einen Prozessor und zumindest einen Speicher, der Programmcode beinhaltet, umfasst, wobei der Speicher und der Programmcode eingerichtet sind, eine Vorrichtung mit dem zumindest einen Prozessor dazu zu veranlassen, zumindest das Verfahren gemäß dem jeweiligen Aspekt auszuführen und/oder zu steuern. Dabei können entweder alle Schritte des Verfahrens gesteuert werden, oder alle Schritte des Verfahrens ausgeführt werden, oder einer oder mehrere Schritte gesteuert und einer oder mehrere Schritte ausgeführt werden.

Eine Vorrichtung gemäß dem ersten Aspekt kann beispielsweise eine Steuereinheit der Fachanlage sein.

Eine Vorrichtung gemäß dem zweiten Aspekt kann beispielsweise eine Schlosssteuereinheit der Fachanlage sein.

Gemäß einem dritten beispielhaften Aspekt wird eine Fachanlage offenbart, die eine Steuereinheit gemäß dem ersten Aspekt und eine Vielzahl von Schlosssteuereinheiten gemäß dem zweiten Aspekt umfasst

Gemäß einem vierten beispielhaften Aspekt wird die Verwendung einer Fachanlage gemäß dem dritten Aspekt zum Einstellen, insbesondere Zustellen, und/oder Abholen von Sendungen offenbart.

Diese vier beispielhaften Aspekte weisen u.a. die nachfolgend beschriebenen - teilweise beispielhaften - Eigenschaften auf.

Die Fachanlage umfasst eine Vielzahl von Fächern, eine Vielzahl von den Fächern jeweils zugeordneten Schlosssteuereinheiten und mindestens eine Steuereinheit

Die Fächer sind beispielsweise zur Aufnahme von Sendungen (z.B. Briefe, Pakete, Päckchen, Ersatzteile, Lebensmittel, etc.) eingerichtet Die Fächer sind jeweils verschließbar, beispielsweise mittels einer jeweiligen Tür oder Klappe. Beispielsweise handelt es sich bei den Fächern um im Wesentlichen quaderförmige Aufnahmebehältnisse, die an einer oder mehreren Seiten mit Türen oder Klappen versehen sind. Beispielsweise sind in der Fachanlage mehrere Fächer übereinander und/oder nebeneinander angeordnet Beispielsweise kann die Fachanlage aus einem oder mehreren nebeneinander angeordneten Modulen bestehen, wobei in jedem Modul eines oder mehrere Fächer übereinander angeordnet sind. Die jeweiligen Türen der Fächer sind dann beispielsweise seitlich angeschlagen und lassen sich beispielsweise nach vorne öffnen. Die Fächer der Fachanlage können alle die gleiche Größe aufweisen. Alternativ können zumindest einige Fächer der Fachanlage unterschiedliche Größen aufweisen. Die Größen können beispielsweise an übliche unterschiedliche Sendungsgrößen (z.B. Paketgrößen) angepasst sein. Die Fachanlage kann beispielsweise Fächer für Briefe (Brieffächer) und/oder Fächer für Pakete (Paketfächer) aufweisen. Die Brieffächer weisen beispielsweise innerhalb der Fachanlage jeweils die gleiche Größe auf, allerdings sind auch zwei oder mehr unterschiedliche Größen möglich. Die Paketfächer können in der Fachanlage mit lediglich einer gleichen oder mit unterschiedlichen Größen vertreten sein.

Jedes der Fächer ist mit einem jeweiligen Schloss versehen (das aber beispielsweise wiederum mehrere Komponenten, beispielsweise mehrere Schließeinheiten, umfassen kann). Das Schloss eines Fachs kann beispielsweise im oder am Fach angeordnet sein, beispielsweise an einer Tür oder Klappe des Fachs. Wenn das Schloss nicht an der Tür oder Klappe angeordnet ist (also beispielsweise an einer Seitenwand des Fachs), wirkt es beispielsweise mit der Tür oder Klappe zusammen, indem beispielweise ein Riegel in eine Öffnung der Tür oder Klappe eingeführt bzw. wieder herausgezogen wird. Alternativ kann beispielsweise ein an der Tür oder Klappe angebrachter Haken in eine Öffnung des Schlosses einführbar sein, um dort verriegelt/entriegelt zu werden. Wenn das Schloss beispielsweise an der Tür oder Klappe angebracht ist, kann es beispielsweise mit den Wänden des Fachs zusammenwirken, beispielsweise durch Einführen/Herausziehen von Riegeln in Öffnungen in den Wänden oder durch Aufnahme eines an den Wänden angebrachten Hakens in dem Schloss und entsprechende Verriegelung/Entriegelung.

Das Schloss eines jeweiligen Fachs ist durch eine jeweilige Schlosssteuereinheit steuerbar, insbesondere in elektronischer Form. Insbesondere kann zumindest der Prozess der Verriegelns und/oder Entriegelns des Schlosses durch die Schlosssteuereinheit gesteuert werden. Optional kann die Schlosssteuereinheit auch zur Aktivierung und/oder Deaktivierung der Verriegelungsfunktion (beispielsweise einer Fallenfunktion) des Schlosses eingerichtet sein. Die Schlosssteuereinheit kann beispielsweise einen Prozessor umfassen, beispielsweise einen Mikroprozessor. Die Schlosssteuereinheit ist beispielsweise in oder an dem Fach angeordnet, dessen Schloss sie steuert Die Schlosssteuereinheit ist beispielsweise nur zur Steuerung genau eines Schlosses eingerichtet Die Schlosssteuereinheit kann beispielsweise zusammen mit dem Schloss in einem Schlossmodul untergebracht sein. Durch die Zuordnung des Schlosses zum Fach und der Schlosssteuereinheit zum Schloss besteht auch eine direkte Zuordnung der Schlosssteuereinheit zum Fach. Die Schlosssteuereinheit kommuniziert mit einem oder mehreren Sensoren oder umfasst diese, um zu erfassen, ob das ihr zugeordnete Fach geöffnet oder geschlossen ist.

Ein Fach der Fachanlage kann entweder offen oder geschlossen sein. Im offenen Zustand des Fachs ist das Schloss des Fachs entriegelt. Die Tür oder Klappe des Fachs kann dann beispielsweise ohne Gewaltanwendung durch eine Person geöffnet werden oder steht offen. Im geschlossenen Zustand des Fachs ist das Schloss des Fachs hingegen verriegelt Die Tür oder Klappe des Fachs kann dann beispielsweise nicht mehr ohne Gewaltanwendung durch eine Person geöffnet werden, die nicht über den elektronischen Schlüssel zur Öffnung verfügt.

Die Fachanlage umfasst ferner eine Steuereinheit Die Steuereinheit kann beispielsweise zur zumindest teilweisen Steuerung einer Vielzahl von Schlosssteuereinheiten der Fachanlage ausgebildet sein. Beispielsweise kann nur eine Steuereinheit in der Fachanlage vorgesehen sein, es sind aber auch mehrere Steuereinheiten möglich, die dann beispielsweise jeweilige (beispielsweise disjunkte) Gruppen von Schlosssteuereinheiten zumindest teilweise steuern. Die Steuereinheit ist beispielsweise von den Schlosssteuereinheiten räumlich getrennt angeordnet Die Steuereinheit einerseits und die Schlosssteuereinheiten andererseits weisen beispielsweise jeweils eigene Prozessoren auf.

Die Schlosssteuereinheiten sind zur Kommunikation mit der Steuereinheit eingerichtet. Dabei kann es sich beispielsweise um eine bidirektionale Kommunikation handeln. Die Kommunikation erfolgt beispielsweise physikalisch über einen Bus, beispielsweise den Controller Area Network (CAN) - Bus, der gemäß ISO 11898 standardisiert ist.

Das Verfahren gemäß dem ersten Aspekt wird beispielsweise von einer Komponente der Fachanlage, insbesondere einer Steuereinheit der Fachanlage oder einer Komponente (beispielsweise einem Prozessor) der Steuereinheit, ausgeführt.

Dabei wird eine erste Kennung, die mit zumindest einer Person assoziiert ist, an der Steuereinheit erhalten. Die erste Kennung kann von einer Vorrichtung an die Steuereinheit (oder an eine Komponente der Steuereinheit) übertragen worden sein, beispielsweise durch drahtlose oder drahtgebundene Kommunikation. Beispielsweise ist die erste Kennung auf einem Near Field Communication (NFC)-Tag, eine Radio Frequency Identification (RFID)-Tag oder einem tragbaren elektronischen Kommunikationsgerät, z.B. einem Mobiltelefon, der mit der ersten Kennung assoziierten Person gespeichert, oder auf einem NFC-Tag, RFID-Tag oder einem tragbaren elektronischen Kommunikationsgerät, insbesondere einem Handscanner, eines Zustellers - ggf. neben einer Vielzahl weiterer erster Kennungen, die jeweils mit anderen Personen assoziiert sind - gespeichert. Die Übertragung der ersten Kennung vom NFC-Tag kann beispielsweise über die NFC-Technologie erfolgen, die Übertragung vom RFID-Tag über die RFID-Technologie. Die Übertragung der ersten Kennung vom Kommunikationsgerät kann beispielsweise über NFC-Technologie, die RFID-Technologie oder über Bluetooth erfolgen, um nur ein paar Beispiele zu nennen. RFID und NFC- sind beispielsweise gemäß den ISO-Standards 18000, 11784/11785 und dem ISO/IEC-Standard 14443-A und 15693 spezifiziert. Die Bluetooth-Spezifikationen sind unter www.bluetooth.org erhältlich. Alternativ kann die erste Kennung vom Zusteller oder von der mit der ersten Kennung assoziierten Person an die Steuereinheit (oder an eine Komponente der Steuereinheit) übermittelt oder in diese eingegeben worden sein, beispielsweise über eine Tastatur.

Die erste Kennung ist beispielsweise dadurch mit einer Person assoziiert, dass sie der Person zugeordnet ist. Die Person kann sich beispielsweise zur Nutzung der Fachanlage angemeldet haben und dabei die erste Kennung zugeordnet bekommen haben, beispielsweise von einem Verwaltungssystem, das eine oder mehrere Fachanlagen verwaltet. Die erste Kennung kann auch mit mehreren Personen assoziiert sein, beispielsweise mit allen Mitgliedern einer Familie, die sich zur Nutzung der Fachanlage angemeldet hat (und beispielsweise gemeinsam eines oder mehrere Fächer der Fachanlage nutzen wollen, insbesondere ein Brieffach und ein oder mehrere Paketfächer).

Nach dem Erhalten der ersten Kennung an der Steuereinheit wird eine Information erhalten (ebenfalls an der Steuereinheit), dass ein Fach geschlossen wurde oder dass zumindest eine Sendung von der oder für die Person in ein Fach der Vielzahl von Fächern eingelegt und das Fach geschlossen wurde. Diese Information spiegelt aus Sicht der Steuereinheit die Tatsache wider, dass eine Sendung - entweder von einem Zusteller, oder von der mit der ersten Kennung assoziierten Person - in das Fach eingelegt und das Fach geschlossen wurde. Die Information wird von zumindest einem Sensor (einem Sensor der Schlosssteuereinheit oder einem mit der Schlosssteuereinheit kommunikativ verbundenen Sensor) erfasst Dabei kann nur die Information erfasst worden sein, dass ein Fach geschlossen wurde, oder zusätzlich die Information erfasst worden sein, dass auch tatsächlich zumindest eine Sendung in das Fach eingelegt wurde. In ersterem Fall kann nichtsdestotrotz angenommen werden, dass ein Schließen des Fachs nur stattfindet, falls auch eine Sendung in das Fach eingelegt wurde.

Das Verfahren gemäß dem ersten Aspekt beinhaltet ferner das Bewirken des Speicherns der ersten Kennung in der dem Fach zugeordneten Schlosssteuereinheit durch die Steuereinheit Dies wird durch das Erhalten der Information, dass ein Fach der Vielzahl von Fächern geschlossen wurde oder dass zumindest eine Sendung von der oder für die Person in ein Fach der Vielzahl von Fächern eingelegt und das Fach geschlossen wurde, ausgelöst, oder ist als weiterer Faktor abhängig von dem Erhalten von Information, dass eine bestimmte Interaktion mit einer Benutzerschnittstelle der Steuereinheit stattgefunden hat, also beispielsweise eine bestimmte Taste der Fachanlage betätigt wurde. Das Speichern wird beispielsweise dadurch bewirkt, dass die Steuereinheit einen entsprechenden Befehl zur Ausführung durch die betreffende Schlosssteuereinheit absetzt und dann die Schlosssteuereinheit die Speicherung vornimmt

Durch das Speichern der ersten Kennung in der Schlosssteuereinheit des geschlossenen Fachs ordnet die Steuereinheit dieses Fach der mit der ersten Kennung assoziierten Person zu. Wenn nun beispielsweise diese Person ihre zugestellte Sendung aus der Fachanlage entnehmen will, kann sie ihrerseits die erste Kennung gegenüber der Steuereinheit präsentieren, die dann auf Grundlage der ersten Kennung entscheidet, welches Fach (od. welche Fächer) dieser Person zugeordnet ist und daher für diese Person geöffnet werden darf.

Das Speichern der ersten Kennung in Schlosssteuereinheiten von geschlossenen (und damit belegten) Fächern erlaubt auch eine dynamische Zuordnung von Fächern zu Personen. Den Personen muss lediglich eine jeweilige erste Kennung zugewiesen werden, wobei diese Zuweisung für einen langen Zeitraum, beispielsweise für mehrere Jahre oder bis zur Abmeldung der Person aus einem Verwaltungssystem der Fachanlage) gültig ist Die jeweilige erste Kennung einer Person wird dann verwendet, um im Bedarfsfall der Person ein Fach zuzuweisen, indem die jeweilige erste Kennung der Person in die Schlosssteuereinheit des zugewiesenen Fachs gespeichert wird. Nach Beendigung eines Einstell- oder Abholprozesses einer Sendung durch Entnahme der Sendung aus dem Fach wird die erste Kennung dann beispielsweise wieder aus der Schlosssteuereinheit gelöscht Auf diese Art ist es möglich, einer Menge von Personen dynamisch die Fächer der Fachanlage zuzuweisen. Da nicht alle Personen der Menge von Personen jeden Tag Sendungen über die Fachanlage zugestellt bekommen oder zur Abholung bereitstellen, lässt sich vorteilhafterweise auch realisieren, dass der Menge von Personen eine Anzahl von Fächern dynamisch zugewiesen wird, die kleiner ist als die Menge der Personen. Somit können die Abmessungen der Fachanlage in einem vertretbaren Rahmen gehalten werden.

Die in einer Schlosssteuereinheit gespeicherte erste Kennung kann darüber hinaus auch als Indikator dafür genutzt werden, ob das Fach belegt oder frei ist Fächer, deren Schlosssteuereinheiten eine erste Kennung eingespeichert haben, sind belegt, während Fächer, deren Schlosssteuereinheiten keine mit einer Person assoziierte Kennung eingespeichert haben, frei sind.

Gemäß dem ersten Aspekt wird die erste Kennung dezentral in den Schlosssteuereinheiten gespeichert, um einer mit der ersten Kennung assoziierten Person das der jeweiligen Schlosssteuereinheit zugeordnete Fach zuzuweisen, und nicht etwa zentral in der Steuereinheit der Fachanlage. Dadurch wird es u.a. möglich, dass die Anzahl der Fächer (und damit der Schlosssteuereinheiten) auch nachträglich (beispielsweise nach erstmaliger Inbetriebnahme) beliebig erweitert werden kann, ohne dass dazu Änderungen an der Steuereinheit (beispielsweise an der Dimension einer dort vorhandenen Zuordnungstabelle von Fächern zu Kennungen oder an der Zuordnungstabelle selbst, falls dort Identifikatoren der Schlosssteuereinheiten fest hinterlegt sein sollten) erforderlich wären. Die Steuereinheit kann stattdessen beispielsweise in Reaktion auf erhaltene Information, dass ein Fach der Vielzahl von Fächern geschlossen wurde oder dass zumindest eine Sendung von der oder für die Person in ein Fach der Vielzahl von Fächern eingelegt und das Fach geschlossen wurde, eine Schlosssteuereinheit dieses Fachs anweisen, die erste Kennung zu speichern. Die dazu erforderliche Kennung der Schlosssteuereinheit kann dabei beispielsweise zusammen mit der vorgenannten Information erhalten werden. Eine zentrale Speicherung der ersten Kennung in der Steuereinheit selbst ist dann offensichtlich nicht erforderlich.

In Ausführungsbeispielen der Erfindung kann es dennoch vorgesehen sein, eine oder mehrere erste Kennungen in einem Speicher der Steuereinheit der Fachanlage zu speichern, insbesondere um eine Zuordnung der ersten Kennungen zu jeweiligen Schlüsseln, die beispielsweise von der Steuereinheit zur Prüfung von Zugangsberechtigungsinformation benötigt werden, zu gewährleisten. Eine Zuordnung der ersten Kennungen zu jeweiligen Schlosssteuereinheiten und/oder Fächern findet dadurch aber beispielsweise nicht statt.

Das Verfahren gemäß dem zweiten Aspekt wird beispielsweise von einer Schlosssteuereinheit (oder einer Komponente davon) der Fachanlage durchgeführt und korrespondiert beispielsweise zu dem Verfahren gemäß dem ersten Aspekt, dass beispielsweise von der Steuereinheit (oder einer Komponente davon) ausgeführt wird.

Zunächst wird an einer Schlosssteuereinheit erfasst, dass das der Schlosssteuereinheit zugeordnete Fach geschlossen wurde oder dass zumindest eine Sendung von einer oder für eine Person in das Fach eingelegt und das Fach geschlossen wurde. Dies erfolgt über einen oder mehrere Sensoren, die entweder Teil der Schlosssteuereinheit oder kommunikativ damit verbunden sind.

Falls erfasst wurde, dass das Fach geschlossen wurde oder dass zumindest eine Sendung von einer oder für eine Person in das Fach eingelegt und das Fach geschlossen wurde, wird zumindest eine die Schlosssteuereinheit identifizierende Information an die Steuereinheit übermittelt Dies kann von der Steuereinheit dann beispielsweise zugleich als Indikator aufgefasst werden, dass das der Schlosssteuereinheit zugeordnete Fach geschlossen wurde oder dass zumindest eine Sendung von einer oder für eine Person in das der Schlosssteuereinheit zugeordnete Fach eingelegt und das Fach geschlossen wurde. Alternativ kann auch zusätzlich (explizit) eine Information, dass erfasst wurde, dass das Fach geschlossen wurde oder dass zumindest eine Sendung von einer oder für eine Person in das Fach eingelegt und das Fach geschlossen wurde, an die Steuereinheit übermittelt werden.

Daraufhin wird die erste Kennung von der Steuereinheit erhalten und in der Schlosssteuereinheit gespeichert

Auch das Verfahren gemäß dem zweiten Aspekt spiegelt einerseits die Möglichkeit der dynamischen Zuweisung von Fächern zu Personen über die ersten Kennungen und die dezentrale Informationshaltung in den Schlosssteuereinheiten wider.

Eine gemäß dem ersten und zweiten Aspekt wie zuvor beschriebene Fachanlage kann beispielsweise als Paketfachanlage oder kombinierte Brief- und Paketfachanlage in einem Mehrfamilienhaus ausgebildet sein. Beispielsweise ist dann den Personen eines jeweiligen Haushalts des Mehrfamilienhauses jeweils eine erste Kennung zugeordnet Die Fachanlage kann dann beispielsweise weniger Paketfächer als Haushalte aufweisen. Dennoch kann beispielsweise für jeden Haushalt des Mehrfamilienhauses ein Brieffach in der Fachanlage vorgesehen sein. Die Brieffächer können den jeweiligen ersten Kennungen (und damit den Haushalten) dabei beispielsweise statisch zugeordnet sein, während die Paketfächer den ersten Kennungen (und damit den Haushalten) dynamisch zugewiesen werden. Dies wird nachfolgend noch genauer erläutert.

Weitere Vorteile der beispielhaften Aspekte werden nachfolgend anhand beispielhafter Ausführungsformen beschrieben, deren Offenbarung allerdings für alle vier Aspekte gleichermaßen gelten soll.

In einer beispielhaften Ausführungsform aller Aspekte ist in einem Zeitpunkt, zu dem die Information erhalten wird, dass das Fach geschlossen wurde oder dass zumindest eine Sendung von einer oder für eine Person in das Fach eingelegt und das Fach geschlossen wurde, in der dem Fach zugeordneten Schlosssteuereinheit keine mit einer Person assoziierte Kennung gespeichert. Die Tatsache, dass keine mit einer Person assoziierte Kennung in der Schlosssteuereinheit gespeichert ist, zeigt beispielsweise an, dass das Fach noch nicht belegt war.

In einer beispielhaften Ausführungsform des ersten Aspekts umfasst das Verfahren ferner das Bewirken, dass vor dem Erhalten der Information, dass ein Fach der Vielzahl von Fächern geschlossen wurde oder dass zumindest eine Sendung von einer oder für eine Person in das Fach eingelegt und das Fach geschlossen wurde, zumindest dieses Fach geöffnet ist. Bevor ein Zusteller oder die mit der ersten Kennung assoziierte Person (also z.B. ein registrierter Nutzer der Fachanlage) eine Sendung in ein Fach der Fachanlage einstellen und das Fach schließen kann, muss zumindest dieses Fach geöffnet worden sein. Beispielsweise sind sämtliche Fächer der Fachanlage grundsätzlich geschlossen, und nur ein Fach oder einige Fächer (z.B. ein Fach von jeder vorhandenen Größe von Fächern) werden geöffnet, wenn ein Zusteller oder die mit der ersten Kennung assoziierte Person gegenüber der Steuereinheit zumindest implizit eine Absicht bekundet (z.B. durch Präsentieren der ersten Kennung gegenüber der Steuereinheit und/oder durch Interaktion mit einer Benutzerschnittstelle der Steuereinheit), zumindest eine Sendung einstellen zu wollen. Alternativ wäre es allerdings auch denkbar, dass unbelegte Fächer der Fachanlage grundsätzlich offen sind, dann könnte das Bewirken, dass zumindest ein Fach geöffnet ist, entfallen.

In einer beispielhaften Ausführungsform des ersten Aspekts umfasst das Verfahren ferner das Bewirken des Öffnens zumindest eines anderen Fachs, nachdem die Information, dass ein Fach der Vielzahl von Fächern geschlossen wurde oder dass zumindest eine Sendung von einer oder für eine Person in das Fach eingelegt und das Fach geschlossen wurde, erhalten wurde, und/oder nachdem das Speichern der ersten Kennung in der dem Fach zugeordneten Schlosssteuereinheit bewirkt wurde, wobei in der dem anderen Fach zugeordneten Schlosssteuereinheit keine mit einer Person assoziierte Kennung gespeichert ist Durch Öffnen des anderen Fachs wird beispielsweise sichergestellt, dass ohne wesentliche Verzögerungen weitere Sendungen in die Fachanlage eingestellt werden können.

In einer beispielhaften Ausführungsform des ersten Aspekts weisen die Fächer der Vielzahl von Fächern zumindest zwei unterschiedliche Größen auf, und das Verfahren umfasst ferner das Bewirken, dass vor dem Erhalten der Information, dass ein Fach der Vielzahl von Fächern geschlossen wurde oder dass zumindest eine Sendung von einer oder für eine Person in das Fach eingelegt und das Fach geschlossen wurde, zumindest ein Fach jeder Größe geöffnet ist. Da der Fachanlage grundsätzlich nicht bekannt ist, welche Größe Sendungen aufweisen, die in ein Fach der Fachanlage eingestellt werden sollen, ist es vorteilhaft, jeweils ein Fach von jeder Größe zu öffnen. Der Zusteller oder die mit der ersten Person assoziierte Person kann dann selbst auswählen, welches der Fächer von der Größe her am geeignetsten ist, eine oder mehrere Sendungen in dieses Fach einlegen (oder in mehrere Fächer) und das Fach (oder die Fächer) schließen.

Das Verfahren gemäß dem ersten Aspekt kann dabei beispielsweise ferner folgendes umfassen: Erhalten, auf eine Anfrage, jeweilige Information von einem oder mehreren Fächern jeder Größe jeweils zugeordneten Schlosssteuereinheiten, dass in diesen Schlosssteuereinheiten keine mit einer Person assoziierte Kennung gespeichert ist, Auswählen zumindest eines Faches jeder Größe von dem einen oder den mehreren Fächern jeder Größe, von deren Schlosssteuereinheiten die jeweilige Information erhalten wurde, und Bewirken, dass vor dem Erhalten der Information, dass ein Fach der Vielzahl von Fächern geschlossen wurde oder dass zumindest eine Sendung von einer oder für eine Person in das Fach eingelegt und das Fach geschlossen wurde, die ausgewählten Fächer geöffnet sind. Beispielsweise fragt also die Steuereinheit jeweilige Schlosssteuereinheiten von einem oder mehreren Fächern jeder Größe nach deren Belegungsstatus ab, wählt aus den unbelegten Fächern zumindest ein Fach jeder Größe aus und bewirkt das Öffnen dieser Fächer.

Es kann dann beispielsweise zusätzlich vorgesehen sein, das Öffnen zumindest eines anderen Fachs zu bewirken, das die gleiche Größe aufweist wie das Fach, zu dem die Information erhalten wurde, dass es geschlossen wurde oder dass zumindest eine Sendung von einer oder für eine Person in das Fach eingelegt und das Fach geschlossen wurde, wobei das Bewirken stattfindet nachdem die Information, dass ein Fach der Vielzahl von Fächern geschlossen wurde oder dass zumindest eine Sendung von einer oder für eine Person in das Fach eingelegt und das Fach geschlossen wurde, erhalten wurde, und/oder nachdem das Speichern der ersten Kennung in der dem Fach zugeordneten Schlosssteuereinheit bewirkt wurde, und wobei in der dem anderen Fach zugeordneten Schlosssteuereinheit keine mit einer Person assoziierte Kennung gespeichert ist Dadurch wird vorteilhaft sichergestellt, dass nach dem Einstellen einer Sendung in ein Fach unmittelbar ein Fach gleicher Größe zur Einstellung einer weiteren Sendung geöffnet ist

Während die zuvor beschriebenen Ausführungsformen schwerpunktmäßig das Einstellen von Sendungen in Fächer der Fachanlage - entweder durch den Zusteller oder durch die mit der ersten Kennung assoziierte Person - betrafen, wird nun eine Ausführungsform beschrieben, in der zusätzlich ein Abholprozess von bereits in der Fachanlage befindlichen Sendungen integriert ist

In einer beispielhaften Ausführungsform des ersten Aspekts umfasst das Verfahren ferner: Bewirken des Öffnens von einem oder mehreren Fächern, in deren jeweils zugeordneten Schlosssteuereinheiten eine Information, dass sie zumindest eine Sendung zur Abholung enthalten und/oder eine mit einer Person assoziierte Kennung gespeichert ist, und Bewirken, für die Schlosssteuereinheiten des einen oder der mehreren Fächer, des Löschens der Information, dass sie zumindest eine Sendung zur Abholung enthalten und/oder der mit einer Person assoziierten Kennung.

Beispielsweise kann, wenn eine Person eine Sendung zur Abholung durch den Zusteller in ein Fach der Fachanlage einstellt, eine Information, dass das Fach eine Sendung zu Abholung enthält, in die dem Fach zugeordnete Schlosssteuereinheit gespeichert werden, beispielsweise in Form eines gesetzten Bits oder Flags. Dies kann beispielsweise zusätzlich zum Einspeichern der mit der Person assoziierten ersten Kennung in die Schlosssteuereinheit erfolgen, da eine Unterscheidung notwendig sein kann, welche eingestellten Sendungen vom Zusteller abgeholt werden sollen und welche lediglich auf die Entnahme durch andere Personen (Empfänger der Sendungen) warten.

Wenn der Zusteller Sendungen aus der Fachanlage abholt, wird dann beispielsweise durch die Steuereinheit bewirkt, dass diejenigen Fächer, die die Information, dass sie zumindest eine Sendung zur Abholung enthalten, geöffnet werden, beispielsweise gleichzeitig oder sequentiell (beispielsweise wird jeweils ein neues Fach geöffnet, wenn der Zusteller ein zuvor geöffnetes Fach - nach Entnahme und Bearbeitung der abzuholenden Sendung - wieder geschlossen hat). Beispielsweise setzt die Steuereinheit dabei den Befehl ab, dass jede Schlosssteuereinheit, die die Information, dass ihr Fach zumindest eine Sendung zur Abholung enthält, gespeichert hat, ihr zugeordnetes Fach öffnen soll.

Des Weiteren wird bewirkt, dass die Information, dass ein einer Schlosssteuereinheit zugeordnetes Fach zumindest eine Sendung zur Abholung enthält, aus der Schlosssteuereinheit wieder gelöscht wird, ebenso wie die in der Schlosssteuereinheit gespeicherte erste Kennung, um zu verdeutlichen, dass das Fach nun wieder frei ist.

Das Bewirken des Öffnens und das Bewirken des Löschens erfolgt dabei nach dem Erhalten der ersten Kennung und vor dem Erhalten der Information, dass ein Fach der Vielzahl von Fächern geschlossen wurde oder dass zumindest eine Sendung von der oder für die Person in ein Fach der Vielzahl von Fächern eingelegt und das Fach geschlossen wurde. Dies ist vorteilhaft, da der Erhalt der ersten Kennung an der Steuereinheit als Authentisierung (und Autorisierung) des Zustellers gegenüber der Fachanlage aufgefasst werden kann und damit dem Prozess der Abholung von Sendungen aus der Fachanlage vorgeschaltet sein sollte. Beispielsweise umfasst das Erhalten der ersten Kennung (wie unten noch näher ausgeführt) die Prüfung der Authentizität und/oder Integrität einer Zugangsberechtigungsinformation, in der die erste Kennung enthalten ist, und beispielsweise wird das Verfahren gemäß dem ersten Aspekt abgebrochen, wenn die Prüfung der Authentizität und/oder Integrität der Zugangsberechtigungsinformation nicht erfolgreich verläuft Der Prozess der Abholung von Sendungen aus der Fachanlage findet auch vorteilhaft vor dem Prozess des Einstellens von Sendungen in die Fachanlage statt, um zu vermeiden, dass in der Fachanlage Kapazitätsengpässe auftreten. Die Fächer werden also soweit möglich erst durch Entnahme abzuholender Sendungen geleert und dann wieder mit einzustellenden Sendungen befüllt

In einer beispielhaften Ausführungsform des ersten Aspekts umfasst das Verfahren ferner das Bewirken des Speicherns einer Information, dass das Fach zumindest eine Sendung zur Abholung enthält, in der dem Fach zugeordneten Schlosssteuereinheit Dies bildet wie oben bereits erläutert die Grundlage dafür, dass die Fachanlage bzw. ein Zusteller Fächer mit abzuholenden Sendungen identifizieren kann.

Nachdem bereits beispielhafte Ausführungsformen das Einstellen von Sendungen durch den Zusteller oder durch mit der ersten Kennung assoziierte Personen in die Fachanlage und das Abholen von Sendungen aus der Fachanlage durch den Zusteller dargestellt haben, werden nun einige beispielhafte Ausführungsformen beschrieben, die das Entnehmen von durch den Zusteller eingestellten Sendungen durch den Empfänger der Sendung betreffen. Bei den Empfängern der Sendungen handelt es sich um Personen, die mit einer zweiten Kennung assoziiert sind. Der Begriff der "zweiten Kennung" wird hierbei dazu verwendet, um eine Unterscheidung zwischen den zwei an der Steuereinheit erhaltenen Kennungen (die "erste Kennung" beim Einstellen und die "zweite Kennung" beim Entnehmen) zu schaffen. Es versteht sich, dass die erste Kennung und die zweite Kennung in dem Fall, dass die beiden erhaltenen Kennungen die gleiche zumindest eine eingestellte/entnommene Sendung betreffen, identisch und mit der gleichen Person assoziiert sind.

In einer beispielhaften Ausführungsform des ersten Aspekts umfasst das Verfahren ferner das Erhalten einer zweiten Kennung, die mit zumindest einer Person assoziiert ist und entweder mit der ersten Kennung übereinstimmt oder von dieser verschieden ist, an der Steuereinheit, und das Bewirken des Öffnens eines oder mehrerer Fächer, in deren jeweils zugeordneten Schlosssteuereinheiten die zweite Kennung gespeichert ist, und des Löschens der zweiten Kennung aus einer oder mehreren der dem einen oder den mehreren Fächern zugeordneten Schlosssteuereinheiten.

Das Erhalten der zweiten Kennung kann dabei beispielsweise erfolgen wie es bereits hinsichtlich des Erhaltens der ersten Kennung oben beschrieben wurde. Insbesondere kann die zweite Kennung auf einem NFC-Tag, einem RFID-Tag oder auf einem tragbaren elektronischen Kommunikationsgerät, insbesondere einem Mobiltelefon, einer mit der zweiten Kennung assoziierten Person gespeichert sein, und dann beispielsweise über NFC, RFID oder Bluetooth an die Steuereinheit der Fachanlage übertragen werden.

Das Öffnen eines Fachs geschieht beispielsweise durch Absetzen eines Steuerbefehls durch die Steuereinheit, dass jede Schlosssteuereinheit, in der die zweite Kennung gespeichert ist, das ihr jeweils zugeordnete Schloss entriegeln soll. Bei diesem Entriegelungsprozess kann beispielsweise auch eine Tür des jeweiligen Fachs aufgestoßen werden, falls beim vorherigen Prozess des Schließens der Tür - beispielsweise durch Spannen einer Feder - eine Vorspannung zum Aufstoßen der Tür aufgebaut wurde.

Die jeweilige Schlosssteuereinheit kann dann beispielsweise automatisch auch das Löschen der zweiten Kennung vornehmen. Alternativ ist dazu ein expliziter Steuerbefehl von der Steuereinheit erforderlich, der beispielsweise von der Steuereinheit dann abgesetzt wird, wenn sie von der Schlosssteuereinheit eine Information erhält, dass das Fach geschlossen wurde.

Ob überhaupt eine Löschung der zweiten Kennung aus der jeweiligen Schlosssteuereinheit erfolgt, kann beispielsweise davon abhängen, um welche Art von Fach es sich handelt

In einer beispielhaften Ausführungsform des ersten Aspekts ist zumindest ein Fach des einen oder der mehreren Fächer, aus deren zugeordneten Schlosssteuereinheiten die zweite Kennung gelöscht wird, ein Paketfach.

Für Brieffächer kann die Löschung der zweiten Kennung nach erfolgter Öffnung des Fachs beispielsweise unterbleiben, beispielsweise weil den Brieffächern eine jeweilige zweite Kennung statisch zugewiesen ist Dies wird nachfolgend unter Bezugnahme auf eine dritte an der Steuereinheit erhaltene Kennung erläutert, die - ähnlich der zweiten Kennung - mit der ersten Kennung übereinstimmen kann und nur zu Unterscheidungszwecken als "dritte Kennung" bezeichnet wird.

In einer beispielhaften Ausführungsform des ersten Aspekts umfasst das Verfahren ferner: Erhalten einer dritten Kennung, die mit zumindest einer Person assoziiert ist und entweder mit der ersten Kennung übereinstimmt oder von dieser verschieden ist, an der Steuereinheit, wobei der dritten Kennung zumindest ein Fach für eine Vielzahl von Einstell- und/oder Abholprozessen nicht jeweils dynamisch, sondern statisch zugewiesen ist, indem die dritte Kennung für die Vielzahl von Einstell- und/oder Abholprozessen in der diesem Fach zugeordneten Schlosssteuereinheit gespeichert ist, und Bewirken des Öffnens dieses Fachs.

Dabei erfolgt beispielsweise kein Löschen der dritten Kennung aus der diesem Fach zugeordneten Schlosssteuereinheit und/oder es wird kein Löschen der dritten Kennung aus der diesem Fach zugeordneten Schlosssteuereinheit bewirkt

Bei dem Fach, das der dritten Kennung für eine Vielzahl von Einstell- und/oder Abholprozessen statisch zugewiesen ist, kann es sich beispielsweise um ein Brieffach handeln. Das Fach, in dessen zugeordneter Schlosssteuereinheit die erste Kennung gespeichert ist, kann hingegen beispielsweise ein Paketfach sein. Nichtsdestotrotz können die erste Kennung und die dritte Kennung gleich sein, es ist dann also die gleiche Kennung sowohl einem Paketfach (als "erste Kennung") als auch einem Brieffach ("als dritte Kennung") zugeordnet Auch die "zweite Kennung" kann mit diesen beiden Kennungen übereinstimmen, wobei die "zweite Kennung" dann ebenfalls dem Paketfach zugeordnet ist

In einer beispielhaften Ausführungsform aller Aspekte erfolgt die Kommunikation der Schlosssteuereinheiten mit der Steuereinheit über einen Bus, insbesondere einen CAN-Bus, beispielsweise gemäß ISO 11898. Bei der Kommunikation werden beispielsweise Daten- und/oder Remote-Frames eingesetzt, um Daten an andere Busteilnehmer zu übertragen bzw. Daten von diesen anzufordern.

Alternativ kann beispielsweise ein Bus eingesetzt werden (beispielsweise der unten genauer beschriebene Interlock-Data-Bus, ILDB), bei dem das Kommunikationsprotokoll mittels (oder basierend auf) UART gebildet wird (Universal Asynchronous Receiver Transmitter, also beispielsweise die Datenübertragung in 8-Bit-Paketen erfolgt (also Paketen mit acht Datenbits), die jeweils zusätzlich ein Startbit, ein Paritätsbit und ein Stoppbit umfassen) und/oder bei dem Kollisionserkennung (Collision Detektion) stattfindet und nicht lediglich Kollisionsvermeidung (Collision Avoidance) oder Kollisionsauflösung (Collision Resolution, wie beispielsweise beim CAN-Bus) stattfindet. Dieser Bus kann beispielsweise das Bustreiberkonzept des CAN-Busses verwenden und/oder einen CAN-Bus-Transceiver einsetzen. Die elektrischen Pegel auf dem Bus können dann beispielsweise den elektrischen Pegeln beim CAN-Bus entsprechen, während sich das Bit-Timing und/oder die Busarbitrierung gegenüber dem CAN-Bus unterscheiden, Beispielsweise wird nicht mit der herkömmlichen Bitfolge des CAN-Busses gearbeitet, sondern mit der Bitfolge des UART. Beispielsweise werden bei diesem Bus von einem oder mehreren (z.B. allen) Busteilnehmern (also den Schlosssteuereinheiten) eine oder mehrere Maßnahmen zur Busarbitrierung getroffen. Eine der Maßnahmen kann beispielsweise beinhalten, dass Busteilnehmer nach einer Erkennung, dass der Bus frei ist, eine Zeitdauer abwarten, bevor sie mit dem Senden von Daten auf dem Bus beginnen, wobei die Zeitdauer für jeden Busteilnehmer individuell bestimmt ist. Die jeweilige Zeitdauer kann beispielsweise aus einer Kennung des jeweiligen Busteilnehmers nach einer vorbestimmten Rechenvorschrift bestimmt sein (z.B. aus einer vorbestimmten Anzahl von Bits der Kennung). Eine der Maßnahmen kann beispielsweise beinhalten, dass jeder Busteilnehmer am Anfang seiner zu sendenden Daten ein Symbol (z.B. ein Byte) sendet, das für jeden Busteilnehmer individuell bestimmt ist und beispielsweise aus einer Kennung des jeweiligen Busteilnehmers nach einer vorbestimmten Vorschrift bestimmt ist (z.B. durch Bit-Shifts aus einer vorbestimmten Anzahl von Bits der Kennung). Das Symbol kann dazu dienen, Kollisionen auf dem Bus sehr frühzeitig zu erkennen. Das Symbol kann ferner so beschaffen sein, dass für andere Busteilnehmer Rückschlüsse auf die Kennung des sendenden Busteilnehmers möglich sind. Dies kann dazu dienen, eine Vorschrift zu befolgen, dass im Falle einer Kollision nur der Busteilnehmer mit der niedrigeren (od. höheren) Kennung weitersenden darf und Busteilnehmer mit höheren (od. niedrigeren) Kennungen ihren Sendeversuch abbrechen müssen. Eine der Maßnahmen kann vorsehen, dass jeder Busteilnehmer ferner in den zu sendenden Daten seine Kennung sendet, beispielsweise nach dem oben beschriebenen Symbol. Während das Symbol und/oder die Zeitdauer für zumindest zwei Busteilnehmer gleich sein kann, ist die jeweilige Kennung für alle Busteilnehmer unterschiedlich und kann so dazu dienen, eine Vorschrift zu befolgen, dass im Falle einer Kollision nur der Busteilnehmer mit der niedrigeren (od. höheren) Kennung weitersenden darf und Busteilnehmer mit höheren (od. niedrigeren) Kennungen ihren Sendeversuch abbrechen müssen.

Dabei können die über den Bus übertragenen Nachrichten (z.B. Befehle) beispielsweise jeweils von allen Busteilnehmern empfangen werden. Allerdings führen dann beispielsweise nur einer oder eine Untermenge der Busteilnehmer in Reaktion auf die Nachricht eine Aktion aus, beispielsweise dann, wenn eine Kennung dieses Busteilnehmers oder dieser Untermenge von Busteilnehmern in der Nachricht enthalten ist oder wenn der Busteilnehmer oder die Untermenge von Busteilnehmern eines oder mehrere Kriterien erfüllen, die in der Nachricht enthalten sind.

In einer beispielhaften Ausführungsform aller Aspekte können an den Bus weitere Schlosssteuereinheiten zur Kommunikation mit der Steuereinheit angeschlossen werden, ohne dass hinsichtlich der Kommunikation (und/oder hinsichtlich dieser weiteren Schlosssteuereinheiten generell) Änderungen an der Steuereinheit erforderlich sind. Dies kann beispielsweise darauf beruhen, dass bei der Kommunikation zwischen der Steuereinheit und den Schlosssteuereinheiten von der Steuereinheit nur Befehle abgesetzt werden, die ein Kriterium enthalten, das die Empfänger (Schlosssteuereinheiten) überprüfen und entsprechende Aktionen vornehmen müssen (also beispielsweise Prüfen, ob ein bestimmtes Bit oder Flag im Empfänger gesetzt ist, und in Abhängigkeit davon Vornehmen bestimmter Aktionen), ohne dass dabei beispielsweise eine individuelle Adressierung oder Identifizierung von Empfängern (Schlosssteuereinheiten) erforderlich ist (beispielsweise werden die Befehle von allen an den Bus angeschlossenen Empfängern (Schlosssteuereinheiten) empfangen, es finden abhängig vom Inhalt der Befehle aber nur an denjenigen ein oder mehreren Empfängern (Schlosssteuereinheiten), auf die sich der Inhalt bezieht, eine oder mehrere Aktionen statt), oder dass von der Steuereinheit zunächst (beispielsweise ebenfalls in einer von allen an den Bus angeschlossenen Empfängern (Schlosssteuereinheiten) empfangenen Nachricht) Eigenschaften der Empfänger (Schlosssteuereinheiten) abgefragt werden, dies zur Rückmeldung von allen oder einigen Empfängern (Schlosssteuereinheiten) an die Steuereinheit führt, wobei die Rückmeldung zumindest eine jeweilige Identifikation der Empfänger (Schlosssteuereinheiten) beinhaltet, und die Steuereinheit dann die zurückgemeldete Identifikation der Empfänger (Schlosssteuereinheiten) entweder zur (beispielsweise direkten) Adressierung weiterer Befehle an einige oder alle der Empfänger benutzt, die eine Rückmeldung versendet haben, oder diese Identifikation in weitere Befehle einbettet, die von allen an den Bus angeschlossenen Empfängern (Schlosssteuereinheiten) empfangen werden, damit anhand der eingebetteten Identifikation einer oder mehrere der Empfänger (Schlosssteuereinheiten) erkennen können, dass konkret sie angesprochen werden und sie daher eine oder mehrere Aktionen ausführen.

Alternativ kann die Kommunikation zwischen der Steuereinheit und den Schlosssteuereinheiten dergestalt erfolgen (beispielsweise drahtgebunden oder drahtlose), dass eine oder mehrere Schlosssteuereinheiten oder die Steuereinheit bei der Kommunikation konkret adressiert werden und dann nur diese konkreten Adressaten die jeweilige Nachricht empfangen und auswerten.

In einer beispielhaften Ausführungsform aller Aspekte ist die Fachanlage Teil eines Zustell- und/oder Abholsystems, das eine Vielzahl von mit jeweiligen Kennungen assoziierten Zustell- und/oder Abholbehältern und eine Zentraleinheit zur Vergabe von mit den jeweiligen Kennungen assoziierten Zugangsberechtigungen für die Zustell- und/oder Abholbehälter umfasst, wobei das Format der ersten Kennung mit dem Format der mit den Zustell -und/oder Abholbehältern assoziierten Kennungen übereinstimmt und durch das Speichern der ersten Kennung in einer Schlosssteuereinheit der Fachanlage das der Schlosssteuereinheit zugeordnete Fach hinsichtlich der Zugangsberechtigungen aus Sicht der Zentraleinheit wie ein einzelner Zustell - und/oder Abholbehälter behandelt werden kann.

Bei den Zustell- und/oder Abholbehältern kann es sich beispielsweise um Paketkästen handeln, die jeweils mit einer Schlosskennung (LockID) assoziiert sind. Weitere Beispiele für Zustell- und/oder Abholbehälter sind der Paketbutler, Gartenhäuschen, Garagen und Kofferräume und/oder Innenräume von Fahrzeugen, die jeweils mit elektronischen Schlössern versehen sind, so dass sie von einem entsprechend berechtigten Zusteller zumindest entriegelt werden können. Das Zustell- und/oder Abholsystem kann beispielsweise Zugangsberechtigungen vergeben, die als Zugangsberechtigungsparameter diese Schlosskennung enthalten und damit nur für den jeweiligen Zustell- und/oder Abholbehälter gültig ist. Über den personengebundenen Zustell- und/oder Abholbehälter ist die Schlosskennung hier auch mit einer jeweiligen Person assoziiert

Die Erzeugung und Verwendung der an die Schlosskennung gebundenen Zugangsberechtigungen kann auf die Fachanlage übertragen werden, indem die Schlosskennung nicht fest einer Schlosssteuereinheit (eines Paketfachs) zugewiesen wird (wie es bei den Zustell- und/der Abholbehältern der Fall wäre), sondern stattdessen direkt mit einer Person assoziiert wird. Dies ermöglicht es in effizienter Weise, der Person dynamisch ein Paketfach der Fachanlage zuzuweisen, ohne die Struktur und Erzeugung der Zugangsberechtigungen ändern zu müssen. Die Schlosskennung wird damit gewissermaßen für die Paketfächer der Fachanlage "virtualisiert". Aus Sicht der Zentraleinheit zur Vergabe der Zugangsberechtigungen gibt es dann einheitlich nur Schlosskennungen, an die die Zugangsberechtigungen geknüpft sind. Bei den Zustell- und/oder Abholbehältern sind diese Schlosskennungen real, sind also statisch einem Zustell- und/oder Abholbehälter bzw. dessen Schloss zugeordnet, während bei der Fachanlage die Schlosskennung hinsichtlich der Paketfächer virtuell ist und sich deren Zuordnung zu konkreten Fächern/Schlosssteuereinheiten dynamisch ändert Bei den Brieffächern der Fachanlage findet hingegen ähnlich wie bei den Zustell- und/der Abholbehältern eine statische Zuordnung von Schlosskennungen zu Brieffächern statt

In einer beispielhaften Ausführungsform aller Aspekte ist die erste Kennung in Zugangsberechtigungsinformation enthalten, die einen oder mehrere Zugangsberechtigungsparameter, darunter die erste Kennung, umfasst und deren Authentizität und/oder Integrität anhand eines in der Steuereinheit gespeicherten Schlüssels geprüft werden kann. Weitere Zugangsberechtigungsparameter definieren beispielsweise einen Zeitraum, während dem die Zugangsberechtigungsinformation zum Zugang berechtigt, oder definieren, welche Art von Zugang (z.B. nur Brieffach, nur Paketfach, oder Brief- und Paketfach) gestattet wird. Die Prüfung der Authentizität und/oder Integrität beruht beispielsweise auf einer in der Zugangsberechtigungsinformation enthaltenen Prüfinformation (beispielsweise einem Message Authentication Code, MAC), die durch Anwendung von kryptographischer Operationen zumindest über einen Teil (oder alle) der Zugangsberechtigungsparameter unter Verwendung eines ersten Schlüssels erzeugt wurde und anhand eines zweiten Schlüssels, der mit dem ersten Schlüssel ein symmetrisches oder asymmetrisches Schlüsselpaar bildet, gegengeprüft werden kann. Wenn die Prüfung positiv verläuft, ist die Integrität (Unversehrtheit) der erhaltenen Zugangsberechtigungsparameter und der erhaltenen Prüfinformation sichergestellt. Wenn zudem der erste Schlüssel nur an einer vertrauenswürdigen Quelle vorhanden ist, kann bei erfolgreich verlaufender Prüfung davon ausgegangen werden, dass die Zugangsberechtigungsparameter und die erhaltene Prüfinformation von der vertrauenswürdigen Quelle stammen.

Beispielsweise sind dann für eine Vielzahl unterschiedlicher an der Steuereinheit erhaltbarer Realisierungen der ersten Kennung, die jeweils mit unterschiedlichen Personen assoziiert sind, jeweils zugehörige unterschiedliche Schlüssel in der Steuereinheit gespeichert

Die Zugangsberechtigungsinformation mit der ersten Kennung wird beispielsweise von einem Zusteller, der zumindest eine Sendung für die mit der ersten Kennung assoziierte Person in die Fachanlage einstellen will, oder der mit der ersten Kennung assoziierten Person, die zumindest eine Sendung zur Abholung durch einen Zusteller in der Fachanlage einstellen will, oder von einem Gerät des Zustellers oder der Person, bereitgestellt.

Die Authentizität und/oder Integrität der Zugangsberechtigungsinformation wird beispielsweise geprüft, und bei fehlender Authentizität und/oder Integrität wird das Verfahren beispielsweise abgebrochen.

Die oben beschriebenen Ausführungsbeispiele und beispielhaften Ausgestaltungen aller Aspekte sollen auch in allen Kombinationen miteinander offenbart verstanden werden.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der vorliegenden Erfindung beispielhaft widerspiegeln. Insbesondere sollen Merkmale, die in den Figuren enthalten sind, keineswegs als notwendiger Bestandteil der vorliegenden Erfindung erachtet werden.

Es zeigen:
Fig. 1: eine schematische Frontansicht einer beispielhaften Ausführungsform einer Fachanlage gemäß der vorliegenden Erfindung,
Fig. 2: eine schematische Darstellung einer beispielshaften Ausführungsform einer Steuereinheit gemäß der vorliegenden Erfindung,
Fig. 3: eine schematische Darstellung einer beispielhaften Ausführungsform einer Schlosssteuereinheit;
Fig. 4: eine schematische Darstellung einer beispielhaften Speicherbelegung in einer Steuereinheit, einer Schlosssteuereinheit eines Brieffachs und einer Schlosssteuereinheit eines Paketfachs gemäß der vorliegenden Erfindung;
Fig.5 (aufgeteilt in die Fig. 5A und die sich unterhalb der Fig. 5A anschließende Fig. 5B): ein Flussdiagramm einer beispielhaften Ausführungsform eines Verfahrens gemäß der vorliegenden Erfindung, betreffend die Entnahme von einer oder mehreren abzuholenden Sendungen durch einen Zusteller und das Einstellen von Sendungen durch einen Zusteller;
Fig. 6: ein Flussdiagramm einer beispielhaften Ausführungsform eines Verfahrens gemäß der vorliegenden Erfindung, betreffend das Einstellen von einer oder mehreren durch einen Zusteller abzuholenden Sendungen durch eine Person;
Fig. 7: ein Flussdiagramm einer beispielhaften Ausführungsform eines Verfahrens gemäß der vorliegenden Erfindung, betreffend die Entnahme von einer oder mehreren durch einen Zusteller in ein Paketfach eingestellten Sendungen durch eine Person;
Fig. 8: ein Flussdiagramm einer beispielhaften Ausführungsform eines Verfahrens gemäß der vorliegenden Erfindung, betreffend die Entnahme von einer oder mehreren durch einen Zusteller in ein Brieffach zugestellten Sendungen durch eine Person;
Fig. 9: eine schematische Darstellung einer beispielhaften Ausführungsform eines Zustell- und/oder Abholsystems, in dem eine Fachanlage gemäß der Erfindung eingesetzt wird;
Fig. 10: eine schematische Darstellung von Buspegeln auf der physikalischen Schicht bei einem Ausführungsbeispiel eines erfindungsgemäßen Busses;
Fig. 11: eine schematische Darstellung eines auf der physikalischen Schicht übertragenen 8-Bit-Pakets bei einem Ausführungsbeispiel eines erfindungsgemäßen Busses;
Fig. 12: eine schematische Darstellung eines Nachrichtenobjekts, das auf der Datensicherungsschicht bei einem Ausführungsbeispiel eines erfindungsgemäßen Busses übertragen wird;
Fig. 13: eine schematische Darstellung einer Bus-Arbitrierung bei einem Ausführungsbeispiel eines erfindungsgemäßen Busses;
Fig. 14: eine schematische Darstellung einer auf der Kommunikationsschicht übertragenen Request-Nachricht bei einem Ausführungsbeispiel eines erfindungsgemäßen Busses;
Fig.15: eine schematische Darstellung einer auf der Kommunikationsschicht übertragenen Response-Nachricht bei einem Ausführungsbeispiel eines erfindungsgemäßen Busses; und
Fig. 16: eine schematische Darstellung einer auf der Kommunikationsschicht übertragenen Broadcast-Request-Nachricht bei einem Ausführungsbeispiel eines erfindungsgemäßen Busses.

### Detaillierte Beschreibung einiger beispielhafter Ausführungsformen der Erfindung

Ausführungsbeispiele der vorliegenden Erfindung betreffen Fachanlagen, insbesondere Paketfachanlagen oder kombinierte Brief- und Paketfachanlagen, insbesondere zum Einsatz in Mehrfamilienhäusern. Beispielsweise kann einem Nutzer der Fachanlage, bei dem es sich beispielsweise um einen Bewohner des Mehrfamilienhauses handeln kann, ein Paketfach zu Zwecken der Zustellung von Sendungen und/oder zum Abholenlassen von Sendungen (Retouren) dynamisch zugewiesen werden. Dem Nutzer kann allerdings zusätzlich ein Brieffach statisch zugewiesen sein. Bei den Sendungen kann es sich beispielsweise um Päckchen oder Pakete handeln, die bei einem Lieferanten bestellte oder an diesen retournierte Waren enthalten, oder um zwischen Privatpersonen versendete Gegenstände (z.B. Geschenke), oder um Lebensmittel- oder Essenlieferungen (z.B. von einem Discounter oder Pizza-Lieferdienst), um nur ein paar Beispiele zu nennen.

Die zum Öffnen des Paketfachs und des Brieffachs erforderliche Zugangsberechtigung kann dabei kombiniert auf einem elektronischen Gerät, beispielsweise einem Mobiltelefon oder einem NFC- oder RFID-Tag des Nutzers gespeichert und an die Fachanlage übertragbar sein. Entsprechend verfügt auch ein Zusteller über entsprechende Zugangsberechtigungsinformation, zumindest zum Öffnen des Paketfachs. Diese kann beispielsweise auf einem elektronischen Geräts des Zustellers, beispielsweise einem Handscanner, der zum Scannen von auf Sendungen angebrachten Codes (wie z.B. Barcodes oder QR-Codes) zum Erfassen von der mit der Sendung assoziierten Daten eingerichtet ist, gespeichert und von diesem drahtlose (z.B. mittels NFC oder RFID, oder optisch) an die Fachanlage übertragbar sein.

Eine derartige Fachanlage ermöglicht es beispielsweise, eine bestimmte Anzahl von Paketfächern einer unabhängigen Anzahl von Nutzern zuzuordnen. Hierzu ist es notwendig, die Paketfächer bzw. die Schlösser der Paketfächer, für einen bestimmten Zeitraum, einer bestimmten Person (dem Nutzer) zuzuordnen. Nach Entnahme der Sendung, sei es durch den Nutzer oder den Zusteller, steht das Paketfach wieder für andere Nutzer zur Verfügung.

Um diesen Betrieb zu ermöglichen, enthält die Fachanlage beispielsweise eine definierbare Anzahl an Fächern in verschiedenen Größen. Die Anzahl der Fächer ist beispielsweise unabhängig von der Anzahl der Nutzer wählbar und beispielsweise geringer als die Anzahl der Nutzer. Im Grundzustand besteht beispielsweise keine Beziehung zwischen den Fächern und den Nutzern. Erst wenn eine Sendung eingelagert wird, sei es durch den Zusteller oder durch den Nutzer, wird beispielsweise nur für die Dauer der Einlagerung eine Beziehung zwischen dem Fach und dem Nutzer hergestellt. Nach der Entnahme wird diese Beziehung beispielsweise wieder gelöscht.

Zur Erhöhung der Flexibilität stehen bei der Fachanlage beispielsweise vier unterschiedliche Fachgrößen für Sendungen sowie ein Brieffach zur Auswahl. Diese Fächer können beispielsweise in unterschiedlichen Varianten kombiniert werden. Ebenso kann eine Änderung der Fachkonfiguration nach der Auslieferung der Fachanlage möglich sein, um die Fachanlage auf das lokale Zustellverhalten der Nutzer anzupassen.

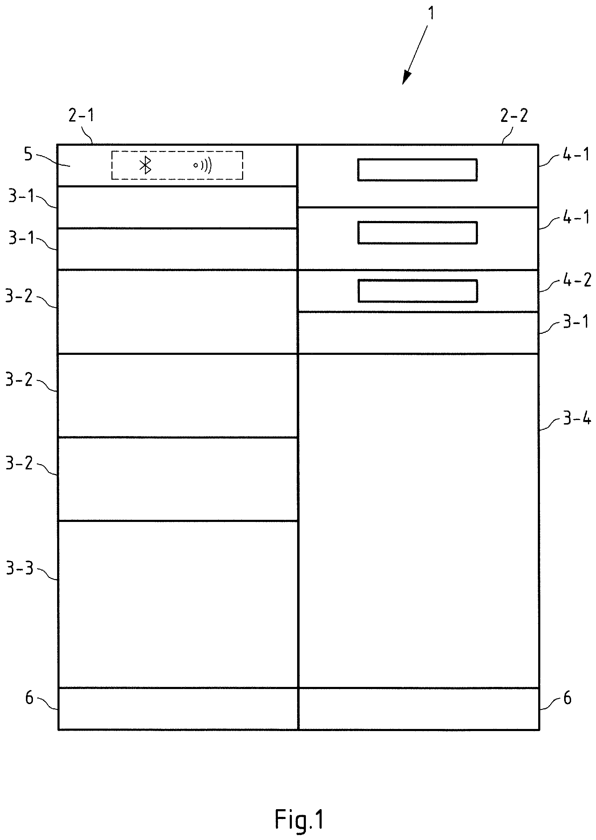

Fig. 1 zeigt eine Frontansicht einer beispielhaften Ausführungsform einer Fachanlage 1 gemäß der vorliegenden Erfindung. Die Fachanlage weist zwei Module 2-1 und 2-2 auf, die nebeneinander auf jeweiligen Sockeln 6 aufgestellt und miteinander verbunden sind. Das erste Modul 2-1 weist eine Vielzahl von Paketfächern unterschiedlicher Größe 3-1, 3-2 und 3-3 auf, die übereinander angeordnet sind. Jedes Paketfach 3-1, 3-2, 3-3 ist auf seiner Frontseite mit einer jeweiligen Tür versehen, die beispielsweise seitlich angeschlagen ist und nach vorne geöffnet werden kann, wenn das der jeweiligen Tür zugeordnete Schloss (nicht dargestellt) entriegelt ist. Alternativ können beispielsweise auch Klappen verwendet werden, die beispielsweise jeweils an der oberen oder unteren horizontalen Kante eines Fachs angeschlagen sind und dann bei entriegeltem Schloss aufgeschwenkt bzw. heruntergeklappt werden können. Jedes Paketfach 3-1, 3-2, 3-3 bildet damit einen verschließbaren Aufnahmeraum für Sendungen.

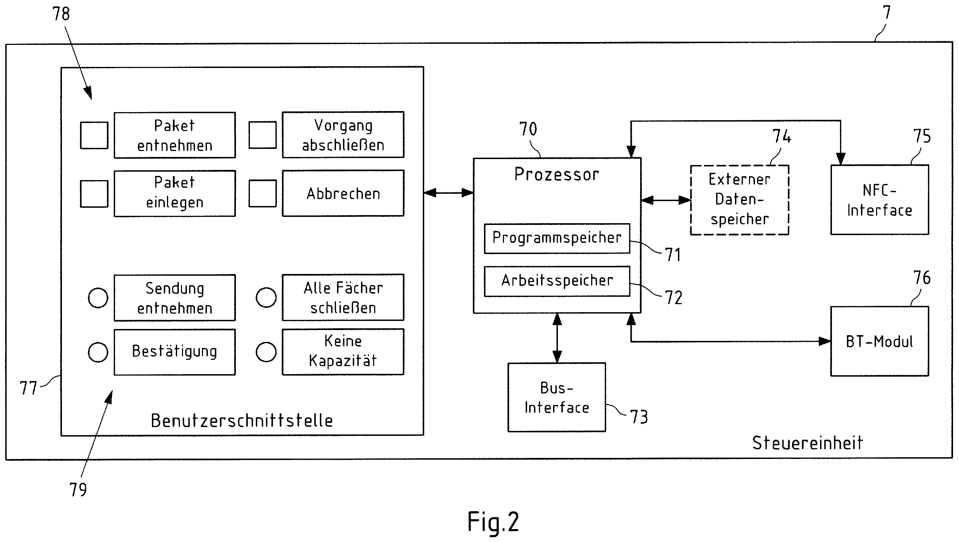

Das erste Modul 2-1 enthält ferner eine Einschubeinheit 5 auf, die eine Steuereinheit der Fachanlage 1 beinhaltet, wie nachfolgend anhand der Fig. 2 genauer erläutert wird.

Im Grunde stellt bereits das erste Modul 2-1 eine vollständige Fachanlage 1 dar. Diese kann allerdings flexibel durch weitere Module erweitert werden. In Fig. 1 ist dazu beispielhaft ein weiteres Modul 2-2 dargestellt, das sowohl Paketfächer 3-1, 3-4 als auch Brieffächer unterschiedlicher Größe 4-1, 4-2 umfasst. Es versteht sich, dass das Modul 2-2 auch nur Paketfächer oder nur Brieffächer aufweisen könnte, und dann auch das Modul 2-1 eines oder mehrere Brieffächer zusätzlich zu den Paketfächern aufweisen könnte. Die Brieffächer 4-1, 4-2 weisen beispielsweise wie die Paketfächer eine Tür oder Klappe auf, in die aber im Gegensatz zu den Paketfächern ein Briefeinwurfschlitz eingelassen ist, der mit einer beweglichen Abdeccklappe versehen sein kann. Damit wird es einem Zusteller ermöglicht, ohne Vorlage von Zugangsberechtigungsinformation für das Brieffach Briefe in das Brieffach einzuwerfen. Zur Entnahme verwendet der Nutzer (Empfänger) seine Zugangsberechtigungsinformation zur Öffnung der Tür oder Klappe.

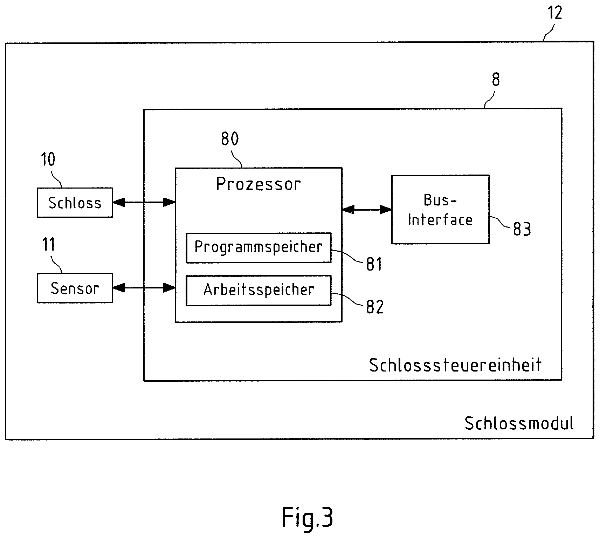

Die Paketfächer 3-1, 3-2, 3-3, 3-4 und Brieffächer 4-1, 4-2 der Fachanlage weisen wie erläutert jeweils ein Schloss auf, das von einer jeweiligen Schlosssteuereinheit (vgl. Fig. 3) gesteuert wird. Schloss und Schlosssteuereinheit können auch jeweils in einem Schlossmodul zusammengefasst sein. Die Schlosssteuereinheiten sind zur Kommunikation mit der Steuereinheit eingerichtet, was beispielsweise drahtlos oder drahtgebunden erfolgen kann. Beispielsweise erfolgt die Kommunikation über einen Bus, insbesondere einen CAN-Bus oder den unten beschriebenen ILDB, an den die Steuereinheit und die Schlosssteuereinheiten angeschlossen sind. Wenn die Schlosssteuereinheiten eines Moduls 2-1, 2-2 beispielsweise jeweils an der gleichen Seitenwand der Fächer des Moduls 2-1, 2-2 angeordnet sind (beispielsweise an der jeweils rechten Seitenwand eines Fachs (innerhalb oder außerhalb des Fachs), kann die Busleitung, an der alle Schlosssteuereinheiten angeschlossen sind, vorteilhaft auch an dieser Seite des Moduls 2-1, 2-2 verlaufen. Die jeweils an der Seite eines Moduls 2-1, 2-2 verlaufenden Busleitungen können dann an eine beispielsweise vertikal verlaufende Busleitung angeschlossen werden, die auch an die Steuereinheit angeschlossen ist.

Für die Fachanlage 1 wäre es grundsätzlich denkbar, passive Schlösser einzusetzen. Allerdings setzt ein derartiges passives Schlosskonzept eine hinsichtlich jeden Moduls 2-1, 2-2 zentrale Ansteuerung mittels eines Modulcontrollers voraus. Eine derartige Fachanlage erfordert allerdings einen erhöhten Verkabelungsaufwand und bringt eine gewisse Inflexibilität innerhalb eines Moduls 2-1, 2-2 mit sich. Auch erfordert die Datenanbindung der Modulcontroller mittels eines CAN-Netzwerks und der Anschluss der passiven Schlösser an die Modulcontroller einen erhöhten Kostenaufwand seitens der Elektronik und der Verkabelung. Ein weiterer nachteiliger Aspekt ist der erhöhte Stromverbrauch, da hier sehr viele Steuerungssysteme (Zentralsteuerung und Modulcontroller) permanent mit Strom versorgt werden müssen.

Bei der Fachanlage 1 gemäß beispielhaften Ausführungsformen der Erfindung können der Materialaufwand und der Stromverbrauch eine gewisse Rolle spielen. Zusätzlich kann es gewünscht sein, die Fachkonfiguration im Feld ohne Eingriff in das Steuerungssystem der Fachanlage 1 zu ermöglichen. Daher wird gemäß beispielhaften Ausführungsformen der Erfindung anstelle eines rein passiv ausgeführten Schlosses, das beispielsweise aus einem Elektromagneten und zwei Sensoren bestehen kann, eine aktive und busfähige Schlossvariante gewählt.

Fig. 2 ist eine schematische Darstellung einer beispielhaften Ausführungsform einer Steuereinheit 7 gemäß der vorliegenden Erfindung, wie sie beispielsweise in der Einschubeinheit 5 der Fachanlage 1 der Fig. 1 enthalten sein kann. In einer Fachanlage 1 können eine oder mehrere derartiger Steuereinheiten vorhanden sein, wobei die von den Steuereinheiten jeweils gesteuerten Schlosssteuereinheiten beispielsweise disjunkte Gruppen bilden.

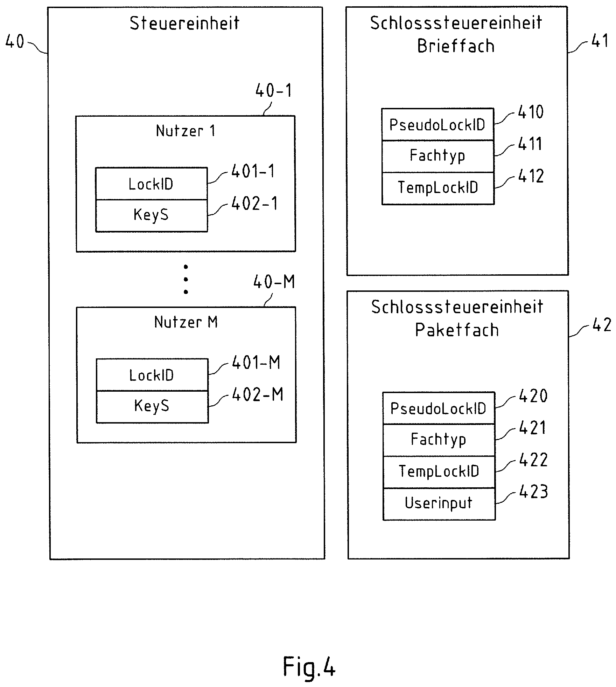

Die Steuereinheit 7 umfasst einen Prozessor 70, der beispielsweise ein im Programmspeicher 71 gespeichertes Programm ausführt und dabei Arbeitsspeicher 72 nutzt Programmspeicher 71 kann auch weitere Daten speichern, beispielsweise die in Fig. 4 dargestellten Daten. Alternativ sind dafür ein weiterer Speicher im Prozessor 70 und/oder ein optionaler externer Speicher 74 vorgesehen. Programmspeicher 71 kann beispielsweise ein persistenter Speicher, wie beispielsweise ein Read-Only-Memory (ROM)-Speicher sein. Er kann beispielsweise als Flash-Speicher ausgebildet sein. Der Programmspeicher 71 kann beispielsweise fest mit dem Prozessor 70 verbunden sein, kann aber alternativ auch lösbar mit dem Prozessor 70 verbunden sein, beispielsweise als Speicherkarte, Diskette oder optisches Datenträgermedium (z.B. eine CD oder DVD). Prozessor 70 kann beispielsweise als Mikroprozessor ausgebildet sein, oder als DSP (Digital Signal Processor) oder ASIC (Application Specific Integrated Circuit), um nur ein paar Beispiele zu nennen.

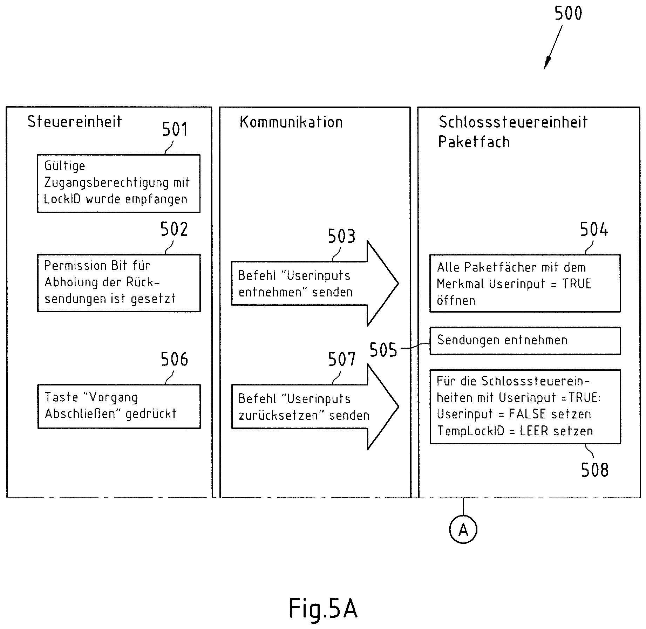

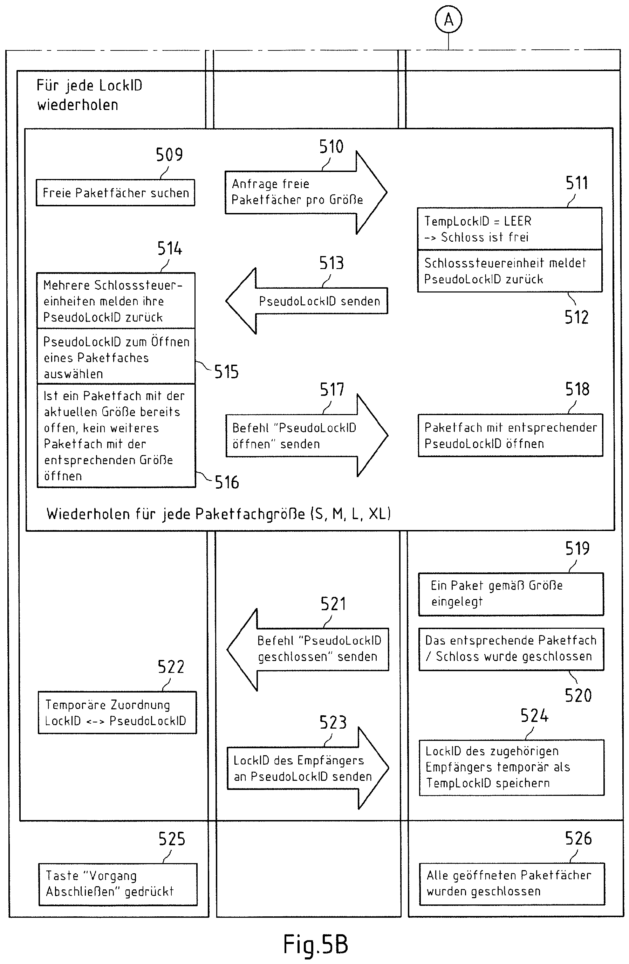

Prozessor 70 oder die Steuereinheit 7 stellen Beispiele einer Vorrichtung gemäß dem ersten Aspekt dar, sind also eingerichtet zur Ausführung und/oder Steuerung des Verfahrens gemäß dem ersten Aspekt (wie es beispielhaft anhand der Flussdiagramme 500, 600, 700 und 800 der Fig. 5-8 dargestellt werden wird), umfassen jeweilige Mittel zur Ausführung und/oder Steuerung der Schritte dieses Verfahrens, oder umfassen zumindest einen Prozessor 70 und zumindest einen Speicher 71, der Programmcode beinhaltet, wobei der Speicher 71 und der Programmcode eingerichtet sind, die Vorrichtung mit dem zumindest einen Prozessor 70 dazu zu veranlassen, zumindest das Verfahren gemäß dem ersten Aspekt auszuführen und/oder zu steuern, wobei das Verfahren folgendes umfasst: Erhalten einer ersten Kennung (nachfolgend als LockID bezeichnet), die mit zumindest einer Person (beispielsweise einem Nutzer der Fachanlage) assoziiert ist, an einer Steuereinheit einer Fachanlage, die neben der Steuereinheit eine Vielzahl von mit jeweiligen Schlössern versehenen Fächern und den Fächern jeweils zugeordneten Schlosssteuereinheiten aufweist, die zur Kommunikation mit der Steuereinheit eingerichtet sind, Erhalten von Information, dass ein Fach der Vielzahl von Fächern geschlossen wurde oder dass zumindest eine Sendung von der oder für die Person in ein Fach der Vielzahl von Fächern eingelegt und das Fach geschlossen wurde, und Bewirken des Speicherns der ersten Kennung in der dem Fach zugeordneten Schlosssteuereinheit

Ebenso stellt der Programmspeicher 72 ein computerlesbares Speichermedium dar, auf dem ein Computerprogramm gemäß dem ersten Aspekt gespeichert ist

Die Steuereinheit 7 umfasst ferner ein NFC-Interface 75 und ein Bluetooth-Modul 76. Das Bluetooth-Modul 76 dient beispielsweise dazu, von einem elektronischen Gerät eines Zustellers oder Nutzers der Fachanlage Zugangsberechtigungsinformation über das Bluetooth-Protokoll zu erhalten. Das NFC-Interface 75 umfasst beispielsweise ein NFC-Lesegerät, um Zugangsberechtigungsinformationen aus NFC-Token (also tragbaren, kleinformatigen Gegenständen mit integrierten NFC-Chips, wie beispielsweise Smartcards oder Schlüsselanhänger) auszulesen. NFC-Interface 75 und Bluetooth-Modul 76 werden zu diesem Zweck vom Prozessor 70 gesteuert und kommunizieren mit diesem.

Prozessor 70 steuert ferner ein Bus-Interface 73 (z.B. einen CAN-Bus-Transceiver), über das Prozessor 70 über einen Bus kommunizieren kann. Das Bus-Interface 73 ist mit dem Prozessor 70 beispielsweise über eine Universal Asynchronous Receiver Transmitter (UART) Schnittstelle verbunden. Die physikalische Anbindung des Bus-Interface 73 an den Bus erfolgt beispielsweise über einen (z.B. mehr-poligen) Stecker.

Bei dem Bus kann es sich beispielsweise um einen seriellen Bus, beispielsweise einen CAN-Bus oder einen ILDB handeln. An den Bus sind ebenfalls die von der Steuereinheit 7 zu steuernden Schlosssteuereinheiten angeschlossen. In Ausführungsformen der Erfindung ermöglicht es die Verwendung des Busses und die oben bereits erläuterte spezielle Kommunikationstechnik der Steuereinheit, dass die Fachanlage 1 um weitere Module 2-1, 2-2 mit Paket- und/oder Brieffächern erweitert werden kann, ohne dass dazu Änderungen an der Steuereinheit erforderlich wären. Als Alternative zum CAN-Bus kann beispielsweise der weiter unten noch genauer beschriebene Interlock-Data-Bus (ILDB) verwendet werden.

Der Prozessor 70 steuert ferner eine Benutzerschnittstelle 79 der Steuereinheit 7, die ein Tastenfeld 78 mit durch den Zusteller und/oder Nutzer betätigbaren Tasten und ein Anzeigefeld 77 zur Anzeige von Informationen an den Zusteller und/oder Nutzer aufweist. Im Tastenfeld 78 sind beispielhaft die Tasten "Paket entnehmen", "Paket einlegen", "Vorgang abschließen" und "Abbrechen" vorhanden. Die Tasten sind hier beispielhaft als Drucktasten ausgeführt. Im Anzeigefeld 77 sind Anzeigeelemente "Sendung entnehmen", "Bestätigung", "Alle Fächer schließen" und "Keine Kapazität" vorhanden. Die Anzeigeelemente sind hier beispielhaft als Leuchtanzeigeelemente, beispielsweise als LEDs, ausgeführt. Die Benutzerschnittstelle 79 kann alternativ auch als berührungsempfindliche Benutzerschnittstelle, also beispielsweise als Touch-Screen, ausgebildet sein, wobei die Tasten dann lediglich graphisch dargestellt und über den Touch-Screen betätigt werden und auch die Anzeigeelemente lediglich graphisch dargestellt und nicht als jeweils separate Anzeigeelemente vorhanden sind.

Die Steuereinheit 7 kann an eine Energieversorgung angeschlossen sein, beispielsweise an das herkömmliche Stromnetz. Die Steuereinheit 7 kann dann beispielsweise über eine zusammen mit der Busleitung verlegte oder in diese integrierte Verdrahtung auch die Schlosssteuereinheiten mit Energie versorgen.

Fig. 3 ist eine schematische Darstellung einer beispielhaften Ausführungsform einer Schlosssteuereinheit 8. Eine derartige Schlosssteuereinheit 8 ist beispielsweise jedem Schloss 10 eines Paketfachs oder Brieffachs der Fachanlage 1 (Fig. 1) zugeordnet (beispielsweise auch räumlich). Ein derartiges Schloss 10 ist in Fig. 3 schematisch dargestellt. Es kann sich dabei beispielsweise um ein Schloss handeln, das einen Riegel ein- oder ausfährt oder das einen (beispielsweise an einer Tür oder Klappe befestigten) Haken aufnimmt und diesen verriegelt oder entriegelt. Ein Beispiel für ein Schloss der letztgenannten Art ist in der deutschen Patentanmeldung DE 10 2013 111 226 A1 der Anmelderin beschrieben.

Bei dem Schloss 10 kann es sich beispielsweise um ein elektrisch betätigbares Schloss handeln. Beispielsweise wird das Bewegen des Riegels oder eines mit einem Haken zusammenwirkenden Verriegelungselements durch einen Elektromagneten oder Elektromotor bewerkstelligt Die Ansteuerung des Elektromagneten oder Elektromotors des Schlosses 10 erfolgt dann durch die Schlosssteuereinheit 8, beispielsweise über einen I/O-Port des Prozessors 80 der Schlosssteuereinheit 8, der über einen Treiber eine Schnittstelle zum Schloss 10 steuert Die Schlosssteuereinheit 8 ist beispielsweise zumindest eingerichtet, eine Entriegelung des verriegelten Schlosses 10 zu bewirken. Zusätzlich kann beispielsweise auch eine Verriegelung des entriegelten Schlosses 10 bewirkt werden. Letzteres kann allerdings dann, wenn das Schloss 10 mit einer Fallenfunktion ausgebildet ist und beispielsweise durch das Schließen der Tür des Fachs automatisch eine Verriegelung stattfindet, entbehrlich sein. Optional kann die Verriegelungsfunktionalität des Schlosses 10 auch deaktivierbar und/oder aktivierbar sein, beispielsweise durch entsprechende Steuerbefehle der Schlosssteuereinheit 8. Beispielsweise kann eine Fallenfunktion des Schlosses 10 eine solche Verriegelungsfunktionalität darstellen. Die Deaktivierung der Verriegelungsfunktion kann beispielsweise dadurch bewerkstelligt werden, dass der vom Schloss im Zustand der Entriegelung eingenommene Zustand beibehalten wird, beispielsweise durch Beibehalten eines Verriegelungselements in einer Freigabestellung. Alternativ kann die Deaktivierung der Verriegelungsfunktion dadurch erzielt werden, dass die Schlosssteuereinheit 8 (oder die Steuereinheit 7) in einem Zeitraum, in dem die Verriegelungsfunktion deaktiviert sein soll, das Schloss 10 bei erkannter erfolgter Verriegelung (z.B. durch Auslösen einer Fallenfunktion) durch Absetzen eine Steuerbefehls jeweils wieder entriegelt, beispielsweise unmittelbar bei erkannter erfolgter Verriegelung. Die Verriegelung ist also zumindest kurzfristig mechanisch möglich, wird aber durch den Steuerbefehl jedes Mal wieder aufgehoben, so dass effektiv die Verriegelungsfunktion elektronisch deaktiviert ist.

Eine beispielhafte Ausführungsform eines Schlosses 10 umfasst einem elektromechanischen Hubmagneten, der über einen Stößel einen Entriegelungshebel betätigt. Der Entriegelungshebel ist gefedert ausgeführt, so dass bei Schließung der Tür oder Klappe der Entriegelungshebel automatisch einrastet und somit die Verriegelung einen rein mechanischen Ablauf erfordert. Für die Erkennung, ob das Schloss geschlossen und verriegelt ist, verfügt das Schloss beispielsweise über zwei Sensoren. Einer der beiden Sensoren meldet die Position des Entriegelungshebels. Der zweite Sensor erkennt die Position eines gefederten Auswerfers, welcher bei geschlossener Tür nach innen gedrückt wird. Erst wenn beide Sensoren geschlossen und verriegelt melden, gilt das Fach beispielsweise als geschlossen. Die Sensorik ist beispielsweise aus Gründen der Zuverlässigkeit, Langlebigkeit und Resistenz gegen Umwelteinflüsse (Staub, Temperatur, Sonnenlicht) auf magnetischer Basis erstellt. Hierzu befinden sich auf den bewegten Teilen (Auswerfer und Entriegelungshebel) beispielsweise zwei Permanentmagnete. Das Magnetfeld dieser beiden Permanentmagnete wird beispielsweise über zwei HAL-Sensoren, die auf einer Leiterplatte bestückt sind, ausgewertet.

Um bei Ausführungsformen der erfindungsgemäßen Fachanlage die Notwendigkeit eines Modulcontrollers in jedem Modul 2-1, 2-2 zu eliminieren und einen einfacheren Aufbau der Schrankverkabelung zu ermöglichen, ist das Schlossmodul 12 jedes Fachs mittels der Schlosssteuereinheit 8 mit einer gewissen Intelligenz ausgestattet. Diese Intelligenz soll es ermöglichen, alle Schlossmodule 12 der Fachanlage 1 an einen seriellen Datenbus anzuschließen und somit den Verdrahtungsaufwand flexibler und kostengünstiger ausführen zu können. Die Anbindung aller Schlossmodule 12 an einem gemeinsamen Datenbus setzt beispielsweise voraus, dass jedes Schlossmodul 12 über eine eigene Adresse bzw. ID verfügt. Über diese ID kann der Slave (Schlossmodul 10 bzw. Schlosssteuereinheit 8) vom Master (der Steuereinheit 7 bzw. des Prozessors 70) selektiert angesprochen werden. Hierzu umfasst die Elektronik der Schlossmodule 12 den nachfolgend noch genauer beschriebenen Prozessor 80, beispielsweise einen Mikrocontroller, beispielsweise mit Oszillator. Dieser Prozessor 80 beinhaltet das Datenkommunikationsprotokoll für die Busanbindung als auch die Schlosslogik für die Steuerung und Überwachung des Aktors (im Schloss 10) und der Sensoren 11. Als Stromversorgung dient beispielsweise ein 24V-Gleichstromnetz, das beispielsweise zusammen mit den Datenleitungen in einem Bussystem geführt wird. Über dieses Versorgungsnetz werden beispielsweise alle Schlossmodule 12 mit Gleichstrom versorgt Dieses Versorgungsnetz kann beispielsweise zentral durch den Master abgeschaltet werden, um den Stromverbrauch der Fachanlage 1 auf ein Minimum zu reduzieren. Diese Maßnahme ermöglicht es, die Fachanlage 1 über ein Batteriesystem zu versorgen und somit einen stromnetzunabhängigen Aufbau der Anlage zu ermöglichen.

Die Schlosssteuereinheit 8 umfasst einen Prozessor 80, der beispielsweise ein im Programmspeicher 81 gespeichertes Programm ausführt und dabei Arbeitsspeicher 82 nutzt. Programmspeicher 81 kann auch weitere Daten speichern, beispielsweise die in Fig. 4 dargestellten Daten. Alternativ sind dafür ein weiterer Speicher im Prozessor 80 und/oder ein optionaler externer Speicher vorgesehen. Beispielsweise können die in Fig. 4 dargestellten Daten in einem nichtflüchtigen Datenspeicher, beispielsweise einem emulierten EEPROM-Speicher des Prozessors 80 (insbesondere, wenn dieser als Mikrocontroller ausgebildet ist) abgelegt sein. Programmspeicher 81 kann beispielsweise ein persistenter Speicher, wie beispielsweise ein Read-Only-Memory (ROM)-Speicher sein. Er kann beispielsweise als Flash-Speicher ausgebildet sein. Der Programmspeicher 81 kann beispielsweise fest mit dem Prozessor 80 verbunden sein, kann aber alternativ auch lösbar mit dem Prozessor 80 verbunden sein, beispielsweise als Speicherkarte, Diskette oder optisches Datenträgermedium (z.B. eine CD oder DVD). Prozessor 80 kann beispielsweise als Mikroprozessor ausgebildet sein, oder als DSP (Digital Signal Processor) oder ASIC (Application Specific Integrated Circuit), um nur ein paar Beispiele zu nennen. Arbeitsspeicher 82 kann beispielsweise als flüchtiger Speicher ausgebildet sein, beispielsweise als RAM-Speicher.

Prozessor 80 oder die Schlosssteuereinheit 8 stellen Beispiele einer Vorrichtung gemäß dem zweiten Aspekt dar, sind also eingerichtet zur Ausführung und/oder Steuerung des Verfahrens gemäß dem zweiten Aspekt (wie es beispielhaft anhand der Flussdiagramme 500, 600, 700 und 800 der Fig. 5-8 dargestellt werden wird), umfassen jeweilige Mittel zur Ausführung und/oder Steuerung der Schritte dieses Verfahrens, oder umfassen zumindest einen Prozessor 80 und zumindest einen Speicher 81, der Programmcode beinhaltet, wobei der Speicher 81 und der Programmcode eingerichtet sind, die Vorrichtung mit dem zumindest einen Prozessor 80 dazu zu veranlassen, zumindest das Verfahren gemäß dem ersten Aspekt auszuführen und/oder zu steuern, wobei das Verfahren folgendes umfasst: Erfassen, an einer Schlosssteuereinheit, die einem Fach einer Fachanlage zugeordnet ist, die eine Steuereinheit und eine Vielzahl von mit jeweiligen Schlössern versehenen Fächern und den Fächern zugeordnete Schlosssteuereinheiten, die zur Kommunikation mit der Steuereinheit eingerichtet sind, umfasst, dass das Fach geschlossen wurde oder dass zumindest eine Sendung von einer oder für eine Person (beispielsweise einem Nutzer der Fachanlage) in das Fach eingelegt und das Fach geschlossen wurde, Übermitteln zumindest einer die Schlosssteuereinheit identifizierenden Information (nachfolgend als PseudoLockID bezeichnet) an die Steuereinheit, falls erfasst wurde, dass das Fach geschlossen wurde oder dass zumindest eine Sendung von einer oder für eine Person in das Fach eingelegt und das Fach geschlossen wurde, Erhalten einer ersten Kennung (nachfolgend als LockID bezeichnet), die zumindest mit einer Person assoziiert ist, von der Steuereinheit, und Speichern der ersten Kennung in der Schlosssteuereinheit

Ebenso stellt der Programmspeicher 81 ein computerlesbares Speichermedium dar, auf dem ein Computerprogramm gemäß dem zweiten Aspekt gespeichert ist.

Die Schlosssteuereinheit 8 umfasst ferner ein Bus-Interface 83 (z.B. einen CAN-Bus-Transceiver), über das Prozessor 80 über einen Bus kommunizieren kann. Das Bus-Interface 83 ist mit dem Prozessor 80 beispielsweise über eine Universal Asynchronous Receiver Transmitter (UART) Schnittstelle verbunden. Die physikalische Anbindung des Bus-Interface 83 an den Bus erfolgt beispielsweise über einen (z.B. mehrpoligen) Stecker. Eine Energieversorgung der Schlosssteuereinheit 8 kann beispielsweise über den Bus erfolgen (beispielsweise eine 24V-Versorgung im Falle eines CAN-Busses oder ILDB). Dazu kann beispielsweise in der Schlosssteuereinheit 8 ein DC/DC-Wandler vorgesehen sein (nicht dargestellt), der den Prozessor 8, das Bus-Interface 83 und die Sensoren 11 mit Strom versorgt.

Prozessor 80 kommuniziert (beispielsweise über einen I/O-Port] ferner mit einem oder mehreren Sensoren 11, die entweder separat von der Schlosssteuereinheit 8 angeordnet sind (wie es in Fig. 3 dargestellt ist), oder zumindest teilweise Teil der Schlosssteuereinheit 8 sind. Der Sensor 11 kann beispielsweise erfassen, ob die Tür des Fachs, dem die Schlosssteuereinheit zugeordnet ist, offen oder geschlossen ist. Dies kann beispielsweise durch einen Taster, der mit der Tür zusammenwirkt, bewerkstelligt werden, oder durch einen in das Schloss 10 integrierten Sensor 11 erfasst werden. Wenn das Schloss 10 beispielsweise zur Aufnahme eines an der Tür befestigten oder daran ausgebildeten Hakens eingerichtet ist, kann ein im Schloss befindlicher Sensor 11 (z.B. ein Taster) erfassen, ob der Haken in das Schloss eingeführt ist. Wenn das Einführen des Hakens bis zu einem vordefinierten Grad auch automatisch zur Verriegelung des Hakens im Schloss führt (im Sinne einer Fallenfunktion), können durch den Sensor 11 zugleich das Schließen der Tür als auch das Verriegeln der Tür erfasst werden. Weitere optionale Sensoren 11 können der Erfassung dienen, ob eine Sendung im Fach befindlich ist oder nicht. Dies kann beispielsweise optisch erfolgen (z.B. durch eine oder mehrere Lichtschranken), oder anhand von Wiegesensoren, um nur ein paar Beispiele zu nennen.

Die Schlosssteuereinheit 8, das Schloss 10 und der eine oder die mehreren Sensoren 11 können zusammen in einem Schlossmodul 12 untergebracht sein, insbesondere in einem gemeinsamen Gehäuse. Jedes Schlossmodul 12 ist dann beispielsweise in einem jeweiligen eigenen Gehäuse untergebracht. Dieses Schlossmodul 12 kann beispielsweise jeweils seitlich an einem jeweiligen Fach angeordnet sein, beispielsweise innerhalb oder außerhalb des Fachs, um, wie oben bereits beschrieben, eine einfachen Anschluss der Schlossmodule 12 an den gemeinsamen Bus zu ermöglichen.

Die Schlosssteuereinheit 8 kann beispielsweise einem Paketfach oder einem Brieffach zugeordnet sein. Der einzige Unterschied kann dann beispielsweise darin liegen, dass bei Zuordnung zu einem Brieffach andere Daten in einen Speicher der Schlosssteuereinheit 8 eingespeichert werden als im Falle der Zuordnung zu einem Paketfach, wie nachfolgend unter Bezugnahme auf Fig. 4 noch genauer ausgeführt wird.

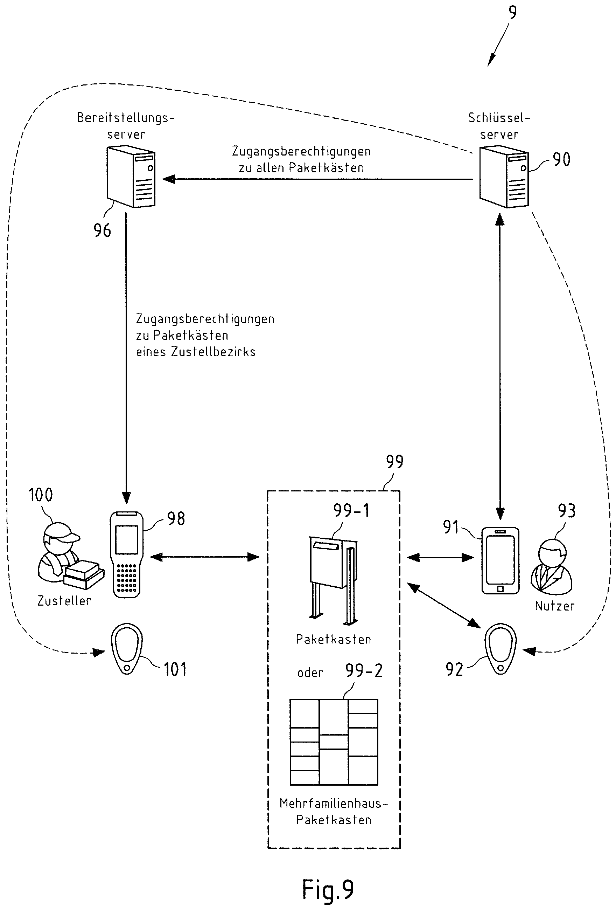

Wie bereits erläutert wurde, werden in Ausführungsbeispielen der vorliegenden Erfindung den Nutzern der Fachanlage 1 jeweilige Kennungen, die im folgenden als LockIDs bezeichnet werden, zugeordnet. Der Begriff LockID soll aber nicht den Eindruck erwecken, dass eine LockID ein Schloss 10 oder eine Schlosssteuereinheit 8 eines Fachs identifizieren würde. Der Hintergrund dieser Bezeichnung wird später bei der Diskussion der Fig. 9 erläutert.

Eine nachfolgend verwendete Kennung, die tatsächlich eine jeweilige Schlosssteuereinheit 8 identifiziert, ist die PseudoLockID. Diese dient der Identifizierung von Schlosssteuereinheiten 8 durch die Steuereinheit 7, insbesondere wenn die Steuereinheit 7 eine Schlosssteuereinheit 8 konkret adressieren möchte.

Fig. 4 ist eine schematische Darstellung einer beispielhaften Speicherbelegung in einer Steuereinheit 40, einer Schlosssteuereinheit 41 eines Brieffachs und einer Schlosssteuereinheit 42 eines Paketfachs gemäß der vorliegenden Erfindung. Die Speicherbelegung 40 der Steuereinheit entspricht dabei beispielsweise der Speicherbelegung in der Steuereinheit 7 der Fig. 2, so dass die Speicherbelegung dann beispielsweise zumindest teilweise die Speicherbelegung des Programmspeichers 71, eines weiteren Speichers des Prozessors 70 oder des externen Datenspeichers 74 beschreibt. Die Speicherbelegungen 41 und 42 der Schlosssteuereinheiten entsprechen dabei beispielsweise jeweils den Speicherbelegungen der Schlosssteuereinheit 8 der Fig. 3, so dass die Speicherbelegung dann beispielsweise zumindest teilweise die Speicherbelegung des Programmspeichers 81, eines weiteren Speichers des Prozessors 80 oder eines externen Datenspeichers beschreibt.

Die Speicherbelegung 40 der Steuereinheit 7 zeigt, dass dort für eine Vielzahl von M Nutzern (wobei M eine natürliche Zahl darstellt), Datensätze 40-1 bis 40-M gespeichert sind. Jeder dieser Datensätze 40-1 bis 40-M ist einem Nutzer der Fachanlage 1 zugeordnet und beinhaltet eine LockID und einen Schlüssel KeyS. Im Falle des Datensatzes 40-1 enthält dieser Datensatz also die LockID 401-1 und den Schlüssel KeyS 402-1.

Die LockID wird dem Nutzer fest zugeordnet, ist also während der gesamten Nutzungszeit der Fachanlage 1 durch den Nutzer dem Nutzer zugeordnet. Sie kann nach Einstellung der Nutzung der Fachanlage 1 durch den Nutzer (beispielsweise bei Umzug oder Tod des Nutzers) einem neuen Nutzer zugeordnet werden. Die Zuordnung der LockID zum Nutzer geschieht beispielsweise dann, wenn der Nutzer sich an einem Verwaltungssystem der Fachanlage zur Nutzung der Fachanlage registriert. Das Verwaltungssystem kann in der Fachanlage 1 selbst untergebracht sein, beispielsweise in der Steuereinheit 7, kann alternativ aber auch eine Vielzahl von Fachanlagen 1 und ggf. eine Vielzahl von Zustell- und/oder Abholbehältern verwalten (vgl. dazu die Diskussion zu Fig. 9) und als zentrales Verwaltungssystem, beispielsweise als Server, ausgebildet sein. Es sei angemerkt, dass dazu keine direkte Kommunikationsanbindung der Fachanlage an das Verwaltungssystem erforderlich sein muss; die Fachanlage 1 kann also beispielsweise als Offline-Fachanlage betrieben werden, die lediglich bei Inbetriebnahme initialisiert werden muss, aber im laufenden Betrieb keinen Zugriff auf das Verwaltungssystem benötigt.

Die LockID kann beispielsweise eine numerische oder alphanumerische Zeichenkette vordefinierter Länge sein.

Der Schlüssel KeyS dient zur Prüfung der Authentizität und/oder Integrität von Zugangsberechtigungsinformation, die von der Steuereinheit 7 von einem Zusteller, einem Nutzer oder von einem von diesem benutzten elektronischen Gerät (z.B. ein Handscanner, Mobiltelefon oder Tag) empfangen wird, an der Steuereinheit 7. Die Zugangsberechtigungsinformation beinhaltet insbesondere die LockID als Zugangsberechtigungsparameter, und ggf. weitere Zugangsberechtigungsparameter, die beispielsweise einen Gültigkeitszeitraum der Zugangsberechtigungsinformation definieren und/oder definieren, in welchem Umfang die Zugangsberechtigungsinformation Zugang an der Fachanlage gewährt, etc.. Der Schlüssel KeyS bildet mit einem weiteren Schlüssel, der in einer Zugangsberechtigungserzeugungsvorrichtung (z.B. dem Schlüsselserver 90 der Fig. 9) gespeichert ist, ein symmetrisches oder asymmetrisches Schlüsselpaar. An der Zugangsberechtigungserzeugungsvorrichtung werden unter Verwendung des weiteren Schlüssels beispielsweise kryptographische Operationen über die Zugangsberechtigungsparameter ausgeführt, um eine Prüfinformation zu erhalten. Diese wird dann zusammen mit den Zugangsberechtigungsparametern als Zugangsberechtigungsinformation dem Zusteller, dem Nutzer oder einem von diesem benutzten elektronischen Gerät zur Verfügung gestellt (z.B. darauf gespeichert). Wenn zum Nachweis der Zugangsberechtigung zu einem oder mehreren Fächern der Fachanlage 1 nun diese Zugangsberechtigungsinformation an die Steuereinheit übertragen oder dort eingeben wird, kann mithilfe der empfangenen Zugangsberechtigungsinformation und dem Schlüssel KeyS geprüft werden, ob die Zugangsberechtigungsinformation integer und authentisch ist. Beispielsweise wird die Prüfinformation basierend auf den empfangenen Zugangsberechtigungsparametern und dem Schlüssel KeyS gemäß den gleichen kryptographischen Operationen wie an der Zugangsberechtigungserzeugungsvorrichtung erneut berechnet und mit der empfangenen Prüfinformation verglichen. Bei Übereinstimmung wird dann beispielsweise davon ausgegangen, dass die empfangene Zugangsberechtigungsinformation integer und authentisch ist. Die kryptographischen Operationen können beispielsweise die Bildung eines Message Authentication Codes (MACs) für die Zugangsberechtigungsparameter basierend auf einem Schlüssel umfassen (z.B. basierend auf dem weiteren Schlüssel). Beispiele für MACs sind der Message Authentication Algorithm (MAA), der Keyed-Hash Message Authentication Code (HMAC) oder der von der NIST spezifizierte Cipher-Based Message Authentication Code (CMAC).Wenn der weitere Schlüssel und der Schlüssel KeyS ein symmetrisches Schlüsselpaar bilden, sind diese beiden Schlüssel gleich.

Der Schlüssel KeyS ist ebenso wie die LockID für jeden Nutzer einer Fachanlage individuell, also unterschiedlich gewählt.

Beispielsweise wird anhand der in der empfangenen Zugangsberechtigungsinformation enthaltenen LockID aus den Datensätzen 40-1 bis 40-M derjenige Datensatz ausgewählt, der diese LockID enthält, und der in diesem Datensatz enthaltene Schlüssel KeyS dann zur Prüfung der Authentizität und/oder Integrität der empfangenen Zugangsberechtigungsinformation verwendet. Wenn zu einer LockID aus einer empfangenen Zugangsberechtigungsinformation kein Datensatz im Speicher der Steuereinheit 7 vorhanden ist, wird beispielsweise kein Zugang gewährt.

Die Datensätze 40-1 bis 40-M können beispielsweise bei Inbetriebnahme der Fachanlage 1 in den Speicher (z.B. den Programmspeicher 71, den weiteren Speicher des Prozessors 70 oder den externen Datenspeicher 74) eingeschrieben werden, beispielsweise über eine drahtgebundene oder drahtlose Wartungsschnittstelle der Steuereinheit 7. Spätere Ergänzungen von Datensätzen und/oder Änderungen an Datensätzen können dann beispielsweise ebenfalls über diese Wartungsschnittstelle erfolgen.

Zusätzlich oder alternativ kann die Steuereinheit 7 beispielsweise über eine (z.B. drahtlose oder drahtgebundene) Verbindung mit einer Zentraleinheit (beispielsweise einem Verwaltungszentrum, insbesondere einem Server) kommunizieren. Insbesondere können die jeweiligen Steuereinheiten mehrerer Fachanlagen über jeweilige Verbindungen mit dieser Zentraleinheit kommunizieren. Die Verbindung kann zumindest teilweise über das Internet erfolgen. Beispielsweise können von der Zentraleinheit an einer oder mehreren der Fachanlagen Änderungen an der jeweiligen Speicherbelegung 40 vorgenommen werden, also beispielsweise einer oder mehrere Datensätze hinzugefügt, entfernt oder verändert werden. Beispielsweise umfasst die Zentraleinheit eine Datenbank mit den Datensätzen aller Nutzer derjenigen Fachanlagen, die von der Zentraleinheit verwaltet werden. Beispielsweise werden die Datensätze dieser Datenbank mit den Datensätzen der Steuereinheiten dieser Fachanlagen synchronisiert, beispielsweise in regelmäßigen oder unregelmäßigen Abständen (beispielsweise bei jeder Hinzufügung, Entfernung oder Änderung von Datensätzen in der Datenbank). Beispielsweise werden alle Datensätze der Datenbank in die jeweiligen Speicher aller Steuereinheiten synchronisiert, oder nur eine jeweilige Teilmenge der Datensätze der Datenbank (beispielsweise werden nur die Datensätze der Nutzer einer jeweiligen Fachanlage in den Speicher der Steuereinheit der Fachanlage synchronisiert).

Anstelle der Speicherung der Vielzahl von Datensätzen 40-1 bis 40-M in dem Speicher der Steuereinheit 7 kann die Steuereinheit 7 auch über eine Kommunikationsschnittstelle verfügen, mittels derer eine LockID und/oder ein Schlüssel KeyS von einer Zentraleinheit abgefragt werden können. Beispielsweise kann jedes Mal, wenn Zugangsberechtigungsinformation mit einer LockID empfangen wird, anhand der empfangenen LockID eine Abfrage an der Zentraleinheit erfolgen, beispielsweise um die Gültigkeit der LockID für die Fachanlage zu prüfen und/oder um den dieser LockID zugeordneten Schlüssel KeyS zu erhalten. Dadurch entfällt die lokale Verwaltung/Speicherung dieser Informationen an der Steuereinheit 7 der Fachanlage 1.

Es ist auch möglich, dass die Abfrage der Gültigkeit der LockID und/oder des zugehörigen Schlüssels KeyS nur einmalig erfolgt und diese Informationen dann in dem Speicher der Steuereinheit 7 abgelegt werden (beispielsweise als einer der Datensätze 40-1 bis 40-M). Auf diese Weise werden dann Schritt für Schritt die Datensätze 40-1 bis 40-M an der Steuereinheit 7 erhalten.

Die Speicherbelegung 41 der Schlosssteuereinheit 8 des Brieffachs enthält eine PseudoLockID 410, die wie bereits erwähnt zur eindeutigen Identifizierung der Schlosssteuereinheit 8 dient und während der Einsatzdauer der Schlosssteuereinheit unverändert bleibt. Des Weiteren ist eine Variable für den Fachtyp 411 gespeichert, die angibt, dass es sich um ein Brieffach handelt. Wenn Brieffächer unterschiedlicher Größen unterstützt werden, kann die Variable auch angeben, um welche Größe von Brieffach es sich handelt. Schließlich ist eine Variable TempLockID 412 vorgesehen, in die der Wert der LockID statisch (also für eine Vielzahl von Zustell- und/oder Abholvorgängen) eingeschrieben ist, um widerzuspiegeln, dass das der Schlosssteuereinheit 8 zugeordnete Brieffach fest dem Nutzer (und damit dessen LockID) zugeordnet ist.

Die Speicherbelegung 42 der Schlosssteuereinheit 8 des Paketfachs enthält ebenfalls eine PseudoLockID, die wiederum zur eindeutigen Identifizierung der Schlosssteuereinheit 8 dient und während der Einsatzdauer der Schlosssteuereinheit unverändert bleibt. Auch eine Variable für den Fachtyp 421 ist vorgesehen und gibt an, dass es sich um ein Paketfach handelt und welche Größe das Paketfach aufweist (beispielsweise anhand von Größenbezeichnungen "S", "M", "L", "XL", etc.). Auch eine Variable TempLockID 422 ist vorgesehen. Diese wird aber im Gegensatz zur oben beschriebenen Situation bei einem Brieffach nicht statisch, sondern dynamisch mit jeweils unterschiedlichen LockIDs beschrieben, um die jeweils aktuelle Zuordnung einer LockID - und damit des der LockID zugeordneten Nutzers - zu der Schlosssteuereinheit 8 bzw. dem Fach widerzuspiegeln. In die Variable TempLockID der gleichen Schlosssteuereinheit 8 eines Fachs kann insbesondere für zwei aufeinanderfolgende Prozesse, die jeweils das Einstellen einer Sendung in das Fach und das Abholen der Sendung aus dem Fach umfassen, jeweils eine unterschiedliche LockID eingespeichert werden, um widerzuspiegeln, dass die beiden Prozesse Sendungen von unterschiedlichen Nutzern der Fachanlage betreffen. Die Variable TempLockID wird ferner dazu genutzt anzuzeigen, ob ein Fach belegt ist oder nicht.

Schließlich umfasst die Speicherbelegung 42 noch ein Flag Userlnput, das beispielsweise auf "FALSE" gesetzt werden kann, um anzuzeigen, dass in dem der Schlosssteuereinheit zugeordneten Fach keine Sendung vom Nutzer eingestellt wurde, und auf "TRUE" gesetzt werden kann, um anzuzeigen, dass in dem der Schlosssteuereinheit zugeordneten Fach zumindest eine Sendung vom Nutzer zur Abholung durch den Zusteller eingestellt wurde.

Fig.5 zeigt ein Flussdiagramm einer beispielhaften Ausführungsform eines Verfahrens gemäß der vorliegenden Erfindung, betreffend die Entnahme von abzuholenden Sendungen durch einen Zusteller (insbesondere Schritte 502-508) und das Einstellen von Sendungen durch einen Zusteller (insbesondere Schritte 509-526). In der linken Spalte des Flussdiagramms 500 sind dabei die Schritte aufgeführt, die von der Steuereinheit 7 (oder deren Prozessor 70) ausgeführt werden oder diese betreffen. In der rechten Spalte sind die Schritte aufgeführt, die von Schlosssteuereinheiten 8 der Paketfächer ausgeführt werden oder diese betreffen. Die mittlere Spalte zeigt die Kommunikation zwischen der Steuereinheit 7 und den Schlosseinheiten 8, die beispielsweise über einen Bus erfolgt.

Im Schritt 501 wird an der Steuereinheit 7 eine gültige Zugangsberechtigung empfangen.

Beispielsweise wird also an der Steuereinheit 7 eine Zugangsberechtigungsinformation von einem Zusteller (z.B. durch händische oder akustische Eingabe) oder von einem elektronischen Gerät des Zustellers (z.B. einem Handscanner oder NFC- oder RFID-Tag) empfangen, deren Integrität und/oder Authentizität geprüft und optional weitere darin enthaltene Zugangsberechtigungsparameter geprüft, beispielsweise ob ein durch einen oder mehrere Zugangsberechtigungsparameter definierter Gültigkeitszeitraum der Zugangsberechtigungsinformation noch nicht abgelaufen ist (z.B. durch Abgleich mit einer Uhr der Steuereinheit 7) und/oder ob die in der Zugangsberechtigungsinforation enthaltene LockID überhaupt in der Steuereinheit 7 gespeichert ist (dies kann beispielsweise die zeitlich erste Prüfung darstellen, da beispielsweise anhand der LockID erst der zur Prüfung der Integrität und/oder Authentizität der Zugangsberechtigungsinformation erforderliche Schlüssel KeyS ausgewählt werden kann, indem beispielsweise anhand der empfangenen LockID der Datensatz der Datensätze 40-1 bis 40-M (Fig. 4) identifiziert wird, der diese LockID enthält, und der in diesem Datensatz enthaltene Schlüssel KeyS dann zur Prüfung der Authentizität und/oder Integrität verwendet wird). Wenn alle diese Prüfungen positiv verlaufen sind, kann beispielsweise davon ausgegangen werden, dass die empfangene Zugangsberechtigungsinformation eine gültige Zugangsberechtigung widerspiegelt.

Die Prüfung des Vorliegens einer gültigen Zugangsberechtigung kann auch noch weitere kryptographische Prüfungen beinhalten, beispielsweise dahingehend, ob das richtige Gerät zur Vorlage der Zugangsberechtigungsinformation eingesetzt wurde, ob dieses Gerät und/oder die Zugangsberechtigungsinformation nicht gesperrt wurde etc.

Die Zugangsberechtigung kann sich beispielsweise auf eine erste Sendung beziehen, die der Zusteller in die Fachanlage zustellen will. Zu diesem Zweck hat der Zusteller die zugehörige Zugangsberechtigungsinformation beispielsweise auf seinem Handscanner zur Übertragung an die Steuereinheit 7 ausgewählt (oder deren Auswahl bestätigt), beispielsweise basierend zumindest auf einer Empfängeradresse der Sendung und/oder Informationen, die aus einem auf der Sendung aufgebrachten Code ausgelesen wurden. Beispielsweise wird durch den Zusteller die Zugangsberechtigungsinformation ausgewählt (oder deren Auswahl bestätigt), die eine LockID enthält, die mit einem Nutzer der Fachanlage assoziiert ist, der der Empfänger der Sendung ist.

Die nachfolgenden Schritte 502-508 beschreiben den Prozess des Abholens von durch Nutzer eingestellten Sendungen, der grundsätzlich optional ist. Wenn das Abholen von durch Nutzer eingestellten Sendungen in einem Zustellsystem, in dem die Fachanlage leingesetzt wird, nicht vorgesehen ist, können diese Schritte beispielsweise ersatzlos entfallen, dann kann auch die Variable UserInputs in den Schlosssteuereinheiten und deren Abfrage entbehrlich sein.

In einem Schritt 502 wird zunächst geprüft, ob in der Zugangsberechtigungsinformation ein Berechtigungsbit für die Abholung von Sendungen (Rücksendungen/Retouren) aus der Fachanlage 1 gesetzt ist. Beispielsweise enthält die Zugangsberechtigungsinformation einen Zugangsberechtigungsparameter "Permissions", der mehrere Bits umfasst, die jeweils auf "1" gesetzt werden können um anzuzeigen, dass diese Zugangsberechtigungsinformation zu bestimmten vordefinierte Handlungen an der Fachanlage 1 berechtigt (eine "0" zeigt jeweils entsprechend an, dass keine Berechtigung zur Vornahme der Handlung vorliegt). Eine derartige Berechtigung zur Abholung von Sendungen wird beispielsweise nur für Zusteller erteilt, nicht aber für Nutzer der Fachanlage 1.

Im Schritt 503 wird dann der Befehl "UserInputs entnehmen" von der Steuereinheit an alle Schlosssteuereinheiten 8 der Fachanlage 1 (oder nur an alle Paketfächern zugeordneten Schlosssteuereinheiten 8) gesendet. Dabei wird beispielsweise keine spezifische Adressierung der Schlosssteuereinheiten verwendet, sondern der Befehl im "Broadcast" an alle Schlosssteuereinheiten der Fachanlage 1 gesendet, die den Befehl dann geeignet auswerten oder ignorieren.

Dieser Befehl wird entsprechend von den Schlosssteuereinheiten 8 empfangen. Die Schlosssteuereinheiten prüfen daraufhin jeweils, ob sie eine Variable UserInputs enthalten, die auf "TRUE" gesetzt ist (Schritt 504). Wenn dies der Fall ist, bewirkt die jeweilige Schlosssteuereinheit 8 das Öffnen des ihr zugeordneten Fachs, beispielsweise durch Ansteuerung des jeweiligen Schlosses zur Entriegelung des Schlosses.

Alternativ kann von der Steuereinheit 7 zuvor im "Broadcast" abgefragt werden, welche Schlosssteuereinheiten den Wert UserInputs=TRUE aufweisen, und dann selektiv (anhand der PseudoLockIDs) nur diejenigen Schlosssteuereinheiten mit einem Öffnungsbefehl angesprochen werden, die zurückgemeldet haben, dass dies auf sie zutrifft.

Dem Zusteller kann dann beispielsweise durch das Anzeigeelement "Sendung entnehmen" im Anzeigefeld 79 der Fig. 2 signalisiert werden, dass er nun zunächst abzuholende Sendungen aus den Fächern entnehmen soll (und beispielsweise nicht die geöffneten Fächer zum Einstellen von Sendungen verwenden soll). Um beispielsweise zu vermeiden, dass der Zusteller eines der geöffneten Fächer wieder schließt, bevor er die darin befindliche Sendung entnommen hat, kann beispielsweise beim oder nach dem Öffnen der Paketfächer eine Verriegelungsfunktion der Schlösser der geöffneten Paketkästen deaktiviert werden. Die Verriegelungsfunktion kann beispielsweise erst wieder aktiviert werden, wenn der Zusteller die Taste "Vorgang abschließen" (Schritt 506) betätigt hat. Die Verriegelungsfunktion kann beispielsweise eine Fallenfunktion sein. Die Deaktivierung und/oder die Aktivierung kann beispielsweise von der Steuereinheit 7 bewirkt werden, die dazu die jeweiligen Schlosssteuereinheiten entsprechend instruiert.

In einem Schritt 505 findet dann die Entnahme der Sendungen aus den geöffneten Fächern durch den Zusteller statt. Der Zusteller kann die Pakete dann beispielsweise mit seinem Handscanner erfassen und/oder zur späteren Mitnahme (nach Beendigung des Schritts 526) beiseite stellen.

Wenn die Steuereinheit 7 dann im Schritt 506 die Information erhält, dass die Taste "Vorgang abschließen" (vgl. das Tastenfeld 78 der Fig. 2) betätigt wurde, der Zusteller also offenbar den Abholvorgang beendet hat, sendet sie im Schritt 507 den Befehl "UserInputs zurücksetzen" an alle Schlosssteuereinheiten8 der Fachanlage (oder nur an alle Paketfächern zugeordneten Schlosssteuereinheiten 8). Dies führt im Schritt 508 dazu, dass alle Schlosssteuereinheiten 8, in denen die Variable Userlnput auf "TRUE" gesetzt war, diese jetzt auf "FALSE" setzen (dies zeigt an, dass das Fach keine Sendung zur Abholung mehr enthält) und auch das Feld TempLockID auf "LEER" setzen (dies zeigt an, dass das Fach jetzt keinem Nutzer mehr zugeordnet ist).

Der Schritt 508 könnte alternativ beispielsweise auch direkt zusammen mit den Schritten 504 und/oder 505 ausgeführt werden, also ohne die explizite Aufforderung durch die Steuereinheit 7 im Schritt 507. Der Schritt 507 könnte dann entfallen.

Nach diesem Abholvorgang sind noch einige der entleerten Paketfächer offen, und der Zusteller hat bereits im Schritt 501 eine LockID an die Steuereinheit 7 übertragen, die nun einem Paketfach der Fachanlage 1 zugeordnet werden muss. Dies erfolgt in den Schritten 519-524.

Zunächst wird aber sichergestellt werden, dass für jede mögliche Paketgröße auch zumindest ein entsprechend großes Paketfach der Fachanlage 1 geöffnet ist. Dies erfolgt in den Schritten 509-518.

Im Schritt 509 wird der Prozess des Suchens freier Paketfächer an der Steuereinheit 7 gestartet, indem eine Abfrage (Schritt 510) nach freien Paketfächer einer bestimmten Größe, beispielsweise zunächst "S", an alle Schlosssteuereinheiten 8 (oder nur an alle Paketfächern zugeordneten Schlosssteuereinheiten 8) abgesetzt wird. Im Schritt 510 prüfen die Schlosssteuereinheiten jeweils, ob ihre Variable TempLockID auf "LEER" gesetzt ist und ob die angeforderte Paketfachgröße mit der Paketfachgröße laut ihrer Variable Fachtyp übereinstimmt (Schritt 511). Wenn dies der Fall ist, wird in den Schritten 512 und 513 die die jeweilige Schlosssteuereinheit identifizierende PseudoLockID an die Steuereinheit 7 zurückgesendet. Dabei muss die Steuereinheit 7 nicht konkret adressiert werden; wenn die Kommunikation über einen Bus erfolgt, kann das Absetzen einer Nachricht mit der darin enthaltenen PseudoLockID genügen, wenn der Steuereinheit 7 bewusst ist, dass sie diese Nachricht als Antwort auf ihre Anfrage (Schritt 510) zu verstehen hat. Die Nachricht kann auch eine explizite Kennung enthalten die anzeigt, dass sie eine Antwort auf die Anfrage im Schritt 510 darstellt.

Aus der einen oder den mehreren für die konkrete Fachgröße "S" erhaltenen PseudoLockIDs wählt die Steuereinheit 7 dann beispielsweise eine PseudoLockID aus, beispielsweise nach einem Zufallsprinzip (Schritte 514, 515). Dies hat den Vorteil, dass die Paketfächer über die Nutzungsdauer der Fachanlage gleichmäßig abgenutzt werden. Alternativ können auch bestimmte Paketfächer bevorzugt geöffnet werden, beispielsweise Paketfächer, die in der Nähe der Steuereinheit liegen, um den Zusteller größere Wege zwischen Steuereinheit und Paketfächern zu ersparen und damit den Zustellprozess zu beschleunigen. Da die PseudoLockIDs den Schlosssteuereinheiten statisch zugewiesen sind, kann beispielsweise bei der Inbetriebnahme der Fachanlage 1 festgelegt werden, welche PseudoLockIDs zu "nahe" bei der Steuereinheit liegenden Schlosssteuereinheiten (und damit Paketfächern) gehören. Es können dann bevorzugt PseudoLockIDs aus dieser bei Inbetriebnahme festgelegten Gruppe von PseudoLockIDs ausgewählt werden.

Im optionalen Schritt 516 wird geprüft, ob ein Fach der Größe "S" bereits offen ist. Diese Information kann der Steuereinheit beispielsweise vorliegen, wenn diejenigen Schlosssteuereinheiten 8, die im Schritt 504 ihre zugeordneten Paketfächern öffnen, zumindest die Größe des geöffneten Paketfachs an die Steuereinheit 7 zurückkommunizieren (in der Fig. 5 nicht dargestellt). Bevorzugt sollte dabei allerdings auch die jeweilige PseudoLockID kommuniziert werden. Der Schritt 516 könnte alternativ auch vor dem Schritt 510 ausgeführt werden und bei Feststellung, dass bereits ein Fach der Größe "S" geöffnet ist, auf die Schritte 510-515 und 517-518 hinsichtlich der Fachgröße "S" verzichtet werden.

Wenn Schritt 516 allerdings nicht ausgeführt wird, ist die Konsequenz lediglich, dass am Ende des Prozesses der Schritte 509-518 ggf. mehrere Fächer der gleichen Größe geöffnet sind, was zwar bedeutet, dass durch den Zusteller im Schritt 525 mehr Fächer geschlossen werden müssen als eigentlich notwendig wäre. Allerdings hat der Zusteller auch innerhalb der Gruppe von offenen Paketfächern der gleichen Größe eine größere Auswahl, welches Paketfach er letztlich für die Zustellung nutzt. Beispielsweise kann er für ein schweres Paket ein bodennahes Paketfach bevorzugen.

Im Schritt 517 wird von der Steuereinheit 7 ein Befehl zum Öffnen des der Schlosssteuereinheit mit der ausgewählten PseudoLockID zugeordneten Paketfachs abgesetzt und von der entsprechenden Schlosssteuereinheit 8 im Schritt 518 entsprechend umgesetzt. Die betroffene Schlosssteuereinheit 8 erkennt dabei anhand der PseudoLockID, dass sie ihr Paketfach öffnen soll.

Die Schritte 510-518 werden dann jeweils für die verschiedenen vorhandenen Paketfachgrößen (z.B. "S", "M", "L", "XL") durchgeführt, so dass am Ende des Prozesses für jede dieser Paketfachgrößen zumindest ein Fach geöffnet ist.

Die Steuereinheit speichert vorzugsweise eine Information darüber, welche PseudoLockIDs jeweils im Schritt 517 geöffnet wurden und welche Paketfachgröße zu der jeweiligen PseudoLockID gehört, zum Rückgriff im weiteren Verlauf des Verfahrens.

Falls für eine oder mehrere Paketfachgrößen kein freies Paketfach mehr vorhanden sein sollte, kann beispielsweise eine entsprechende Warnung (z.B. mittels des Anzeigeelements "Keine Kapazität" der Benutzerschnittstelle 79 der Steuereinheit) ausgegeben werden, die Schritte 515-518 unterbleiben dann jeweils.

In den Schritten 519-524 erfolgt nunmehr die Zuordnung der vom Zusteller bereits an die Steuereinheit übertragenen LockID an ein Paketfach.

Dies geschieht durch das Einlegen der Sendung in eines der geöffneten Paketfächer durch den Zusteller und das Schließen des Paketfachs. Die Schlosssteuereinheit 8 dieses Paketfachs erfasst dann zumindest das Schließen des Paketfachs (über einen Sensor 11, wie zur Fig. 3 erläutert wurde), vgl. Schritt 520. Alternativ kann auch ein Sensor zur Erfassung vorhanden sein, dass tatsächlich eine Sendung in das Fach eingelegt wurde, wie ebenfalls bereits zu Fig. 3 erläutert wurde, vgl. den optionalen Schritt 519.

Die Schlosssteuereinheit 8, deren zugeordnetes Paketfach geschlossen wurde, sendet dann im Schritt 521 eine Nachricht, dass ihr zugeordnetes Paketfach geschlossen wurde. Diese Nachricht enthält die PseudoLockID der Schlosssteuereinheit 8. Die Steuereinheit 7 wertet diese Information im Schritt 522 aus und assoziiert die erhaltene LockID mit dieser PseudoLockID.

Im Schritt 523 sendet die Steuereinheit 7 dann eine Nachricht mit der LockID zur Verarbeitung durch die Schlosssteuereinheit 8 mit der PseudoLockID. Die Schlosssteuereinheit 8 empfängt diese LockID und speichert diese im Schritt 524 in ihrer Variable TempLockID. Dies zeigt an, dass die Schlosssteuereinheit 8 und damit auch das ihr zugeordnete Paketfach nun mit dieser LockID (und damit auch mit dem Nutzer, der mit der LockID assoziiert ist) assoziiert ist, und dass das Paketfach belegt ist (mit zumindest einer Sendung für diesen Nutzer).

Wenn der Zusteller Sendungen für andere Empfänger (Nutzer) in die Fachanlage 1 zustellen will, müssen erneut für jede dieser Sendungen jeweils die Schritte 501, 509-518 und 519-524 ausgeführt werden, also zunächst eine gültige Zugangsberechtigungsinformation für die jeweilige Sendung (mit einer jeweiligen LockID) erhalten werden (Schritt 501), dann sichergestellt werden, dass zumindest ein Paketfach jeder Größe geöffnet ist (Schritte 509-518), und dann eine Assoziierung der LockID mit einem der geöffneten Paketfächer durchgeführt werden (Schritte 519-524).

Dabei kann im Schritt 516 nun einerseits Information (PseudoLockIDs und Paketfachgrößen) über bereits geöffnete Paketfächer verwendet werden, die - wie oben erläutert - im Kontext des Schritts 504 von den Schlosssteuereinheiten an die Steuereinheit zurückgemeldet werden könnte, sowie Information (PseudoLockIDs und Paketfachgrößen), die im Schritt 517 von der Steuereinheit 7 gespeichert wurde als auch Information (PseudoLockIDs) über jeweils im Schritt 521 geschlossene Paketfächer. Die Steuereinheit hat dann also zu jedem Zeitpunkt einen vollständigen Überblick über die aktuell geöffneten Paketfächer und deren Größe.

Wenn alle zuzustellenden Sendungen abgearbeitet sind, kann der Zusteller im Schritt 525 die Taste "Vorgang abschließen" der Benutzerschnittstelle 79 (siehe Fig. 2) betätigen (erfasst von der Steuereinheit 7 im Schritt 526). Dann wird beispielsweise mit dem Anzeigeelement "Alle Fächer schließen" der Benutzerschnittstelle 79 dem Zusteller signalisiert (z.B. durch Blinken, zusätzlich oder alternativ auch durch ein akustisches Signal), dass er alle Fächer schließen soll, beispielsweise solange, bis dies erfolgt ist (Schritt 525). Über das Anzeigeelement "Bestätigung" kann dem Zusteller bei erfolgreicher Schließung aller Paketfächer auch eine Rückmeldung geliefert werden (wiederum beispielsweise mit einem zusätzlichen akustischen Signal).

Die Prüfung, ob tatsächlich alle Paketfächer geschlossen sind, kann von der Steuereinheit 7 beispielsweise anhand von Informationen über nach dem Schritt 525 erfolgte Schließungen von Paketfächern erfolgen (in Fig. 5 nicht dargestellt), da die Steuereinheit wie oben ausgeführt bei jeder Öffnung eines Paketfachs im Schritt 517 anhand der PseudoLockID nachhalten kann, welches Fach geöffnet wurde und wiederum anhand der PseudoLockID nachhalten kann, welche Paketfächer vor dem Schritt 525 geschlossen wurden (Schritt 521). Die Steuereinheit 7 könnte, wie bereits erläutert wurde, auch erfassen, welche Paketfächer im Schritt 504 geöffnet wurden, wenn die zugehörigen Schlosssteuereinheiten 8 ihre jeweiligen PseudoLockIDs an die Steuereinheit 7 zurückmelden.

In der obigen Beschreibung wurde beispielhaft zunächst davon ausgegangen, dass der Zusteller pro Empfänger (Nutzer) nur eine Sendung zustellt. Es ist natürlich auch möglich, einem Nutzer mehr als eine Sendung zuzustellen. Dies kann beispielsweise dadurch erfolgen, dass die mehreren Sendungen in dasselbe Paketfach eingelegt werden. Zusätzlich oder alternativ können auch Sendungen für einen Nutzer in mehrere Paketfächer eingestellt werden. Dann wird entsprechend in die Schlosssteuereinheit von jedem Paketfach, in das diese Sendungen eingestellt werden, die mit diesem Nutzer assoziierte LockID gespeichert (Schritt 524). Dabei werden die Schritte 509-518 zur Sicherstellung, dass immer ein Paketfach jeder Größe geöffnet ist, für die gleiche, in Schritt 501 erhaltene LockID mehrfach ausgeführt, z.B. jedes Mal von Neuem, wenn gemäß Schritt 521 an die Steuereinheit 7 kommuniziert wird, dass ein Paketfach (einer bestimmten Größe) geschlossen wurde (aber zeitlich nicht vor Abschluss des auf den Schritt 521 folgenden Schritts 524), oder zumindest jedes Mal dann, wenn die Steuereinheit 7 der Auffassung ist, dass von einer bestimmten Fachgröße momentan kein Paketfach mehr geöffnet ist. Die Steuereinheit 7 trägt dann Sorge dafür, dass zeitnah ein weiteres Paketfach der gleichen Größe geöffnet wird, damit entweder ein Paket für den gleichen Nutzer (gleiche LockID) oder ein Paket für einen anderen Nutzer (andere LockID) in dieses weitere Paketfach eingestellt werden kann. Die Schrittfolge 509-518 (oder eine von deren oben beschriebenen Abwandlungen) würde dann also bei einer gemeinsamen Zustellung (also z.B. in einer Fuhre) einer Vielzahl von Sendungen durch einen Zusteller an eine Vielzahl von Nutzern beispielsweise einmal initial ausgeführt, nachdem die gültige Zugangsberechtigungsinformation für den ersten Nutzer (erste LockID) der Vielzahl von Nutzern empfange wurde (Schritt 501), und dann jedesmal ausgeführt (aber beispielsweise nicht öfter), wenn die Steuereinheit 7 gemäß Schritt 521 eine Information erhält, dass ein Paketfach (einer bestimmten Größe) geschlossen wurde oder wenn die Steuereinheit 7 der Auffassung ist, dass für zumindest eine Fachgröße gerade kein Paketfach geöffnet ist.

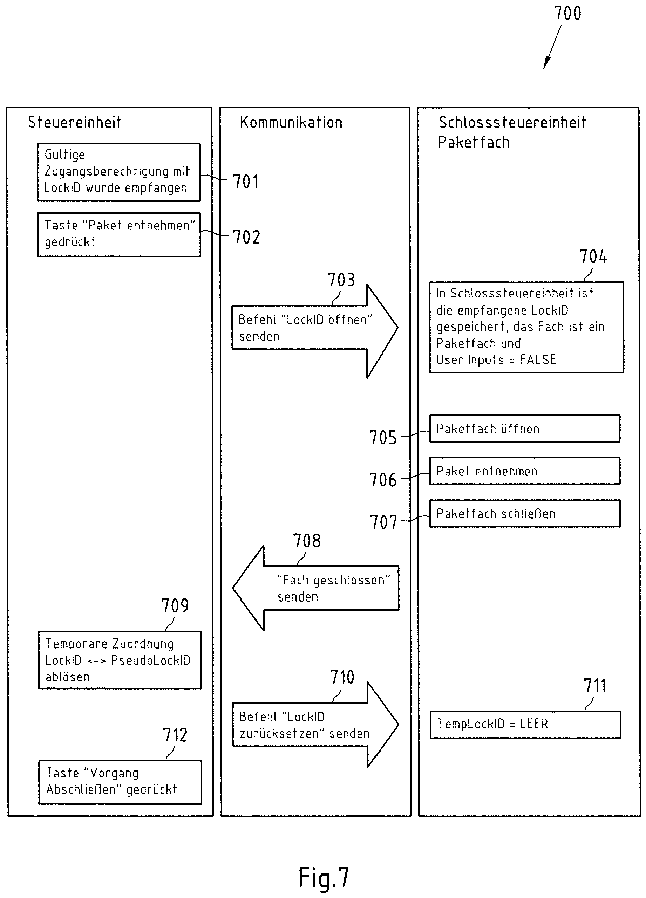

Der Prozess der Entnahme von dergestalt zugestellten Sendungen durch die Empfänger (Nutzer) wird später unter Bezugnahme auf das Flussdiagramm 700 der Fig. 7 erläutert.

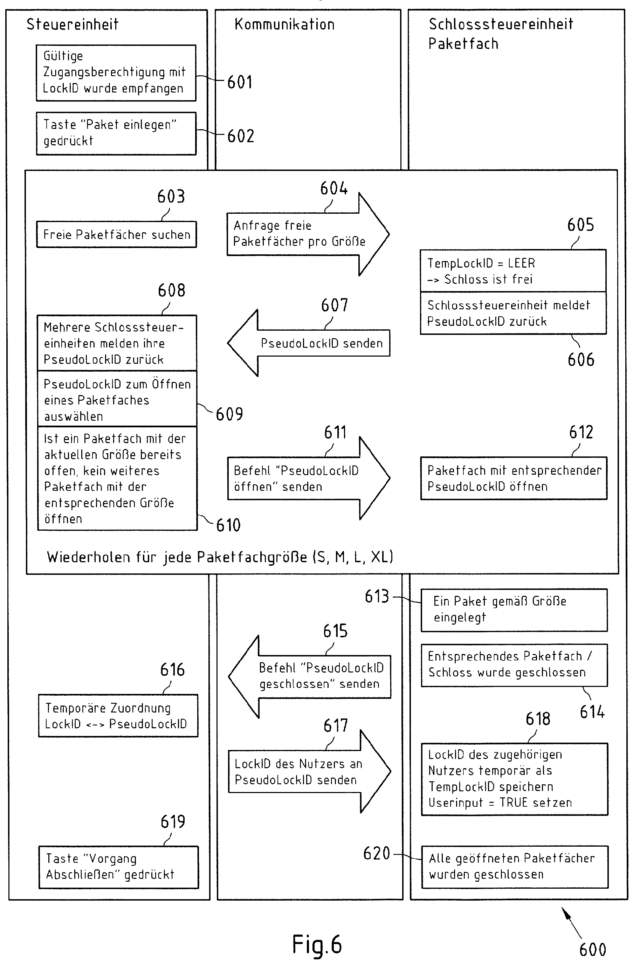

Zunächst wird allerdings anhand des Flussdiagramms 600 der Fig. 6 dargestellt, wie ein Nutzer der Fachanlage 1 Sendungen in die Fachanlage einstellen kann, die dann gemäß den bereits beschriebenen Schritten 502-508 des Flussdiagramms 500 der Fig. 5 durch den Zusteller abgeholt werden können.

Fig. 6 zeigt ein Flussdiagramm 600 einer beispielhaften Ausführungsform eines Verfahrens gemäß der vorliegenden Erfindung, betreffend das Einstellen von einer oder mehreren durch einen Zusteller abzuholenden Sendungen durch eine Person bzw. einen Nutzer. In der linken Spalte des Flussdiagramms 600 sind dabei wiederum die Schritte aufgeführt, die von der Steuereinheit 7 (oder deren Prozessor 70) ausgeführt werden oder diese betreffen. In der rechten Spalte sind die Schritte aufgeführt, die von Schlosssteuereinheiten 8 der Paketfächer ausgeführt werden oder diese betreffen. Die mittlere Spalte zeigt die Kommunikation zwischen der Steuereinheit 7 und den Schlosseinheiten 8, die beispielsweise über einen Bus erfolgt.

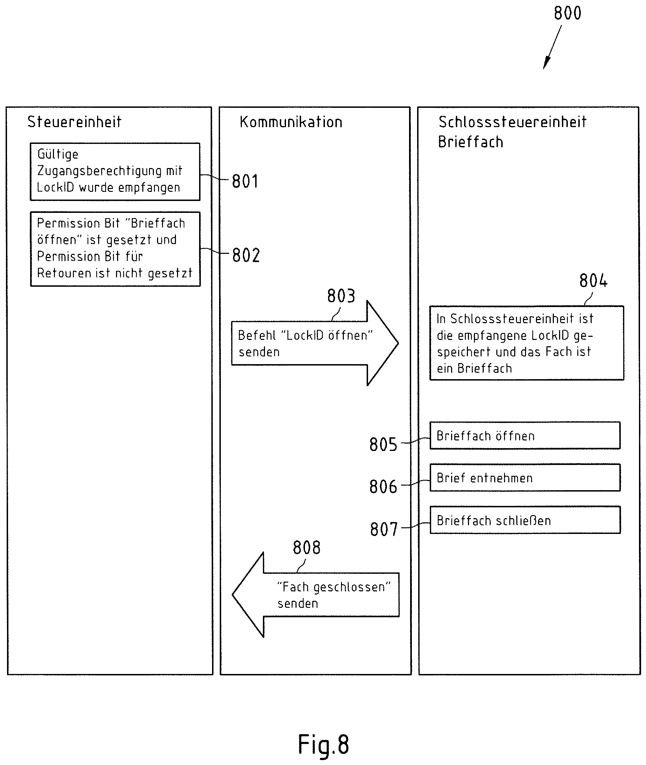

Bei der Beschreibung des Flussdiagramms 600 wird beispielhaft davon ausgegangen, dass der Prozess des Flussdiagramms 600 ein eigenständiger Prozess ist, der nicht mit einem Prozess des Ermöglichens des Entnehmens von einem oder mehreren Briefen aus einem Brieffach der Fachanlage (vgl. das Flussdiagramm 800 der Fig. 8) und/oder einem Prozess des Ermöglichens des Entnehmens von einem oder mehreren Paketen aus einem oder mehreren Paketfächern der Fachanlage 1 (vgl. das Flussdiagramm 700 der Fig. 7) verbunden ist. Eine derartige Verbindung ist allerdings ohne weiteres möglich. Beispielsweise kann dies in der Form stattfinden, dass bei Vorlage einer gültigen Zugangsberechtigung zunächst das Brieffach des Nutzers geöffnet wird (Prozess des Ermöglichens des Entnehmens von Briefen), dann, falls eine oder mehrere Sendungen in der Fachanlage eingestellt sind und der Nutzer es wünscht, die entsprechenden ein oder mehreren Paketfächer mit den eingestellten Sendungen geöffnet werden (Prozess des Ermöglichens des Entnehmens von Paketen) und dann, falls der Nutzer es wünscht, der Prozess des Ermöglichens des Einstellens von einer oder mehreren Sendungen durch den Nutzer erfolgen kann. Die Reihenfolge der letzten beiden Prozesse kann dabei auch vertauscht sein. Es versteht sich, dass bei einer derartigen Kopplung eine gültige Zugangsberechtigung nur einmal für die zwei oder drei verbundenen Prozesse und nicht jedes Mal für jeden der zwei oder drei verbundenen Prozesse an der Steuereinheit 7 erhalten werden muss.

Im Schritt 601 empfängt die Steuereinheit 7 vom Nutzer bzw. einem Gerät des Nutzers (beispielsweise einem Mobiltelefon oder einem NFC- oder RFID-Tag) eine gültige Zugangsberechtigung mit der dem Nutzer zugeordneten LockID. Dieser Schritt verläuft im Wesentlichen analog zu dem bereits beschriebenen Schritt 501 der Fig. 5, so dass diesbezüglich auf die obige Beschreibung verwiesen wird. Insbesondere kann also Zugangsberechtigungsinformation vom Nutzer oder dessen Gerät an der Steuereinheit 7 empfangen, deren Authentizität und/oder Integrität geprüft worden sein (unter Verwendung des in der Steuereinheit gespeicherten Schlüssels KeyS und der erhaltenen Zugangsberechtigungsinformation) und neben der Gültigkeit der LockID auch die Gültigkeit weiterer Zugangsberechtigungsparameter aus der Zugangsberechtigungsinformation geprüft worden sein.

Beispielsweise kann ein Zugangsberechtigungsparameter "Permissions" der Zugangsberechtigungsinformation ein Element (z.B. ein Bit) aufweisen, das anzeigt, ob der Nutzer überhaupt zum Einstellen von abzuholenden Sendungen (Retouren) berechtigt ist. Die Prüfung dieses Elements kann beispielsweise ebenfalls im Schritt 601 oder in einem separaten Schritt erfolgen und zwingende Voraussetzung für die Durchführung der folgenden Verfahrensschritte sein.

Im Unterschied zum Gerät eines Zustellers kann auf einem Gerät des Nutzers (beispielsweise einem Mobiltelefon oder einem NFC- oder RFID-Tag) nur eine Zugangsberechtigungsinformation enthalten sein, und nicht mehrere, so dass eine Auswahl durch den Nutzer entfallen kann. Der Nutzer muss dann beispielsweise nur den Prozess der Übertragung der Zugangsberechtigungsinformation an die Steuereinheit 7 anstoßen (beispielsweise durch Betätigung eines Benutzerschnittstellenelements auf seinem Gerät) oder auf seinem Gerät bestätigen, dass seine Zugangsberechtigungsinformation an die Steuereinheit 7 übertragen werden soll., muss aber keine Auswahl aus mehreren Zugangsberechtigungsinformationen treffen.

Im Schritt 602 wird von der Steuereinheit 7 die Information erhalten, dass die Taste "Paket einlegen" (siehe das Tastenfeld 78 der Fig. 2) gedrückt wurde. Dies startet den Prozess des Ermöglichens der Einstellung von einer oder mehreren abzuholenden Sendungen durch den Nutzer.

Da alle Paketfächer der Fachanlage 1 geschlossen sind, ist es zunächst erforderlich, eines oder mehrere Paketfächer zu öffnen. Dies erfolgt in den Schritten 603-612 analog zu den oben bereits beschriebenen Schritten 509-518 (und optional ihren beschriebenen Abwandlungen) der Fig. 5. Insbesondere wird also wiederum versucht, ein Paketfach jeder Größe zu öffnen. Information zu den geöffneten Paketfächern (anhand der PseudoLockID) und deren Größe wird dann beispielsweise an der Steuereinheit 7 gespeichert, insbesondere damit diese nachvollziehen kann, zu welcher Fachgröße bei Schließung eines Fachs noch ein weiteres Fach geöffnet werden muss und/oder welche Fächer am Ende des Verfahrens noch offen sind und geschlossen werden sollten.

Die Zuweisung der LockID des Nutzers zu einem Paketfach geschieht dann in den Schritten 613-618, die im Wesentlichen den oben beschriebenen Schritten 519-524 der Fig. 5 entsprechen, allerdings mit dem Unterschied, dass in Schritt 618 in der Schlosssteuereinheit 8 desjenigen Paketfachs, in das der Nutzer die eine oder die mehreren Sendungen eingestellt hat, nicht nur der Wert der Variablen TempLockID auf den Wert der im Schritt 601 erhaltenen LockID gesetzt wird (um dieses Paketfach mit der LockID des Nutzers zu assoziieren und anzuzeigen, dass es belegt ist), sondern zusätzlich die Variable Userinputs auf TRUE gesetzt wird. Dies dient beispielsweise dazu, dass bei Abholung durch den Zusteller von der Steuereinheit 7 bzw. den Schlosssteuereinheiten 8 unterschieden werden kann (Schritt 504 der Fig. 5), in welchen belegten Paketfächern (also TempLockID nicht leer) eine abzuholende Sendung enthalten ist (UserInputs=TRUE) und in welchen lediglich eine zugestellte Sendung noch nicht vom jeweiligen Nutzer entnommen wurde (Userlnputs=FALSE). Ein weiterer Unterschied zur Fig. 5 (insbesondere zu den Schritten 519/520) besteht natürlich darin, dass ein Nutzer, und nicht der Zusteller, die eine oder die mehreren Sendungen in das Paketfach einstellt.

Die Beendigung des Einstellvorgangs durch den Nutzer erfolgt in den Schritten 619 und 620, die analog zu den oben bereits beschriebenen Schritten 525 und 526 verlaufen. Der Nutzer betätigt also die Taste "Vorgang abschließen" und wird dann aufgefordert, alle noch offenen Paketfächer zu schließen.

Zur Vereinfachung der Darstellung wurde im Flussdiagramm 600 angenommen, dass der Nutzer lediglich eine Sendung zur Abholung einstellt. Es ist allerdings auch möglich, mehrere Sendungen entweder in ein Paketfach einzustellen oder die mehreren Sendungen in mehreren Paketfächern einzustellen. Insbesondere der Fall, dass dabei zumindest zwei Paketfächer der gleichen Größe erforderlich sind, wird dadurch abgedeckt, dass die Schritte 603-612, in denen sichergestellt wird, dass jeweils mindestens ein Paketfach jeder Größe geöffnet ist, nicht lediglich einmal (wie in Fig. 6 dargestellt), sondern zusätzlich jedesmal, wenn im Schritt 615 von einer Schlosssteuereinheit 8 berichtet wird, dass ein Paketfach geschlossen wurde (aber zeitlich beispielsweise nicht vor Abschluss des auf den Schritt 615 folgenden Schritts 618), ausgeführt werden oder die Steuereinheit 7 der Auffassung ist, dass momentan von zumindest einer Fachgröße kein Paketfach geöffnet ist.

Wie oben bereits erwähnt wird das Flussdiagramm 600 grundsätzlich als eigenständiger Prozess vorgestellt. Nachfolgend soll nichtsdestotrotz kurz der Fall behandelt werden, dass auf den Empfang der gültigen Schließberechtigung in Schritt 601 hin dem Nutzer nicht nur die Einstellung von einer oder mehreren Sendungen ermöglicht wird, sondern der Nutzer auch sein Brieffach leeren kann, wie es im Flussdiagramm 800 der Fig. 8 nachfolgend noch beschrieben wird.

Wenn dem Nutzer das Brieffach beispielsweise geöffnet wird, bevor der die Taste "Paket einlegen" drückt (Schritt 602), kann das Szenario auftreten, dass der Nutzer sein Brieffach nicht unmittelbar nach Entnahme der Briefe wieder verschließt, das Brieffach also offen steht. Wenn nun nachfolgend der oben beschriebene Prozess der Schritte 603-612 ausgeführt wird, um Paketfächer zur Einstellung von abzuholenden Sendungen zu öffnen, besteht die Gefahr, dass der Nutzer eine Sendung in das noch offene Brieffach einstellt und nicht in eines der Paketfächer. Für das Brieffach hat der Zusteller allerdings keine Zugangsberechtigung, kann also eine darin befindliche, eigentlich für die Abholung durch den Zusteller vorgesehene Sendung, nicht entnehmen (für den Zusteller ist es ausreichend, dass er Briefe durch den Briefschlitz des Brieffachs einwerfen kann, eine Öffnung der Tür des Brieffachs ist dazu nicht erforderlich). Um dieses falsche Einstellen einer Sendung in das Brieffach zu verhindern, kann beispielsweise vorgesehen sein, dass nach dem Öffnen des Brieffachs und vor Erfassung der Betätigung der Taste "Vorgang abschließen" (Schritt 619) eine Verriegelung des Schlosses des Brieffachs nicht möglich ist. Beispielsweise setzt die Steuereinheit nach dem Schritt 619 dazu einen Befehl "Verriegelungsfunktion Schloss Brieffach aktivieren" mit der LockID oder der PseudoLockID der betroffenen Schlosssteuereinheit 8 ab. Die betreffende Schlosssteuereinheit 8 erkennt dann anhand der LockID oder PseudoLockID (und ggf. einer Information, dass nur ein Brieffach betroffen ist), dass die Verriegelungsfunktion wieder aktiviert werden soll und steuert das ihr zugeordnete Schloss entsprechend an. Bei der Verriegelungsfunktion kann es sich beispielsweise um eine Fallenfunktion handeln, also um eine Funktion, dass beim Schließen einer Tür oder Klappe des Brieffachs automatisch auch eine Verriegelung stattfindet. Wenn die Verriegelung beispielsweise auf einer Blockierung eines in das Schloss eingeführten Sperrhakens durch ein Verriegelungselement beruht, kann das Verriegelungselement beispielsweise zur Deaktivierung der Verriegelungsfunktion in die Freigabestellung bewegt und dort gehalten werden. Alternativ kann, wie oben bereits erläutert wurde, die Deaktivierung der Verriegelungsfunktion elektronisch bewerkstelligt werden, indem bei jeder erfolgten Verriegelung während des gewünschten Deaktivierungszeitraums das Schloss bei erkannter Verriegelung sofort wieder entriegelt wird. Die Deaktivierung der Verriegelungsfunktion des Schlosses des Brieffachs kann beispielsweise dann bewirkt werden, wenn eine Öffnung des Brieffachs bewirkt wird, also beispielsweise im Schritt 804 der Fig. 8, also beispielsweise durch Aufnahme einer entsprechenden Deaktivierungsinstruktion in dem im Schritt 804 übertragenen Befehl. Alternativ kann die Schosssteuereinheit 8 des Brieffachs allerdings bereits so programmiert sein, dass bei jedem Öffnungsvorgang die Verriegelungsfunktion zunächst deaktiviert bleibt, bis ein explizites Aktivierungssignal empfangen wird.

Fig. 7 zeigt ein Flussdiagramm einer beispielhaften Ausführungsform eines Verfahrens gemäß der vorliegenden Erfindung, betreffend die Entnahme von durch einen Zusteller in ein Paketfach eingestellten einen oder mehreren Sendungen durch einen Nutzer (den Empfänger der einen oder mehreren Sendungen). Diese Sendungen wurden beispielsweise gemäß Schritt 519 der Fig. 5 durch einen Zusteller in die Fachanlage 1 eingelegt. Beispielsweise wurden eine oder mehrere Sendungen für den Nutzer vom dem Zusteller in eines oder mehrere Paketfäeher der Fachanlage 1 eingestellt. In der linken Spalte des Flussdiagramms 700 sind dabei wiederum die Schritte aufgeführt, die von der Steuereinheit 7 (oder deren Prozessor 70) ausgeführt werden oder diese betreffen. In der rechten Spalte sind die Schritte aufgeführt, die von Schlosssteuereinheiten 8 der Paketfächer ausgeführt werden oder diese betreffen. Die mittlere Spalte zeigt die Kommunikation zwischen der Steuereinheit 7 und den Schlosseinheiten 8, die beispielsweise über einen Bus erfolgt.

Es wird davon ausgegangen, dass die Ermöglichung der Entnahme der Sendungen durch den Nutzer gemäß dem Flussdiagramm 700 einen eigenständigen Prozess darstellt, der nicht mit einem Prozess der Ermöglichung der Briefentnahme (Fig. 8) und/oder einem Prozess der Ermöglichung des Einstellens von abzuholenden Sendungen durch den Nutzer (Fig. 6) verbunden sein muss. Allerdings ist eine solche Verbindung ohne Weiteres möglich, und dann muss beispielsweise die Zugangsberechtigung nur einmal an die Steuereinheit übertragen und dort geprüft werden.

Im Schritt 701 wird eine gültige Zugangsberechtigung an der Steuereinheit empfangen. Dies geschieht analog wie im oben bereits beschriebenen Schritt 601 der Fig. 6, also beispielsweise von einem Mobiltelefon oder NFC- oder RFID-Tag des Nutzers.

Bei dieser Prüfung, oder in einer separaten Prüfung, kann des Weiteren geprüft werden, ob die Zugangsberechtigung den Nutzer zur Entnahme von Sendungen aus Paketfächern, die mit der mit dem Nutzer assoziierten LockID assoziiert sind, berechtigt, was beispielsweise zwingende Voraussetzung für die Durchführung der folgenden Verfahrensschritte ist.

Es kann dann in einem optionalen Schritt beispielsweise durch die Steuereinheit 7 geprüft werden, ob die Fachanlage 1 mindestens eine Sendung zur für den Nutzer enthält. Dies kann beispielsweise durch Abfragen einiger oder aller Schlosssteuereinheiten 8 nach Übereinstimmung mit den Kriterien, ob die TempLockID der in der Zugangsberechtigungsinformation empfangenen LockID (des Nutzers) entspricht, ob es sich um ein Paketfach handelt und ob die Variable UserInputs auf "FALSE" gesetzt ist (anderenfalls würde es sich um eine von dem Nutzer selbst zur Abholung durch den Zusteller eingestellte Sendungen handeln). Wenn daraufhin von zumindest einer Schlosssteuereinheit 8 eine positive Rückmeldung, dass diese Kriterien bei ihr sämtlich erfüllt sind, an der Steuereinheit 7 empfangen wird, kann die Steuereinheit 7 davon ausgehen, dass für den Nutzer zumindest eine Sendung in der Fachanlage 1 eingestellt wurde. In einem weiteren optionalen Schritt kann die Steuereinheit dies dem Nutzer beispielsweise anzeigen, beispielsweise durch das Anzeigeelement "Sendung entnehmen" im Anzeigefeld 79 der Steuereinheit 7 (Fig. 2).

Im Schritt 702 erfasst die Steuereinheit 7, dass die Taste "Paket entnehmen" im Tastenfeld 78 der Steuereinheit 7 (Fig. 2) betätigt wurde, und startet den Prozess zur Ermöglichung der Entnahme von einer oder mehreren Sendungen aus der Fachanlage 1 durch den Nutzer.

Dazu wird im Schritt 703 der Befehl "LockID öffnen" abgesetzt, beispielsweise wiederum an alle Schlosssteuereinheiten der Fachanlage 1 (oder nur an alle Schlosssteuereinheiten, die mit Paketfächern assoziiert sind). Der Befehl kann beispielsweise ferner eine Information enthalten, dass lediglich Paketfächer geöffnet werden sollen (kann beispielsweise entbehrlich sein, wenn die Fachanlage nur Paketfächer und keine Brieffächer aufweist), und/oder dass nur Paketfächer geöffnet werden sollen, deren Variable Userlnputs=FALSE ist (kann beispielsweise entbehrlich sein, wenn ein Abholen von Sendungen, die durch Nutzer eingestellt wurden, nicht unterstützt wird). (Alternativ kann der Öffnungsbefehl auch nur an diejenige Schlosssteuereinheit (identifiziert durch deren PseudoLockID) abgesetzt werden, von der bekannt ist, dass sie den Wert LockID als TempLockID gespeichert hat, beispielsweise, weil diese Information in der Steuereinheit 7 zuvor gespeichert wurde oder weil die Steuereinheit 7 zuvor alle Schlosssteuereinheiten abgefragt hat um zu erfahren, welche der Schlosssteuereinheiten den Wert LockID als TempLockID gespeichert hat.)

Die Schlosssteuereinheiten 8 prüfen dann im Schritt 704, ob diese Kriterien auf sie zutreffen.

Wenn dies der Fall ist, bewirken die Schlosssteuereinheiten 8, für die die Kriterien zutreffen, im Schritt 705 das Öffnen ihres jeweils zugeordneten Paketfachs. Wenn für den Nutzer beispielsweise Sendungen in mehreren Paketfächern eingestellt wurden, öffnen sich entsprechend alle diese Paketfächer.

Der Nutzer kann dann in einem Schritt 706 die Sendung oder die Sendungen aus dem einen oder den mehreren im Schritt 705 geöffneten Paketfächern entnehmen.

Im Schritt 707 schließt der Nutzer dann alle geöffneten Paketfächer. Dies wird von den jeweils zugeordneten Schlosssteuereinheiten 8 erkannt und jeweils in einer Nachricht "Fach geschlossen" kommuniziert, so dass die Steuereinheit 8 diese Nachricht(en) auswerten kann. Die Nachricht kann jeweils insbesondere die PseudoLockID der jeweiligen Schlosssteuereinheit enthalten.

Die Steuereinheit 8 kann dann in einem Schritt 709 die temporäre Assoziierung zwischen der PseudoLockID und der LockID lösen. Insbesondere wird ein beispielsweise für jede Schlosssteuereinheit 8 separater Befehl "LockID zurücksetzen" im Schritt 710 kommuniziert (beispielsweise an alle Schlosssteuereinheiten 8, oder nur an alle Paketfächern zugeordneten Schlosssteuereinheiten 8), der die PseudoLockID der jeweiligen Schlosssteuereinheit 8, aus der die LockID gelöscht werden soll, enthält. Anhand der jeweiligen PseudoLockID erkennen die den Befehl empfangenden Schlosssteuereinheiten 8, welche von ihnen die Variable TempLockID auf LEER setzen, also die LockID löschen sollen. Nach der Löschung der LockID aus der Variable TempLockID ist das jeweilige Fach wieder frei.

Die Steuereinheit 8 kann anhand der in der Nachricht 708 enthaltenen PseudoLockIDs erkennen, welche Paketfächer geschlossen wurden. Wenn zudem im Schritt 705 diejenigen Schlosssteuereinheiten 8, deren zugeordnete Paketfächer geöffnet wurden, ihre PseudoLockID an die Steuereinheit 8 zurückmelden würden, könnte diese nach Erhalt der Nachrichten des Schritts 708 nachhalten, ob alle geöffneten Paketfächer vom Nutzer geschlossen wurden und den Nutzer zum Schließen aller Fächer auffordern (z.B. über das Anzeigeelement "Alle Fächer schließen" des Anzeigefelds 79 (Fig. 2)), falls dies (noch) nicht der Fall sein sollte.

Damit ist der Vorgang des Abholens von Sendungen durch den Nutzer abgeschlossen. Optional kann der Nutzer dies durch Betätigung der Taste "Vorgang abschließen" des Tastenfelds 78 der Steuereinheit 8 (Fig. 2) explizit zum Ausdruck bringen. Alternativ wird dies beispielsweise angenommen, wenn innerhalb einer vordefinierten Zeitdauer seit der letzten Nutzerinteraktion mit der Fachanlage 1 keine weitere Aktion erfolgt.

Der Prozess der Ermöglichung des Abholens von Sendungen aus der Fachanlage 1 durch den Nutzer gemäß dem Flussdiagramm 700 (Fig. 7) kann optional einem Prozess der Ermöglichung des Einstellens von Sendungen in die Fachanlage 1 durch den Nutzer gemäß dem Flussdiagramm 600 (Fig. 6) vorgeschaltet werden. Dies kann beispielsweise dadurch erzielt werden, dass der Nutzer am Ende des Flussdiagramms 700 (z.B. alternativ zum Schritt 712) die Taste "Paket einlegen" des Tastenfelds 78 der Steuereinheit 8 betätigt. Dann startet beispielsweise der im Flussdiagramm 600 beschriebene Prozess, allerdings beginnend mit Schritt 603. Grundsätzlich ist natürlich auch die umgekehrte Reihenfolge möglich (Prozess des Einstellens durch den Nutzer vor dem Prozess des Abholens durch den Nutzer), allerdings ist die zuvor beschriebene Variante, in der zunächst der Nutzer die Sendungen abholt und dann abzuholende Sendungen einstellt im Hinblick auf die begrenzte Kapazität der Fachanlage zu bevorzugen (erst Entleerung, dann Auffüllung).

Fig. 8 ist ein Flussdiagramm 800 einer beispielhaften Ausführungsform eines Verfahrens gemäß der vorliegenden Erfindung, betreffend die Entnahme von einer oder mehreren durch einen Zusteller in ein Brieffach zugestellten Sendungen (insbesondere Briefen) durch einen Nutzer der Fachanlage 1 (den Empfänger). In der linken Spalte des Flussdiagramms 800 sind dabei wiederum die Schritte aufgeführt, die von der Steuereinheit 7 (oder deren Prozessor 70) ausgeführt werden oder diese betreffen. In der rechten Spalte sind die Schritte aufgeführt, die von der Schlosssteuereinheit 8 des Brieffachs ausgeführt werden oder diese betreffen. Die mittlere Spalte zeigt die Kommunikation zwischen der Steuereinheit 7 und der Schlosseinheit 8, die beispielsweise über einen Bus erfolgt.

Wie bereits zu Fig. 4 erläutert wurde, sind in den Schlosssteuereinheiten, die Brieffächern zugeordnet sind, LockIDs jeweils statisch in die Variable TempLockID geschrieben und werden im Laufe von mehreren Zustellprozessen, an denen ein Brieffach jeweils beteiligt war, nicht gelöscht und dann wieder neu zugewiesen. Dies spiegelt auch das Flussdiagramm 800 wider; nach erfolgter Öffnung des Fachs (Schritt 805) und der Meldung (Schritt 808), dass das Fach wieder geschlossen wurde, erfolgt im Gegensatz zum Flussdiagramm 700 der Fig. 7 keine Löschung der LockID (es gibt also kein Äquivalent zu den Schritten 709-711).

Wenn die Steuereinheit 8 im Schritt 801 eine gültige Zugangsberechtigung mit einer LockID vom Nutzer oder von einem Gerät des Nutzers erhalten hat, was erfolgt wie bereits zum Schritt 701 der Fig. 7 beschrieben wurde, wird in einem Schritt 802 geprüft, ob die Zugangsberechtigungsinformation (beispielsweise aufgrund eines entsprechend gesetzten Elements eines Zugangsberechtigungsparameters "Permissions") zum Öffnen des Brieffachs berechtigt, was beispielsweise zwingende Voraussetzung für die Durchführung der weiteren Verfahrensschritte ist.

In einem Schritt 803 wird dann der Befehl "LockID öffnen" kommuniziert. Dieser Befehl beinhaltet zumindest die LockID und bevorzugt (falls sich diese Information nicht anderweitig aus dem Kontext ergeben sollte) eine Information, dass nur Brieffächer von dem Befehl betroffen sind. Der Befehl wird beispielsweise von allen Schlosssteuereinheiten 8 der Fachanlage 1 empfangen.

Die Schlosssteuereinheiten 8 prüfen dann im Schritt 804, ob es sich bei den ihnen zugeordneten Fächern um Brieffächer handelt (beispielsweise anhand der Variable Fachtyp, siehe Fig. 4) und (ggf. nur dann, wenn dies der Fall ist) ob sie in ihrer Variable TempLockID den Wert der LockID gespeichert haben. Falls diese Bedingungen erfüllt sind, bewirkt die betreffende Schlosssteuereinheit 8 das Öffnen ihres zugeordneten Brieffachs (Schritt 805).

Alternativ kann auch hier wieder ein selektives Ansprechen/Öffnen von zuvor im "Broadcast" abgefragten Schlosssteuereinheiten (die die Kriterien Brieffach und LockID erfüllen) anhand der auf die Abfrage hin gelieferten PseudoLockIDs erfolgen.

Der Nutzer kann dann in einem Schritt 806 den oder die im Brieffach enthaltenen Briefe entnehmen.

Im Schritt 807 schließt der Nutzer dann das Brieffach, was die zugehörige Schlosssteuereinheit 8 dann in einer Nachricht im Schritt 808 kommuniziert. Aus dieser Nachricht kann die Steuereinheit 7 unter der Annahme, dass jedem Nutzer nur ein Brieffach zugeordnet ist, schließen, dass nun alle Brieffächer geschlossen sind und keine weiteren Handlungen erforderlich sind. Wenn es möglich ist, dass einem Nutzer mehrere Brieffächer zugeordnet sind, kann die Steuereinheit 7 eine Prüfung vornehmen, ob tatsächlich alle geöffneten Brieffächer des Nutzers von diesem geschlossen wurden. Diese Prüfung kann beispielsweise erfolgen wir zum Flussdiagramm 700 der Fig. 7 bereits anhand von Paketfächern erläutert wurde.

Der Prozess der Ermöglichung der Entnahme von Sendungen aus Brieffächern gemäß dem Flussdiagramm 800 kann wie erwähnt mit den Prozessen des Flussdiagramms 600 (Fig. 6) und/oder 700 (Fig. 7) verknüpft werden. Beispielsweise finden zunächst die Schritte 801-808 des Flussdiagramms 800 statt, und dann die Schritte 702-711 des Flussdiagramms 700 und/oder die Schritte 602-620 des Flussdiagramms 600, also entweder als Alternativen zueinander oder nacheinander, wobei jegliche Reihenfolge möglich ist, aber die Vorschaltung der Schritte 702-711 vor die Schritte 602-620 den Vorteil haben kann, dass die begrenzte Kapazität der Fachanlage 1 besser ausgenutzt wird.

Fig. 9 ist eine schematische Darstellung einer beispielhaften Ausführungsform eines Zustell- und/oder Abholsystems 9, in dem eine Fachanlage 1 gemäß der Erfindung eingesetzt wird.

Ein derartiges Zustell- und/oder Abholsystem wird beispielsweise von der Anmelderin betrieben und ermöglicht die flächendeckende Zustellung von Sendungen (z.B. Paketen, Päckchen und Briefen) an Nutzer 93 sowie auch die Abholung von Sendungen beim Nutzer 93. In diesem System 9 werden u.a. eine Vielzahl von Zustell- und/oder Abholbehältern 99-1 eingesetzt, die entweder einem Haushalt (bzw. dem Nutzer und seiner Familie) zugeordnet sind, aber auch von einigen Nachbarn mitgenutzt werden können. Ein Beispiel für einen derartigen Zustell- und/oder Abholbehälter 99-1 ist der sog. "Paketkasten" der Anmelderin, der beispielsweise ein Brieffach und ein Paketfach aufweist und sowohl zum Empfangen von Briefen und Paketen als auch zum Abholen von Paketen und Briefen durch den Zusteller 100 eingerichtet ist. Der Paketkasten 99-1 verfügt über ein elektronisches Schloss, über das das Paketfach und das Brieffach (beispielsweise getrennt) geöffnet werden können. Weitere Beispiele für Zustell- und/oder Abholbehälter sind der Paketbutler, Gartenhäuschen, Garagen und Kofferräume und/oder Innenräume von Fahrzeugen, die jeweils mit elektronischen Schlössern versehen sind, so dass sie von einem entsprechend berechtigten Zusteller zumindest entriegelt werden können. Nachfolgend wird der Paketkasten als beispielhafter Vertreter einer Zustell- und/oder Abholbehälters herangezogen, die Erläuterungen gelten aber für die anderen Zustell- und/oder Abholbehälter entsprechend.

Voraussetzung für die Öffnung der Fächer des Paketkastens (und entsprechend für die Aufnahmeräume der weiteren genannten Zustell- und/oder Abholbehälter) sind gültige Zugangsberechtigungen, die in Form von Zugangsberechtigungsinformation von einem Schlüsselserver 90 erzeugt werden und sowohl dem Nutzer 93 auf dessen Zugangsberechtigungsnachweisgerät (z.B. ein Mobiltelefon 91 oder ein NFC- oder RFID-Tag 92) als auch dem Zusteller 100 auf dessen Zugangsberechtigungsnachweisgeräten (z.B. ein Handscanner 98 oder ein NFC- oder RFID-Tag 101) zur Verfügung gestellt werden, damit der Nutzer 93 und der Zusteller 100 gegenüber dem Paketkasten 99-1 als berechtigt zur Öffnung der jeweiligen Fächer ausweisen können.

Eine Zugangsberechtigungsinformation umfasst bei diesem System 9 beispielsweise eine Reihe von Zugangsberechtigungsparametern, die beispielsweise den Umfang und die zeitliche Gültigkeit der Zugangsberechtigungsinformation definieren. Einer der Zugangsberechtigungsparameter ist die Kennung des Schlosses bzw. der Schlosssteuereinheit des Paketkastens 99-1 und wird als LockID bezeichnet. Diese ist fest in der Schlosssteuereinheit des Paketkastens 99-1 gespeichert. Eine an einem Paketkasten 99-1 vorgelegte Zugangsberechtigungsinformation muss zwingend die LockID der Schlosssteuereinheit des Paketkastens 99-1 enthalten, damit aufgrund dieser Zugangsberechtigung Zugang gewährt werden kann (für den Fall, dass auch die übrigen Zugangsberechtigungsparameter in der Zugangsberechtigung anzeigen, dass Zugang in dem gewünschten Umfang gewährt werden darf).

Die Zugangsberechtigungsinformation enthält neben den Zugangsberechtigungsparametern auch eine Prüfinformation, die durch kryptographische Operationen unter Verwendung eines am Schlüsselserver 90 gespeicherten Schlüssels erzeugt wird. Diese Prüfinformation kann basierend auf einem am jeweiligen Paketkasten 99-1 gespeicherten Schlüssel KeyS, der mit dem Schlüssel am Schlüsselserver ein asymmetrisches oder symmetrisches Schlüsselpaar bildet (in letzterem Fall sind beide Schlüssel gleich), von der Schlosssteuereinheit des jeweiligen Paketkastens 99-1 gegengeprüft werden, um sicherzustellen, dass eine am Paketkasten 99-1 vorgelegte Zugangsberechtigungsinformation tatsächlich vom Schlüsselserver 90 erzeugt wurde und bei der Übertragung nicht verändert wurde. Das Schlüsselpaar ist für jeden Paketkasten 99-1 unterschiedlich gewählt, es sind also jeweils die in den Paketkästen 99-1 gespeicherten Schlüssel KeyS sowie die jeweils zugehörigen Schlüssel am Schlüsselserver 90 unterschiedlich.

Die Zugangsberechtigungsinformation für einen Paketkasten 99-1 wird vom Schlüsselserver 90 beispielsweise in regelmäßigen Abständen neu erzeugt, jeweils mit begrenzter Gültigkeitsdauer, und auf den Geräten 91, 92 des Nutzers 93 und den Geräten 98,10 des Zustellers 100 gespeichert. Dabei kann die Zugangsberechtigungsinformation, die auf den Geräten 91, 32 des Nutzers 93 gespeichert ist, eine deutlich längere Gültigkeit aufweisen als die Zugangsberechtigungsinformation, die insbesondere auf dem Handscanner 98 des Zustellers gespeichert wird. Beispielsweise kann die Gültigkeit dieser Zugangsberechtigungsinformation nur einen Tag betragen. Es kann beispielsweise zusätzlich durch Verwendung eines Bereitstellungsservers 96 gewährleistet werden, dass nur die jeweiligen Zugangsberechtigungsinformationen für diejenigen Paketkästen 99-1, für die ein Zusteller an einem Tag Sendungen zuzustellen (und/oder abzuholen) hat, an diesem Tag auf dem Handscanner 98 des Zusteller 100 gespeichert werden.

Gemäß beispielhafter Ausführungsformen der vorliegenden Erfindung wird dieses Zustell- und/oder Abholsystem 9 auf den Einsatz von Fachanlagen 99-2 erweitert, die beispielsweise in Mehrfamilienhäusern eingesetzt werden und dort als Paketfachanlage für mehrere Haushalte des Mehrfamilienhauses oder als kombinierte Brief- und Paketfachanlage für mehrere Haushalte des Mehrfamilienhauses genutzt werden. Eine derartige Fachanlage wird beispielsweise als "Mehrfamilienhaus-Paketkasten" bezeichnet.

Hier bietet es sich an, dass eine Zahl von N Paketfächern der Fachanlage durch M>N Nutzer genutzt werden, da nicht jeder dieser M Nutzer jeden Tag eine zuzustellende oder vom Zusteller abzuholende Sendung haben wird. Dies erfordert eine dynamische Zuweisung von Paketfächern zu Nutzern, was im bestehenden, auf Paketkästen 99-1 mit fest zugewiesenen LockIDs beruhenden System 9 nicht ohne Weiteres möglich ist.

In Ausführungsbeispielen der Erfindung wird u.a. auch zur Lösung dieses Problems vorgeschlagen, dass den Schlosssteuereinheiten der einzelnen Fächer der Fachanlage keine feste LockID zugewiesen wird, sondern die Schlosssteuereinheiten nur eine Variable TempLockID aufweisen, in die die (aus dem auf Paketkästen beruhenden System bekannte) LockID bei Zuweisung des der Schlosssteuereinheit zugeordneten Paketfachs an einen Nutzer nur für die Dauer dieser Zuweisung gespeichert wird. Da die LockID bereits im auf Paketkästen 99-1 beruhenden System mit einem jeweiligen Nutzer assoziiert war (insbesondere einem für den jeweiligen Paketkasten 99-1 registrierten Nutzer), kann dieses Prinzip der Assoziierung auch für die Fachanlage übernommen werden, indem eine Steuereinheit der Fachanlage eine jeweilige LockID (und einen jeweiligen Schlüssel KeyS) für jeden Nutzer der Fachanlage speichert (vgl. Fig. 4) und diese LockIDs dynamisch den Fächern für jeweilige Zustell- und/oder Abholvorgänge zuweist. Aus Sicht des Schlüsselservers 90 besteht damit kein Unterschied hinsichtlich der Erzeugung von Zugangsberechtigungsinformation bei einem Paketkasten 99-1 einerseits und einem Fach eines Mehrfamilienhaus-Paketkastens 99-2 andererseits.

Es ergibt sich damit die in Fig. 9 dargestellte vorteilhafte Konstellation, dass in dem System 9 sowohl Paketkästen 99-1 als auch Mehrfamilienhaus-Paketkästen 99-2 nebeneinander betrieben werden können und dabei die gleiche Infrastruktur und Systematik zur Erzeugung der Zugangsberechtigungsinformation verwendet werden kann.

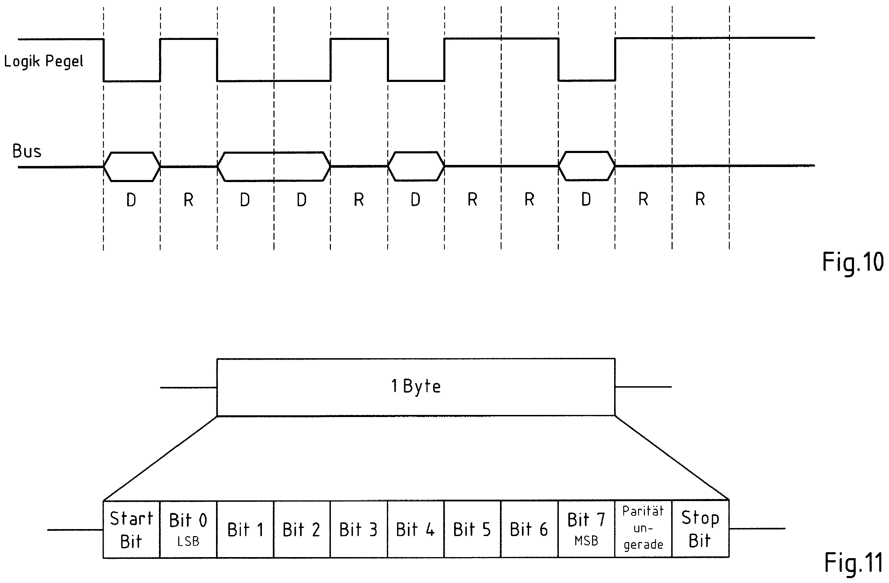

Nachfolgend wird anhand der Fig. 10-16 der erfindungsgemäße Interlock-Data-Bus (ILDB) und dessen Übertragungsprotokoll (umfassend die physikalische Schicht, Datensicherungsschicht, Kommunikationsschicht und Anwendungsschicht) beschrieben. Der ILDB kann beispielsweise anstelle des CAN-Busses zur Verbindung der Schlossmodule 12 / Schlosssteuereinheiten 8 mit der zentralen Steuereinheit 7 der Fachanlage 1 dienen. Der ILDB kann allerdings auch ohne weiteres zur Verbindung andersartiger elektrischer Komponenten untereinander und/oder mit einer Steuereinheit dienen (beispielsweise in Fahrzeugen oder anderen Geräten bzw. Systemen) und soll daher auch losgelöst von dem speziellen Anwendungsfeld der Kommunikation von Schlossmodulen/Schlosssteuereinheiten mit einer zentralen Steuereinheit in einer Fachanlage offenbart verstanden werden.

Der ILDB ist beispielsweise als Multimaster-Bus ausgeführt, bei dem sowohl die Steuereinheit 7 als auch die Schlosssteuereinheiten 8 als Master agieren können. Der ILDB ist beispielsweise auf Collision-Detection und nicht auf Collision-Avoidance-Basis (oder Collision Resolution-Basis) ausgeführt. Dies bringt den Vorteil der Betriebssicherheit auf elektrischer Seite und verhindert undefinierte Buszustände bei Fehlzugriffen.

### 1. Physikalische Schicht

### 1.1 Transceiver

Als physikalische Basis für das ILDB-Bussystem wird das Bustreiberkonzept des CAN-Busses verwendet. Dieses Bussystem bietet den Vorteil einer differenziellen und störsicheren Datenübertragung. Diese symmetrische Datenübertragung kann, bei langsamen Datenraten, schirmfrei ausgeführt werden. Zusätzlich bietet dieses Bussystem den Vorteil der Kollisionsfestigkeit, so dass es bei gleichzeitigem Zugriff von mehreren Teilnehmern zu keinen ungewollten Querströmen kommt. Beispielsweise wird ein herkömmlicher CAN-Bus-Transceiver eingesetzt, um Bits in elektrische, über die physikalische Leitung (beispielsweise eine Zweidraht- oder Dreidraht-Leitung) zu übertragende Signale umzuwandeln.

Die Verkabelung kann aufgrund des modularen und flexiblen Aufbaus beispielsweise nicht als ideale Busstruktur ausgeführt werden. Sie gleicht beispielsweise eher einer Baumstruktur. Um die elektrischen Reflexionen auf den Stichleitungen zu minimieren, werden beispielsweise die Datenrate und die Signalanstiegszeit auf ein Minimum reduziert. Das so entstehende niedrige Frequenzspektrum, erzeugt in Bezug auf die sehr kurze Leitungslänge des Busses, nur noch unerhebliche Reflexionspegel, die keine Beeinträchtigung für die Datenübertragung darstellen.

Ebenso kann beispielsweise die Terminierung nicht an beiden Enden erfolgen, wie in einem herkömmlichen Bussystem. Die Terminierung erfolgt beispielsweise mittels 1200hm an der Steuereinheit 7 und mittels 8,25 kOhm an jeder Schlosssteuereinheit 8. Dies ergibt 128 Ohm bei einem beispielhaften Maximalausbau von 64 Schlössern. Dadurch ist keine zusätzliche Terminierung erforderlich.

Bei der Übertragung mittels des CAN-Bus-Transceivers werden die Logikpegel High und Low der Datenübertragung als rezessive und dominante Pegel auf dem Bus abgebildet, wie es in Fig. 10 dargestellt ist (dabei steht "D" für dominant (z.B. Spannungsdifferenz von 0,5-3,0 V) und "R" für rezessiv (z.B. Spannungsdifferenz kleiner 100 mV)). Logische High-Signale werden als rezessive Bus-Pegel und logische Low-Signale als dominante Bus-Pegel abgebildet. Der Unterschied dieser beiden Pegel besteht darin, dass ein dominanter Pegel am Bus einen rezessiven Pegel am Bus übersteuern kann. Senden nun zwei Busteilnehmer zur gleichen Zeit, so werden die rezessiven Pegel des einen Senders von den dominanten Pegeln des anderen Senders überschrieben. Dieses Verhalten wird zur Kollisionserkennung beim Senden verwendet.

### 1.2 Protokoll

Aus Kostengründen der elektronischen Komponenten, wird beim ILDB nicht das CAN-Übertragungsprotokoll verwendet. Stattdessen wird das Kommunikationsprotokoll für den ILDB mittels UART gebildet. UART ist eine elektronische Schaltung, die zur Realisierung digitaler serieller Schnittstellen dient. Die Schaltung ist beispielsweise als eigenständiges elektronisches Bauelement (z.B. ein UART-Chip bzw. -Baustein) oder als Funktionsblock eines höherintegrierten Bauteils (z. B. eines Mikrocontrollers)implementiert. Eine UART-Schnittstelle dient insbesondere zum Senden und Empfangen von Daten über eine Datenleitung und bildet den Standard der seriellen Schnittstellen beispielsweise an PCs und Mikrocontrollern. Auch im industriellen Bereich ist die Schnittstelle mit verschiedenen Interfaces (z. B. RS-232 oder EIA-485) sehr verbreitet. Die Daten werden als serieller digitaler Datenstrom mit einem fixen Rahmen übertragen, der aus einem Start-Bit, fünf bis maximal neun Datenbits (im vorliegenden Fall beispielsweise acht Datenbits), einem optionalen Parity-Bit zur Erkennung von Übertragungsfehlern und einem Stopp-Bit besteht.

Die Datenübertragung erfolgt also nicht bit-weise wie beim CAN-Bus, sondern immer in 8 bit-Paketen mit jeweils einem Startbit, einem Paritätsbit und einem Stoppbit, wie in Fig. 11 dargestellt. Beispielsweise einzig bei der Busarbitrierung wird der Bus mit einer Flankenerkennung abgetastet, da hier kurze Zeiten vermehrte Fehlzugriffe verhindern und somit die Buslast gesenkt wird.

Zur Kollisionsprüfung wird jedes gesendete Byte vom Sender gleichzeitig wieder empfangen und mit dem gesendeten Wert verglichen. Wird hier ein Unterschied erkannt, bricht der Sender den Sendeversuch ab und startet einen erneuten Sendeversuch, wenn der Bus wieder als frei erkannt wird. Um Datenübertragungsfehler frühzeitig zu erkennen, wird mit jedem gesendeten Byte ein Paritätsbit übertragen, das eine ungerade Parität mit logisch 1 darstellt. Diese Fehlererkennung dient nur der einfachen und schnellen Erkennung von Übertragungsfehlern.

Der ILDB unterscheidet sich also physikalisch, bezogen auf die elektrischen Pegel, nicht vom CAN-Bus. Insbesondere kann der gleiche Transceiver und/oder die gleiche Leitung verwendet werden. Allerdings gestaltet sich die Signalübertragung im Zeitbereich (also das Bit-Timing) sowie die Arbitrierung der Busteilnehmer etwas anders. Hier wird nicht mit der Bitfolge von CAN gearbeitet, sondern mit der des UART. CAN sieht beispielsweise im Protokoll Stuff-Bits und Acknowledge-Bits vor, die es im ILDB beispielsweise nicht geben muss. Ebenso unterscheidet sich der Aufbau einer Nachricht. CAN verwendet beispielsweise im Protokoll angepasste Feldlängen mit unterschiedlichen Bit-Längen, die nicht Byte-orientiert sind. Beim ILDB Protokoll sind beispielsweise alle Feldlängen an Bytes ausgerichtet, da der UART beispielsweise nur 8 Bit lange Datensequenzen verarbeiten kann. Das im ILDB verwendete Datenprotokoll weist Ähnlichkeiten zu RS485 (EIA-485) auf, mit dem Unterschied, dass der ILDB beispielsweise eine aktive Arbitrierung mit Collision Detection verwendet und mit andren elektrischen Signalen (CAN) arbeitet. Die einzelnen Busteilnehmer müssen beim ILDB nicht voradressiert werden, wie es bei RS485 und CANopen üblich oder erforderlich sein kann.

Im Gegensatz zum CAN-Protokoll, das im Wesentlichen nachrichtenbasiert arbeitet (beispielsweise mit Nachrichten-lDs), erlaubt der ILDB ein teilnehmerbasiertes Arbeiten (beispielsweise mit Teilnehmer-IDs, wie nachfolgend noch genauer erläutert wird). Beim ILDB ist jede Nachricht beispielsweise an einen (Unicast-Nachricht) oder mehrere (Broadcast-Nachricht) bestimmte Teilnehmer gerichtet, die beispielsweise nach Erhalt einer Nachricht eine Rückantwort senden müssen. Dadurch ist es möglich, gezielt einen Teilnehmer (z.B. eine Schlosssteuereinheit) anzusprechen.

### 2. Datensicherungsschicht

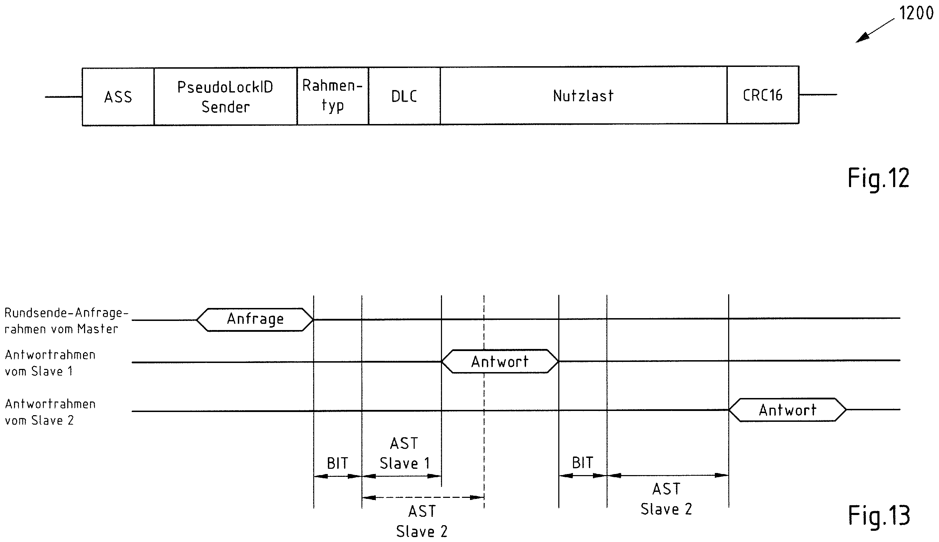

Die Datenübertragung auf dem ILDB erfolgt in einzelnen Nachrichtenobjekten. Jedes dieser Objekte 1200 setzt sich wie in Fig. 12 dargestellt zusammen (die Länge des Nachrichtenobjekts 1200 kann beispielsweise 13...64 Bytes umfassen). Die Bestandteile eines Nachrichtenobjekts 1200 werden nachfolgend einzeln beschrieben. Es sei an dieser Stelle angemerkt, dass das Nachrichtenobjekt 1200 nicht notwendig an den ILDB gebunden ist und auch auf anderen Bus-Typen zur Informationsübertragung eingesetzt werden kann.

### 2.1 ASS (Arbitration-Sync-Symbol)

Dieses Symbol wird beispielsweise vom ersten gesendeten Byte gebildet und dient der Arbitrierung der Sender. Dieses Byte wird beispielsweise mittels eines Bit-Shift aus einer bestimmten Anzahl Bits der sendereigenen PseudoLockID gebildet. Durch diese Bit-Maske ist es möglieh, bei gleichzeitigem Senden von zwei oder mehr Teilnehmern, zu einem sehr frühen Zeitpunkt eine Kollision auf dem Bus zu erkennen. Das Symbol ASS bildet die zweite von drei Arbitrierungsmaßnahmen. Außerdem kann dieses Symbol ASS so beschaffen sein, das nur der Teilnehmer mit der höheren PseudoLockID den Sendeversuch abbricht und der Sender mit der niedrigeren PseudoLockID am Bus verbleibt und seinen Sendeversuch abschließen kann.

### 2.2 PseudoLockID-Sender

Als zweites Element im Nachrichtenobjekt 1200 wird beispielsweise die PseudoLockID des Senders übertragen. Diese PseudoLockID ist beispielsweise eine eindeutige Kennung jedes Busteilnehmers. Diese Kennung besteht beispielsweise aus acht Byte. Sie wird beispielsweise aus der eindeutigen CPU-ID des Halbleiterherstellers (beispielsweise des Prozessors 70 der Steuereinheit bzw. des Prozessors 80 der Schlosssteuereinheit 8) mittels eines Hash-Codes abgeleitet. Diese PseudoLockID dient als dritte von drei Arbitrierungsmaßnahmen. Sollten die beiden vorhergehenden Arbitrierungsmaßnahmen bei mehr als einem Teilnehmer am Bus gleich sein (da diese Maßnahmen nur mit verkürzten Kennung bzw. Funktionen der verkürzten Kennungen arbeiten), so entscheidet die PseudoLockID, welcher der beiden Teilnehmer am Bus bleibt. Außerdem liefert dieses Feld die Absenderadresse, die z.B. für die Rückantwort des Empfängers benötigt wird.

### 2.3 Rahmentyp (Frame Type)

Dieses Feld besteht beispielsweise aus einem Byte und gibt den Nachrichtentyp an. Es gibt sechs verschiedene Nachrichtentypen:
- Request = gezielte Anfrage an einen Busteilnehmer
- Broadcast-Request = Anfrage an alle Busteilnehmer
- Response ACK = Rückmeldung auf Anfrage: Bestätigung
- Response NACK = Rückmeldung auf Anfrage: Ungültig
- Response CANCEL = Rückmeldung auf Anfrage: wird nicht unterstützt
- Broadcast-Response = Rückmeldung auf Anfrage aller Busteilnehmer

### 2.4 DLC (Data-Length-Count)

Dieses Feld gibt die Länge des Payload Feldes in Bytes an. Das DLC-Feld hat beispielsweise eine Länge von einem Byte.

### 2.5 Nutzlast (Payload)

In diesem Feld werden die Nutzdaten der Nachricht übertragen. Dieses Feld kann beispielsweise eine Länge von 0...50 Bytes besitzen.

### 2.6 CRC16

Dieses Feld bildet die Prüfsumme für die übertragene Nachricht. Die Länge beträgt beispielsweise zwei Byte. Sie wird von jedem Sender berechnet und mitgesendet. Beispielsweise nutzt jeder Empfänger diese Prüfsumme zur Fehlerüberprüfung der Nachricht.

### 2.7 BIT und AST

Um gleichzeitige Buszugriffe von mehreren Busteilnehmern zu vermeiden, gibt es beispielsweise definierte Zugriffsregeln, die jeder Busteilnehmer einhalten muss. Diese Regelung besteht in der Erkennung des freien Busses. Es kann beispielsweise gefordert werden, dass, erst wenn der Bus von einem Teilnehmer als frei erkannt wird, dieser als Sender seine Daten auf dem Datenbus übertragen darf.

Um dies zu regeln, gibt es beim ILDB beispielsweise eine definierte Datenlücke, die als Bus-Idle-Time oder kurz BIT bezeichnet wird. Diese BIT-Zeit ist beispielsweise eine konstante Zeit, die jeder Teilnehmer nach Abschluss der zuletzt empfangenen Nachricht abwarten muss, bevor er den ILDB als frei erkennt.

Will ein Busteilnehmer Daten senden, so muss er beispielsweise zusätzlich die AST (Arbitration-Sync-Time) abwarten, bevor er sein erstes Datenbyte auf den Bus legt. Die AST ist ein Zeitfenster, das bei jedem Busteilnehmer beispielsweise unterschiedlich lang ist. Sie wird gebildet aus den unteren 8 Bit der eindeutigen PseudoLockID. Die AST bildet die erste der drei Arbitrierungsmaßnahmen zwischen den Teilnehmern. Es sendet immer der Busteilnehmer mit der kleinsten AST als erster. In diesem Moment erkennen die anderen Busteilnehmer, dass der Bus belegt ist und wechseln in den Empfänger-Mode. Erst wenn wieder alle Teilnehmer den Bus als frei erkennen, kann der nächste Teilnehmer senden. Dies ist in Fig. 13 schematisch dargestellt.

Durch diesen Mechanismus und die vorher beschriebenen Maßnahmen ergeben sich drei Kriterien für die Busarbitrierung:
1. AST = teilnehmerspezifisches Zeitfenster für das Senden von Daten
2. ASS = teilnehmerspezifisches Datensymbol, das als erstes Byte gesendet wird
3. PseudoLockID = eindeutige Teilnehmer-ID die am Nachrichtenanfang gesendet wird

Durch diese drei Maßnahmen, kombiniert mit der Kollisionsstabilität des CAN-Busübertragungsverfahrens und der eindeutigen CPU-ID des Halbleiterherstellers, ist eine sichere Kommunikation mit allen Busteilnehmern sichergestellt, ohne diese vorher konfigurieren zu müssen.

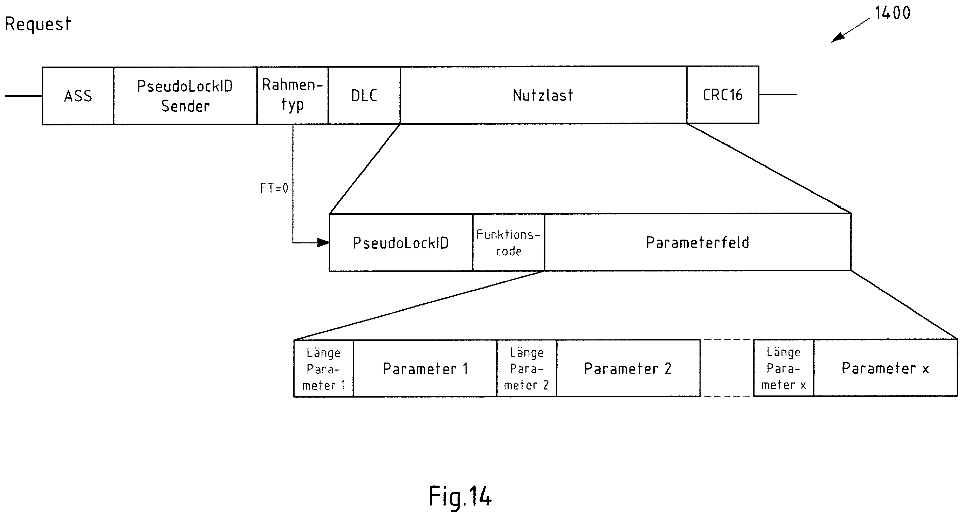

Unter Bezugnahme auf die Fig. 14-16 wird nun das Protokoll auf der oberhalb der Datensicherungsschicht angesiedelten Kommunikationsschicht beschrieben, wie das Nutzlast-Feld des Nachrichtenobjekts 1200 der Fig. 12 jeweils strukturiert sein kann. Auch für diese Spezifizierung des Nutzlast-Felds gilt, dass sie nicht an den ILDB gebunden ist und ebenso auch auf anderen Bus-Typen zum Einsatz kommen kann.

### 3. Kommunikationsschicht

### 3.1 Request (Anfragenachricht)

Um die Nachrichten gezielt auf dem ILDB an einen Teilnehmer zu senden, wird das Nutzlast-Feld der Nachricht 1200 (siehe Fig. 12) wie in Fig. 14 gezeigt strukturiert. Folgende Elemente sind in dieser Anfragenachricht 1400 vorhanden:
PseudoLockID-Empfänger: Eindeutige PseudoLockID des Empfängers, an den die Anfrage gerichtet ist. Dieses Feld hat eine Länge von beispielsweise acht Byte.
Funktionscode: Definierter Funktionscode der auszuführenden Funktion im Empfänger (Schlosssteuereinheit).
Parameterfeld: Dieses Feld beinhaltet die Funktionsparameter für die angeforderte Funktion. Die Parameter werden beispielsweise immer mit Längenangabe in Bytes und Parameterwert aneinander gereiht eingetragen. Das Parameterfeld kann 0..x Funktionsparameter enthalten. Die Anzahl der Parameter ist über den entsprechenden Funktionscode (implizit) definiert.

### 3.2 Response (Antwortnachricht)

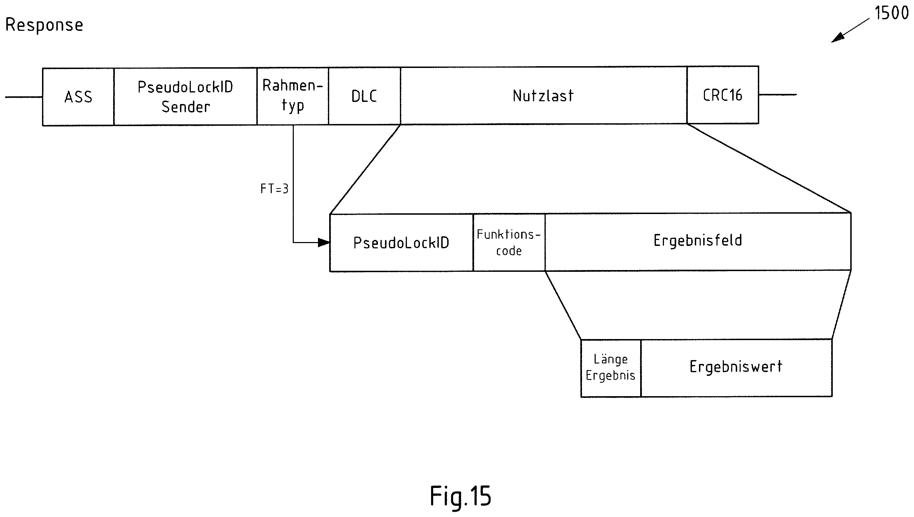

Jede Anfrage wird vom zugehörigen Empfänger empfangen, abgearbeitet und mit einer Antwortnachricht 1500 quittiert. Die Antwortnachricht 1500 ist aufgebaut wie in Fig. 15 gezeigt, mit folgenden Elementen:
PseudoLockID Empfänger: PseudoLockID des Empfängers, der in diesem Fall als Sender der Antwortnachricht agiert.
PseudoLockID Sender: PseudoLockID des Senders, der die Anfrage gesendet hat.
Funktionscode: Definierter Funktionscode der angefragten und ausgeführten Funktion. Wird der angegebene Funktionscode vom Empfänger nicht unterstützt, so wird eine Antwortnachricht vom Typ Response CANCEL zurückgesendet. Nur wenn die Funktion korrekt ausgeführt werden konnte, wird eine Antwortnachricht vom Typ Response ACK zurückgesendet. Konnte die Funktion aufgrund falscher Parameter oder anderen Gründen nicht ausgeführt werden, so wird eine Response-NACK-Antwort zurückgesendet.
Ergebnisfeld: Dieses Feld enthält den Funktionsrückgabewert. Dieser Wert wird mit der Längenangabe in Byte in dieses Feld eingetragen. Ist kein Rückgabewert vorhanden (nicht jede Funktion liefert einen Wert zurück), so wird beispielsweise nur das Längenbyte mit 0 zurückgegeben.

### 3.3 Broadcast-Request (Rundsende-Anfragenachricht)

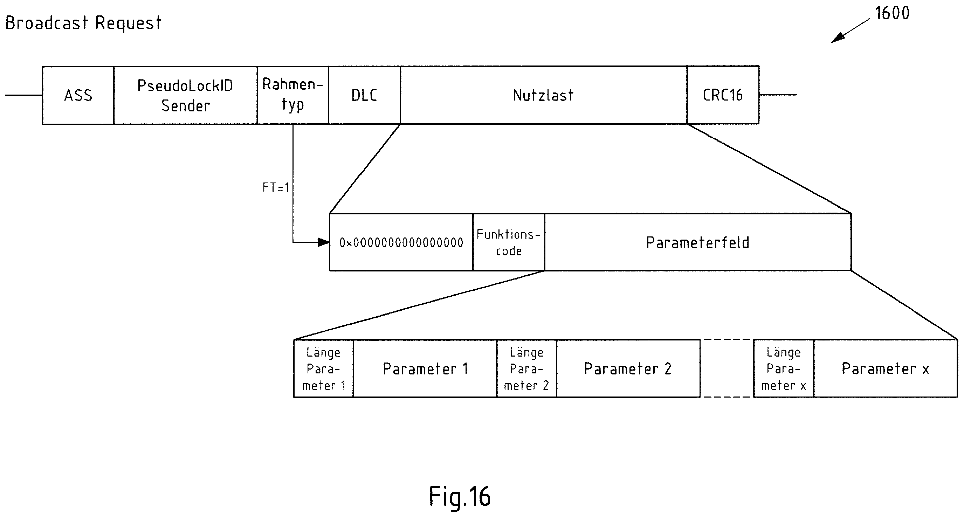

Zusätzlich zu den direkt adressierten Anfragen können auf dem ILDB auch allgemeine Anfragen an alle Busteilnehmer gesendet werden. Diese sogenannten Broadcast-Request-Nachrichten 1600 sind wie in Fig. 16 gezeigt strukturiert. Der Aufbau dieser Anfrage ist mit Ausnahme der Empfänger-ID identisch aufgebaut, wie die Request-Nachricht 1400 aus Fig. 14. Da hier der Empfänger nicht bekannt ist, wird die Empfänger-ID auf Null gesetzt.

### 3.4 Broadcast-Response-Nachricht (Rundsende-Antwortnachricht)

Erhält einer oder mehrere Empfänger eine passende Broadcast-Request-Nachricht, so wird diese mit einer Broadcast-Response-Nachricht quittiert. Diese Antwort ist im Aufbau identisch zur normalen Antwortnachricht 1500 der Fig. 15 und daher nicht in einer eigenen Fig. dargestellt. Allerdings werden hier nur Response-ACK-Antworten von den Teilnehmern zurückgesendet. Teilnehmer, die die Anfrage nicht bearbeiten können, senden in diesem Fall keine Antwort zurück. Dieses Verhalten wurde gewählt um die Zugriffzeit auf dem ILDB so kurz als möglich zu halten und nicht den Bus mit unnötigen Nachrichten zu belasten.

### 4. Anwendungsschicht

Die Schlosssteuereinheit 8 unterstützt verschiedene Funktionen, die von der Steuereinheit 7 ausgelöst werden können. Jede Funktion hat einen festdefinierten Funktionscode mit einer definierten Anzahl an Parametern und Rückgabewerten, wie oben bereits zu den Fig. 14-16 erläutert wurde.

Nachfolgend werden Beispiele für diese Funktionen erläutert. Diese Funktionen sind nicht auf die Verwendung im Zusammenhang mit dem ILDB beschränkt, sondern können ebenso über einen CAN-Bus oder einen anderen Bus übertragen werden.

### 4.1 GET_PSEUDO_LOCK_ID

Diese Funktion wird von der Steuereinheit 7 benutzt, um die PseudoLockID eines oder mehrerer Schlosssteuereinheiten 8 zu erhalten. Da die Fachanlage betriebsfähig ist, ohne die Fachkonfiguration einstellen zu müssen, kennt die Steuereinheit 7 im ersten Moment keine Fächer der Fachanlage 1. Durch diese Funktion kann die Steuereinheit 7 gezielt Fächer suchen, die bestimmte Kriterien erfüllen. Erfüllt ein oder mehrere Schlosssteuereinheiten die gesuchten Kriterien, so melden diese ihre PseudoLockID zurück und können von da an direkt von der Steuereinheit 7 angesprochen werden. Dies kann beispielsweise auch im Schritt 703 der Fig. 7 genutzt werden, um zunächst die PseudoLockID der Schlosssteuereinheit zu identifizieren, die den Wert LockID als TempLockID gespeichert hat, und dann, beispielsweise mit der unten beschriebenen Funktion OPEN_BOX die so identifizierte Schlosssteuereinheit direkt mit der PseudoLockID anzusprechen.

Die Funktion hat folgende Charakteristika:
Nachrichtentyp: Broadcast-Request
Funktionscode: 1
Parameter 1: ParameterType
Parameter 2: ParameterValue
Parameter 3: ComparisonType
Rückgabewert: Keiner

Der Parameter ParameterType gibt die Position in der Parametertabelle der Schlosssteuereinheit an, deren Wert geprüft werden soll. In dieser Parametertabelle sind beispielsweise alle schlossrelevanten Parameter, wie z.B. TempLockID, Fachtyp, Fachzustand, Userlnput, Open-Count, etc. enthalten (eine Untermenge dieser Parameter ist für die Schlosssteuereinheiten eines Brieffachs und Paketfachs beispielsweise in Fig. 4 dargestellt). Jeder Parameter hat eine feste Position (0...x) innerhalb dieser Tabelle. Der Parameter ParameterType gibt diese Position an. Innerhalb der Software ist diese Position beispielsweise als common enum definiert, so dass hier keine Zahlenwerte übergeben werden müssen.

Der ParameterValue gibt den Wert an, auf den der selektierte Parameter aus der Tabelle überprüft wird.

Der ComparisonType gibt die Art des Vergleichs an, mit dem der selektierte Parameter mit dem Wert verglichen wird, also beispielsweise größer, größer gleich, kleiner, kleiner gleich, gleich, ungleich, etc. Auch dieser Wert ist in der Software beispielsweise als common enum abgelegt, so dass hier mit Abstraktionen gearbeitet werden kann.

Erfüllt eine Schlosssteuereinheit die gewünschten Kriterien, so sendet diese Schlosssteuereinheit eine Antwortnachricht vom Typ Response-ACK ohne Funktionsrückgabewert. In der Antwortnachricht ist dann die PseudoLockID des Schlosses enthalten.

### 4.2 GET_TEMP_LOCK_ID

Diese Funktion wird von der Steuereinheit 7 benutzt, um Fächer zu suchen, die einer bestimmten TempLockID zugewiesen sind, sprich die einem bestimmten Nutzer zugewiesen sind (also deren TempLockID auf den Wert einer LockID eines Nutzers gesetzt ist). Als Filterkriterium gibt es hier nur einen Parameter. Mit diesem kann ausgewählt werden, ob nur zugewiesene Paketfächer, nur zugewiesene Brieffächer oder alle zugewiesenen Fächer zurückgemeldet werden sollen. Dies kann beispielsweise im Schritt 703 der Fig. 7 genutzt werden, um zunächst die PseudoLockID der Schlosssteuereinheit zu identifizieren, die den Wert LockID als TempLockID gespeichert hat, und dann, beispielsweise mit der unten beschriebenen Funktion OPEN_BOX die so identifizierte Schlosssteuereinheit direkt mit der PseudoLockID anzusprechen.

Die Funktion hat folgende Charakteristika:
Nachrichtentyp: Broadcast-Request
Funktionscode: 2
Parameter 1: TempLockID
Parameter 2: BoxSelect
Rückgabewert: DoorOpenCount

Der Parameter TempLockID gibt die TempLockID (bzw. LockID) des Nutzers an, zu dem die Schlosssteuereinheiten zugewiesen sein müssen.

Der Parameter BoxSelect kann als Filter benutzt werden, wenn zum Beispiel nur das Brieffach, nur das Paketfach oder beide Fächer des gewünschten Nutzers gesucht werden.

Erfüllt eine Schlosssteuereinheit die gewünschten Kriterien, so meldet es sich mit einer Antwortnachricht vom Typ Response-ACK zurück. Als Rückgabewert wird der aktuelle Öffnungszähler der Schlosssteuereinheit zurückgegeben.

### 4.3 GET_EMPTY_BOX

Diese Funktion kann von der Steuereinheit 7 benutzt werden, um leere Fächer eines bestimmten Typs zu suchen (vgl. z.B. Schritt 510 in Fig. 5 od. Schritt 604 in Fig. 6). Mit dem Parameter wird angegeben, welcher Fachtyp gesucht wird. Alle Schlosssteuereinheiten, deren Fächer keine Pakete enthalten und dem gesuchten Fachtyp entsprechen, melden sich auf diese Anfrage zurück. Zusätzlich wird hier der Öffnungszähler des Faches mit zurückgeliefert, um der Steuereinheit 7 eine Selektion anhand der Öffnungshäufigkeit zu ermöglichen (beispielsweise um Verschleiß zu vermeiden).

Die Funktion hat folgende Charakteristika:
Nachrichtentyp: Broadcast-Request
Funktionscode: 3
Parameter 1: BoxType
Rückgabewert: DoorOpenCount

Der Parameter BoxType selektiert den Fachtyp (z.B. Größe S,, M, L, XL, Brieffach, etc.), von dem leere Fächer gesucht werden. Dieser Parameter ist in der Software beispielsweise als common enum definiert und kann über die Abstraktion verwendet werden.

Alle leeren Fächer des gesuchten Fachtyps melden sich mit einer Antwortnachricht vom Typ Response-ACK zurück. Zusätzlich geben die Fächer ihren aktuellen Öffnungszähler als Rückgabewert zurück. Jede Schlosssteuereinheit zählt seine Öffnungen mit, die es ab Zeitpunkt der Produktion ausführt. Dieser Zähler kann nicht gelöscht werden.

### 4.4 SET_TEMP_LOCK_ID

Diese Funktion kann von der Steuereinheit 7 benutzt werden, um ein bestimmtes Fach einem Nutzer zuzuweisen (vgl. z.B. Schritt 523 in Fig. 5 od. Schritt 617 in Fig. 6). Diese Funktion schreibt die gesendete LockID in den nichtflüchtigen Speicher (TempLockID) der Schlosssteuereinheit und weist es somit einem Nutzer zu.

Die Funktion hat folgende Charakteristika:
Nachrichtentyp: Request
Funktionscode: 4
Parameter 1: LockID
Parameter 2: CMAC
Rückgabewert: Keiner

Der Parameter LockID gibt die LockID des Nutzers an, dem die Schlosssteuereinheit (und damit ein Fach) zugewiesen werden soll.

Hat die Schlosssteuereinheit die LockID als TemplockID gespeichert, sendet sie eine Antwortnachricht vom Typ Response-ACK zurück. Konnte die LockID nicht gespeichert werden, so sendet die Schlosssteuereinheit eine Antwort vom Typ Response-NACK zurück.

Der Parameter CMAC dient der Validierung für einen autorisierten Zugriff auf die Schlosssteuereinheit. Dieser AES128 CMAC wird über einen speziellen Schlüssel berechnet und mit gesendet. Die Schlosssteuereinheit wiederholt diese Berechnung und vergleicht die beiden Werte. Nur wenn beide Werte übereinstimmen wird die neue LockID in die TempLockID übernommen.

### 4.5 CLR_TEMP_LOCK_ID

Diese Funktion kann von der Steuereinheit 7 genutzt werden, um ein bestimmtes, einem Nutzer zugewiesenes Fach wieder frei zu geben (vgl. z.B. Schritt 710 der Fig. 7). Diese Funktion löscht die eingetragene TempLockID einer Schlosssteuereinheit und markiert es somit als leer.

Die Charakteristika sind:
Nachrichtentyp: Request
Funktionscode: 5
Parameter 1: CMAC
Rückgabewert: keiner

Hat die Schlosssteuereinheit die TemplocklD gelöscht, sendet es eine Antwortnachricht vom Typ Response-ACK zurück. Konnte die TempLockID nicht gelöscht werden, so sendet das Schlosssteuereinheit eine Antwort vom Typ Response-NACK zurück.

Der Parameter CMAC dient wiederum der Validierung für einen autorisierten Zugriff auf die Schlosssteuereinheit, wie oben bereits erläutert wurde.

### 4.6 GET_VALUE

Diese Funktion kann von der Steuereinheit 7 benutzt werden, um einen oder mehrere Parameter aus der Parametertabelle der Schlosssteuereinheit zu lesen (z.B. im Schritt 503 der Fig. 5, um zunächst die PseudoLockIDs der Schlosssteuereinheiten mit UserInputs=TRUE zu bestimmen und dann diese Schlosssteuereinheiten mit dem Befehl OPEN_BOX (s.u.) gezielt anzusprechen), mit folgenden Charakteristika:
Nachrichtentyp: Request
Funktionscode: 6
Parameter 1: FirstParameter
Parameter 2: NumberOfParameters
Rückgabewert: Parameterliste

Der Parameter FirstParameter gibt die Position des ersten zu lesenden Parameters in der Parametertabelle des Schlosssteuereinheit an.

Der Parameter NumberOfParameters gibt die Anzahl der Parameter an, die aus der Parametertabelle des Schlosssteuereinheites, beginnend von FirstParameter, gelesen werden sollen.

Die Schlosssteuereinheit sendet eine Antwortnachricht vom Typ Response-ACK zurück. Als Rückgabewert werden alle Parameter, ohne Trennung als Liste zurückgesendet. Befinden sich die Parameter FirstParameter oder NumberOfParameters nicht im gültigen Bereich, so wird eine Antwortnachricht vom Typ Response-NACK gesendet.

### 4.7 SET_VALUE

Diese Funktion kann von der Steuereinheit 7 benutzt werden, um einen Wert in der Parametertabelle der Schlosssteuereinheit zu ändern (z.B., um zu bewirken, dass im Schritt 618 der Fig. 6 der Wert "UserInputs" auf True gesetzt wird). Diese Funktion kann nur auf die Parameter angewandt werden, die in der Schlosssteuereinheit mit Schreibzugriff freigegeben sind.

Die änderbaren Parameter liegen beispielsweise auf vorbestimmten Positionen. Alle anderen Parameter haben beispielsweise nur Lesezugriff.

Die Funktion hat folgende Charakteristika:
Nachrichtentyp: Request
Funktionscode: 7
Parameter 1: ParameterType
Parameter 2: ParameterValue
Parameter 3: CMAC
Rückgabewert: Keiner

Der Parameter ParameterType gibt die Position in der Parametertabelle der Schlosssteuereinheit an, dessen Wert geschrieben werden soll. Innerhalb der Software ist diese Position beispielsweise als common enum definiert, so dass hier keine Zahlenwerte übergeben werden müssen.

Der Parameter ParameterValue gibt den Wert an, der in den selektierten Parametern der Tabelle geschrieben wird.

Der Parameter CMAC dient wiederum der Validierung für einen autorisierten Zugriff auf die Schlosssteuereinheit, wie bereits erläutert wurde.

Konnte die Schlosssteuereinheit den neuen Wert schreiben, dann sendet es eine Antwortnachricht vom Typ Response-ACK zurück. Konnte der Parameter nicht geschrieben werden, so sendet die Schlosssteuereinheit eine Antwort vom Typ Response-NACK zurück.

### 4.8 OPEN_BOX

Diese Funktion kann von der Steuereinheit 7 benutzt werden, um ein bestimmtes Fach zu Öffnen (vgl. z.B. den Schritt 517 der Fig. 5). Hierzu wird das Fach mit der PseudoLockID adressiert angesprochen. Diese Funktion startet den Öffnungsprozess der Schlosssteuereinheit. Der Abschluss des Öffnungsprozesses wird über die Änderung des Fachzustandes von der Schlosssteuereinheit separat zurückgemeldet, da der Öffnungsprozess mehrere Sekunden dauern kann.

Die Funktion hat folgende Charakteristika:
Nachrichtentyp: Request
Funktionscode: 8
Parameter 1: CMAC
Rückgabewert: Keiner

Der Parameter CMAC dient wiederum der Validierung für einen autorisierten Zugriff auf die Schlosssteuereinheit, wie bereits erläutert wurde.

Wenn die Schlosssteuereinheit den Öffnungsprozess gestartet hat, sendet es eine Antwortnachricht vom Typ Response-ACK zurück Konnte der Prozess aufgrund falscher Parameter nicht gestartet werden, so wird als Antwortnachricht Response-NACK zurückgesendet.

### 4.9 STAY_BOX_OPEN

Diese Funktion kann von der Steuereinheit 7 benutzt werden, um ein bereits geöffnetes Fach zu blockieren, so dass dies nicht mehr geschlossen werden kann (also beispielsweise die Verriegelung elektronisch zu deaktivieren, wie es beispielsweise oben zu Schritt 804 der Fig. 8 beschrieben wurde). Voraussetzung für die Aktivierung dieser Funktion ist, dass die Fachtür geöffnet ist. Ansonsten wird die Funktion nicht ausgeführt, da dies zum ungewollten Öffnen der Fachtür führen würde. Bei Ausfall der Stromversorgung, bzw. nach Abschaltung der Schlösser wird diese Funktion beispielsweise automatisch deaktiviert.

Die Funktion hat folgende Charakteristika:
Nachrichtentyp: Request
Funktionscode: 9
Parameter 1: Enable
Rückgabewert: Keiner

Der Parameter Enable schaltet die Türoffenhaltefunktion ein oder aus. Wird hier der Wert 1 übergeben, so ist die Funktion aktiviert. Wird als Wert 0 gesendet, so wird die Funktion deaktiviert.

Wenn die Schlosssteuereinheit eine Antwortnachricht vom Typ Response-ACK zurücksendet, gilt Enable = 1 und die Tür ist geöffnet. Ist Enable = 0, so wird immer eine Antwortnachricht vom Typ Response-ACK zurückgesendet. Wird Enable = 1 gesendet und die Tür ist nicht offen oder die Schlosssteuereinheit befindet sich in einem Fehlerzustand, dann wird die Antwortnachricht Response-NACK zurückgesendet.

### 4.10 SET_BOX_TYPE

Diese Funktion wird beispielsweise bei der Produktion verwendet, um den Fachtyp in die Schlosssteuereinheit zu schreiben. Diese Information wird beispielsweise nur beim Bandende-Test in der Produktion geschrieben.

Die Funktion hat folgende Charakteristika:
Nachrichtentyp: Request
Funktionscode: 10
Parameter 1: BoxType
Rückgabewert: Keiner

Der Parameter BoxType gibt wiederum den Fachtyp an, auf den die Schlosssteuereinheit konfiguriert werden soll. Beispiele für Fachtypen wurden oben bereits genannt. Der Wert wird beispielsweise nichtflüchtig in der Schlosssteuereinheit abgespeichert. Dieser Parameter wird in der endgültigen Version der Firmware beispielsweise als OTP (one time programable) Parameter ausgeführt.

Wenn die Schlosssteuereinheit den Wert abgespeichert hat, sendet es eine Antwortnachricht vom Typ Response-ACK zurück. Konnte der Wert aufgrund falscher Parameter oder technischer Probleme nicht gespeichert werden, so wird als Antwortnachricht Response-NACK zurückgesendet.

### 4.11 NEW_BOX_STATE

Im Normalfall agiert die Schlosssteuereinheit als Slave und wartet auf Funktionsaufrufe vom Master (Steuereinheit 7). Es gibt allerdings eine Ausnahme, bei der die Schlossssteuereinheit als Master am Bus agiert und selbstständig einen Funktionsaufruf zur Steuereinheit 7 sendet Hierbei handelt es sich um die Zustandsänderung des Faches. Wird zum Beispiel eine Fachtür geschlossen, so wird dieses Ereignis von der Schlosssteuereinheit zur Steuereinheit 7 gemeldet, ohne das die Steuereinheit 7 vorher anfragen muss (vgl. z.B. Schritt 521 in Fig. 5).

Die Funktion hat folgende Charakteristika:
Nachrichtentyp: Request (Schlosssteuereinheit -> Steuereinheit)
Funktionscode: 0
Parameter 1: BoxType
Parameter 2: BoxState
Rückgabewert: Keiner

Der Parameter BoxType gibt wiederum den Fachtyp an, auf den die Schlosssteuereinheit konfiguriert ist Dieser Wert dient der Information für die Steuereinheit 7.

Der Parameter BoxState gibt den neuen Fachzustand an, auf den die Schlosssteuereinheit gewechselt hat, z.B. "unbekannt", "Fachgeschlossen und verriegelt", "Fach offen und Verriegelung deaktiviert", "Fach offen", "Schloss fehlerhaft".

Die Steuereinheit 7 muss eine Antwortnachricht vom Typ Response-ACK zurücksenden

Die in dieser Spezifikation beschriebenen beispielhaften Ausführungsformen / Ausführungsbeispiele / Offenbarungen sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist Die Abfolge der in dieser Spezifikation geschilderten Verfahrensschritte in den einzelnen Ablaufdiagrammen ist nicht zwingend, alternative Abfolgen der Verfahrensschritte sind denkbar. Die Verfahrensschritte können auf verschiedene Art und Weise implementiert werden, so ist eine Implementierung in Software (durch Programmanweisungen), Hardware oder eine Kombination von beidem zur Implementierung der Verfahrensschritte denkbar. In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

## Patentansprüche

1. Verfahren (500, 600, 700, 800) umfassend
- Erhalten (501, 601) einer ersten Kennung (LockID), die mit zumindest einer Person (93) assoziiert ist, von einem Zusteller oder der Person oder einem tragbaren elektronischen Kommunikationsgerät des Zustellers oder der Person, an einer Steuereinheit (7) einer Fachanlage (1), die neben der Steuereinheit (7) eine Vielzahl von mit jeweiligen Schlössern (10) versehenen Fächern (3, 4) und den Fächern (3, 4) jeweils zugeordneten Schlosssteuereinheiten (8) aufweist, die zur Kommunikation mit der Steuereinheit (7) eingerichtet sind, wobei die Steuereinheit (7) eine Benutzerschnittstelle (79) aufweist,
- Erhalten (521, 615), nach dem Erhalten der ersten Kennung (LocklD), von Information an der Steuereinheit (7), dass ein Fach (3) der Vielzahl von Fächern (3, 4) geschlossen wurde oder dass zumindest eine Sendung von der oder für die Person (93) in ein Fach (3) der Vielzahl von Fächern (3, 4) eingelegt und das Fach (3) geschlossen wurde, wobei die Information von einer dem Fach (3) zugeordneten Schlosssteuereinheit (8) erhalten wird, und wobei die Information mittels eines oder mehrerer Sensoren, die Teil der Schlosssteuereinheit (8) sind oder kommunikativ mit der Schlosssteuereinheit (8) verbunden sind, erfasst wird, und
- Bewirken (523, 617), durch die Steuereinheit (7), des Speicherns der ersten Kennung (LockID) in der dem Fach (3) zugeordneten Schlosssteuereinheit (8), wobei das Bewirken (523, 617) des Speicherns der ersten Kennung (LockID) in der dem Fach (3) zugeordneten Schlosssteuereinheit (8) durch das Erhalten (521, 615) der Information, dass das Fach (3) der Vielzahl von Fächern (3, 4) geschlossen wurde oder dass zumindest eine Sendung von der oder für die Person (93) in ein Fach (3) der Vielzahl von Fächern (3, 4) eingelegt und das Fach (3) geschlossen wurde, ausgelöst wird, oder wobei das Bewirken (523, 617) des Speicherns der ersten Kennung (LockID) in der dem Fach (3) zugeordneten Schlosssteuereinheit (8) durch das Erhalten (521, 615) der Information, dass das Fach (3) der Vielzahl von Fächern (3, 4) geschlossen wurde oder dass zumindest eine Sendung von der oder für die Person (93) in ein Fach (3) der Vielzahl von Fächern (3, 4) eingelegt und das Fach (3) geschlossen wurde, ausgelöst wird und nur unter der zusätzlichen Bedingung erfolgt, dass als weiterer Faktor Information, dass eine zusätzliche Interaktion mit der Benutzerschnittstelle (79) der Steuereinheit stattgefunden hat, erhalten wurde.

2. Verfahren nach Anspruch 1, wobei in einem Zeitpunkt, zu dem die Information erhalten wird, dass das Fach (3) geschlossen wurde oder dass zumindest eine Sendung von einer oder für eine Person (93) in das Fach (3) eingelegt und das Fach (3) geschlossen wurde, in der dem Fach (3) zugeordneten Schlosssteuereinheit (8) keine mit einer Person (93) assoziierte Kennung gespeichert ist

3. Verfahren nach Anspruch 1 oder 2, ferner umfassend:
- Bewirken (517, 611), dass vor dem Erhalten der Information, dass ein Fach (3) der Vielzahl von Fächern (3, 4) geschlossen wurde oder dass zumindest eine Sendung von einer oder für eine Person (93) in das Fach (3) eingelegt und das Fach (3) geschlossen wurde, zumindest dieses Fach (3) geöffnet ist und/oder ferner umfassend:
- Bewirken (517, 611) des Öffnens zumindest eines anderen Fachs (3), nachdem die Information, dass ein Fach (3) der Vielzahl von Fächern (3, 4) geschlossen wurde oder dass zumindest eine Sendung von einer oder für eine Person (93) in das Fach (3) eingelegt und das Fach (3) geschlossen wurde, erhalten wurde, und/oder nachdem das Speichern der ersten Kennung (LockID) in der dem Fach (3) zugeordneten Schlosssteuereinheit (8) bewirkt wurde, wobei in der dem anderen Fach (3) zugeordneten Schlosssteuereinheit (8) keine mit einer Person (93) assoziierte Kennung gespeichert ist

4. Verfahren nach einem der Ansprüche 1-3, wobei die Fächer (3, 4) der Vielzahl von Fächern zumindest zwei unterschiedliche Größen aufweisen, das Verfahren ferner umfassend:
- Bewirken (517, 611), dass vor dem Erhalten der Information, dass ein Fach (3) der Vielzahl von Fächern (3, 4) geschlossen wurde oder dass zumindest eine Sendung von einer oder für eine Person (93) in das Fach (3) eingelegt und das Fach (3) geschlossen wurde, zumindest ein Fach (3) jeder Größe geöffnet ist.

5. Verfahren nach einem der Ansprüche 1-4, ferner umfassend:
- Bewirken (503) des Öffnens von einem oder mehreren Fächern, in deren jeweils zugeordneten Schlosssteuereinheiten (8) eine Information, dass sie zumindest eine Sendung zur Abholung enthalten und/oder eine mit einer Person (93) assoziierte Kennung gespeichert ist, und
- Bewirken (507), für die Schlosssteuereinheiten (8) des einen oder der mehreren Fächer, des Löschens der Information, dass sie zumindest eine Sendung zur Abholung enthalten und/oder der mit einer Person (93) assoziierten Kennung, wobei insbesondere gilt, dass das Bewirken (503) des Öffnens und das Bewirken (507) des Löschens nach dem Erhalten (501) der ersten Kennung (LockID) und vor dem Erhalten (521) der Information, dass ein Fach (3) der Vielzahl von Fächern geschlossen wurde oder dass zumindest eine Sendung von der oder für die Person (93) in ein Fach (3) der Vielzahl von Fächern eingelegt und das Fach (3) geschlossen wurde, erfolgt

6. Verfahren nach einem der Ansprüche 1-5, ferner umfassend:
- Bewirken (618) des Speicherns einer Information, dass das Fach (3) zumindest eine Sendung zur Abholung enthält, in der dem Fach (3) zugeordneten Schlosssteuereinheit (8)
und/oder ferner umfassend:
- Erhalten (701) einer zweiten Kennung (LockID), die mit zumindest einer Person (93) assoziiert ist und entweder mit der ersten Kennung (LockID) übereinstimmt oder von dieser verschieden ist, an der Steuereinheit (7),
- Bewirken (703, 710) des Öffnens eines oder mehrerer Fächer, in deren jeweils zugeordneten Schlosssteuereinheiten (8) die zweite Kennung (LockID) gespeichert ist, und des Löschens der zweiten Kennung (LockID) aus einer oder mehreren der dem einen oder den mehreren Fächern zugeordneten Schlosssteuereinheiten (8) und/oder ferner umfassend:
- Erhalten (801) einer dritten Kennung (LockID), die mit zumindest einer Person (93) assoziiert ist und entweder mit der ersten Kennung (LockID) übereinstimmt oder von dieser verschieden ist, an der Steuereinheit (7), wobei der dritten Kennung (LockID) zumindest ein Fach (4) für eine Vielzahl von Einstell- und/oder Abholprozessen nicht jeweils dynamisch, sondern statisch zugewiesen ist, indem die dritte Kennung (LockID) für die Vielzahl von Einstell- und/oder Abholprozessen in der diesem Fach (4) zugeordneten Schlosssteuereinheit (8) gespeichert ist, und
- Bewirken (804) des Öffnens dieses Fachs (4).

7. Verfahren nach einem der Ansprüche 1-6, wobei die Kommunikation der Schlosssteuereinheiten (8) mit der Steuereinheit (7) über einen Bus, insbesondere einen CAN-Bus, erfolgt und wobei insbesondere an den Bus weitere Schlosssteuereinheiten (8) zur Kommunikation mit der Steuereinheit (7) angeschlossen werden können, ohne dass hinsichtlich der Kommunikation Änderungen an der Steuereinheit (7) erforderlich sind

8. Verfahren nach einem der Ansprüche 1-7, wobei die Fachanlage (1) Teil eines Zustell- und/oder Abholsystems (9) ist, das eine Vielzahl von mit jeweiligen Kennungen assoziierten Zustell- und/oder Abholbehältern (99-1) und eine Zentraleinheit (90) zur Vergabe von mit den jeweiligen Kennungen assoziierten Zugangsberechtigungen für die Zustell- und/oder Abholbehälter (99-1) umfasst, wobei das Format der ersten Kennung (LockID) mit dem Format der mit den Zustell-und/oder Abholbehältern (99-1) assoziierten Kennungen übereinstimmt und durch das Speichern der ersten Kennung (LockID) in einer Schlosssteuereinheit (8) der Fachanlage (1; 99-2) das der Schlosssteuereinheit (8) zugeordnete Fach hinsichtlich der Zugangsberechtigungen aus Sicht der Zentraleinheit (90) wie ein einzelner Zustell- und/oder Abholbehälter (99-1) behandelt werden kann.

9. Verfahren nach einem der Ansprüche 1-8, wobei die erste Kennung (LockID) in Zugangsberechtigungsinformation enthalten ist, die einen oder mehrere Zugangsberechtigungsparameter, darunter die erste Kennung (LockID), umfasst und deren Authentizität und/oder Integrität anhand eines in der Steuereinheit (7) gespeicherten Schlüssels geprüft werden kann.

10. Verfahren nach Anspruch 9, wobei die Zugangsberechtigungsinformation mit der ersten Kennung (LockID) von einem Zusteller (100), der zumindest eine Sendung für die mit der ersten Kennung (LockID) assoziierte Person (93) in die Fachanlage (1) einstellen will, oder der mit der ersten Kennung (LockID) assoziierten Person (93), die zumindest eine Sendung zur Abholung durch einen Zusteller (100) in der Fachanlage (1) einstellen will, oder von einem Gerät (91, 92, 98, 101) des Zustellers (100) oder der Person (93), bereitgestellt wird und/oder wobei die Authentizität und/oder Integrität der Zugangsberechtigungsinformation geprüft wird und bei fehlender Authentizität und/oder Integrität das Verfahren abgebrochen wird.

11. Computerprogramm, umfassend Programmanweisungen, die einen Prozessor (70, 80) zur Ausführung und/oder Steuerung des Verfahrens (500, 600, 700, 800) gemäß einem der Ansprüche 1-10 veranlassen, wenn das Computerprogramm auf dem Prozessor (70, 80) läuft.

12. Vorrichtung (7), eingerichtet zur Ausführung und/oder Steuerung des Verfahrens (500, 600, 700, 800) nach einem der Ansprüche 1-10 oder umfassend jeweilige Mittel zur Ausführung und/oder Steuerung der Schritte des Verfahrens (500, 600, 700, 800) nach einem der Ansprüche 1-10, wobei die Vorrichtung insbesondere die Steuereinheit (7) ist

## Claims

1. A method (500, 600, 700, 800) comprising
- obtaining (501, 601) a first identifier (LockID), which is associated with at least one person (93), from a delivery agent or the person or a portable electronic communication device of the delivery agent or the person, at a control unit (7) of a compartment system (1) which, in addition to the control unit (7), has a plurality of compartments (3,4) provided with respective locks (10) and lock control units (8) which are respectively assigned to the compartments (3, 4) and are configured to communicate with the control unit (7), wherein the control unit (7) has a user interface (79),
- obtaining (521, 615), at the control unit (7), after obtaining the first identifier (LockID), information indicating that one compartment (3) of the plurality of compartments (3, 4) has been closed or that at least one shipment from or for the person (93) has been placed in one compartment (3) of the plurality of compartments (3, 4) and the compartment (3) has been closed, wherein the information is obtained from a lock control unit (8) assigned to the compartment (3), and wherein the information is detected using one or more sensors, which are part of the lock control unit (8) or communicatively connected to the lock control unit (8), and
- causing (523, 617), by the control unit (7), storing of the first identifier (LockID) in the lock control unit (8) assigned to the compartment (3), wherein the causing (523, 617) of the storing of the first identifier (LockID) in the lock control unit (8) assigned to the compartment (3) is caused by the obtaining (521, 615) of the information indicating that the compartment (3) of the plurality of compartments (3, 4) has been closed or that at least one shipment from or for the person (93) has been placed in a compartment (3) of the plurality of compartments (3, 4) and the compartment (3) has been closed, or wherein the causing (523, 617) of the storing of the first identifier (LockID) in the lock control unit (8) assigned to the compartment (3) is caused by the obtaining (521, 615) of the information indicating that the compartment (3) of the plurality of compartments (3, 4) has been closed or that at least one shipment from or for the person (93) has been placed in a compartment (3) of the plurality of compartments (3, 4) and the compartment (3) has been closed, and the causing (523, 617) is only carried out under the additional condition that, as a further factor, information indicating that an additional interaction with the user interface (79) has taken place, has been obtained.

2. The method according to Claim 1, wherein at a time at which the information indicating that the compartment (3) has been closed or that at least one shipment from or for a person (93) has been placed in the compartment (3) and the compartment (3) has been closed is obtained, no identifier associated with a person (93) is stored in the lock control unit (8) assigned to the compartment (3).

3. The method according to Claim 1 or 2, the method further comprising:
- causing (517, 611) that before obtaining the information indicating that one compartment (3) of the plurality of compartments (3, 4) has been closed or that at least one shipment from or for a person (93) has been placed in the compartment (3) and the compartment (3) has been closed, at least this compartment (3) is open and/or the method further comprising:
- causing (517, 611) opening of at least one other compartment (3) after obtaining the information indicating that one compartment (3) of the plurality of compartments (3, 4) has been closed or that at least one shipment from or for a person (93) has been placed in the compartment (3) and the compartment (3) has been closed and/or after the storing of the first identifier (LockID) in the lock control unit (8) assigned to the compartment (3) has been caused, wherein no identifier associated with a person (93) is stored in the lock control unit (8) assigned to the other compartment (3).

4. The method according to one of Claims 1 to 3, wherein the compartments (3, 4) of the plurality of compartments have at least two different sizes, the method further comprising:
- causing (517, 611) that, before obtaining the information indicating that one compartment (3) of the plurality of compartments (3, 4) has been closed or that at least one shipment from or for a person (93) has been placed in the compartment (3) and the compartment (3) has been closed, at least one compartment (3) of each size is open.

5. The method according to one of Claims 1 to 4, the method further comprising:
- causing (503) opening of one or more compartments, the respectively assigned lock control units (8) of which store a piece of information indicating that they contain at least one shipment for collection and/or an identifier associated with a person (93), and
- causing (507), for the lock control units (8) of the one or more compartments, deleting of the information indicating that they contain at least one shipment for collection and/or the identifier associated with a person (93), wherein in particular the causing (503) of the opening and the causing (507) of the deleting are carried out after the obtaining (521) of the first identifier (LockID) and before the obtaining (521) of the information indicating that one compartment (3) of the plurality of compartments has been closed or that at least one shipment from or for the person (93) has been placed in one compartment (3) of the plurality of compartments and the compartment (3) has been closed.

6. The method according to one of Claims 1 to 5, the method further comprising:
- causing (618) storing of a piece of information indicating that the compartment (3) contains at least one shipment for collection in the lock control unit (8) assigned to the compartment (3) and/or the method further comprising:
- obtaining (701) a second identifier (LockID), which is associated with at least one person (93) and either matches the first identifier (LockID) or differs from the latter, at the control unit (7),
- causing (703, 710) opening of one or more compartments, in the respectively assigned lock control units (8) of which the second identifier (LockID) is stored, and causing deleting of the second identifier (LockID) from one or more of the lock control units (8) assigned to the one or more compartments, and/or the method further comprising:
- obtaining (801) a third identifier (LockID), which is associated with at least one person (93) and either matches the first identifier (LockID) or differs from the latter, at the control unit (7), wherein at least one compartment (4) for a plurality of placement and/or collection processes is statically allocated, rather than respectively dynamically allocated, to the third identifier (LockID) by storing the third identifier (LockID) for the plurality of placement and/or collection processes in the lock control unit (8) assigned to this compartment (4), and
- causing (804) opening of this compartment (4).

7. The method according to one of Claims 1 to 6, wherein the lock control units (8) communicate with the control unit (7) via a bus, in particular a CAN bus, and wherein in particular further lock control units (8) are connectable to the bus for the purpose of communication with the control unit (7) without the need for any changes to the control unit (7) with regard to the communication.

8. The method according to one of Claims 1 to 7, wherein the compartment system (1) is part of a delivery and/or collection system (9) comprising a plurality of delivery and/or collection containers (99-1) associated with respective identifiers and a central unit (90) for providing access authorizations associated with the respective identifiers for the delivery and/or collection containers (99-1), wherein the format of the first identifier (LockID) corresponds to the format of the identifiers associated with the delivery and/or collection containers (99-1), and wherein by storing the first identifier (LockID) in a lock control unit (8) of the compartment system (1; 99-2), the compartment assigned to the lock control unit (8) can be handled from the point of view of the central unit (90) like an individual delivery and/or collection container (99-1) with regard to the access authorizations.

9. The method according to one of Claims 1 to 8, wherein the first identifier (LockID) is included in access authorization information, which comprises one or more access authorization parameters including the first identifier (LockID), and whose authenticity and/or integrity can be checked using a key stored in the control unit (7).

10. The method according to Claim 9, wherein the access authorization information containing the first identifier (LockID) is provided by a delivery agent (100) wishing to place at least one shipment for the person associated with the first identifier (LockID) into the compartment system (1), or is provided by the person (93) who is associated with the first identifier (LockID) and wishes to place at least one shipment for collection by a delivery agent (100) into the compartment system (1), or is provided by a device (91, 92, 98, 101) of the delivery agent (100) or of the person (93) and/or wherein the authenticity and/or the integrity of the access authorization information is checked and the method is aborted if the check of the authenticity and/or the integrity of the access authorization information is not successful.

11. Computer program comprising program instructions, which cause a processor (70, 80) to perform and/or control the method (500, 600, 700, 800) according to one of Claims 1 to 10, when the computer program runs on the processor (70, 80).

12. Apparatus (7) configured to perform and/or control the method (500, 600, 700, 800) according to one of Claims 1 to 10 or comprising respective means for performing and/or controlling the steps of the method (500, 600, 700, 800) according to one of claims 1 to 10, wherein the apparatus (7) is in particular the control unit (7).

## Revendications

1. Procédé (500, 600, 700, 800) comprenant
- l'obtention (501, 601) d'un premier identifiant (LockID) qui est associé à au moins une personne (93), par un livreur ou la personne ou un appareil de communication électronique portable du livreur ou de la personne, au niveau d'une unité de commande (7) d'un système à compartiments (1) qui présente outre l'unité de commande (7) une pluralité de compartiments (3, 4) pourvus de serrures respectives (10) et des unités de commande de serrure (8) associées respectivement aux compartiments (3, 4) qui sont aménagés pour la communication avec l'unité de commande (7), dans lequel l'unité de commande (7) présente une interface d'utilisateur (79),
- l'obtention (521, 615), après l'obtention du premier identifiant (LockID), d'une information au niveau de l'unité de commande (7), qu'un compartiment (3) de la pluralité de compartiments (3, 4) a été fermé ou qu'au moins un envoi de la personne ou pour la personne (93) a été inséré dans un compartiment (3) de la pluralité de compartiments (3, 4) et le compartiment (3) a été fermé, dans lequel l'information est obtenue par une unité de commande de serrure (8) associée au compartiment (3), et dans lequel l'information est détectée au moyen d'un ou de plusieurs capteurs qui font partie de l'unité de commande de serrure (8) ou sont reliés en communication à l'unité de commande de serrure (8), et
- l'accomplissement (523, 617), par l'unité de commande (7), de l'enregistrement du premier identifiant (LockID) dans l'unité de commande de serrure (8) associée au compartiment (3), dans lequel l'accomplissement (523, 617) de l'enregistrement du premier identifiant (LockID) dans l'unité de commande de serrure (8) associée au compartiment (3) par l'obtention (521, 615) de l'information selon laquelle le compartiment (3) de la pluralité de compartiments (3, 4) a été fermé ou qu'au moins un envoi de la personne ou pour la personne (93) a été inséré dans un compartiment (3) de la pluralité de compartiments (3, 4) et le compartiment (3) a été fermé, est déclenché, ou dans lequel l'accomplissement (523, 617) de l'enregistrement du premier identifiant (LockID) dans l'unité de commande de serrure (8) associé au compartiment (3) est déclenché par l'obtention (521, 615) de l'information selon laquelle le compartiment (3) de la pluralité de compartiments (3, 4) a été fermé ou qu'au moins un envoi de la personne ou pour la personne (93) a été inséré dans un compartiment (3) de la pluralité de compartiments (3, 4) et le compartiment (3) a été fermé, et n'est effectué qu'à la condition supplémentaire selon laquelle une information qu'une interaction supplémentaire avec l'interface utilisateur (79) de l'unité de commande a eu lieu, a été obtenue en tant qu'autre facteur.

2. Procédé selon la revendication 1, dans lequel à un moment auquel l'information est obtenue, selon laquelle le compartiment (3) a été fermé ou qu'au moins un envoi d'une personne ou pour une personne (93) a été inséré dans le compartiment (3) et le compartiment (3) a été fermé, aucun identifiant associé à une personne (93) n'est enregistré dans l'unité de commande de serrure (8) associée au compartiment (3).

3. Procédé selon la revendication 1 ou 2, comprenant en outre :
- l'accomplissement (517, 611), avant l'obtention de l'information selon laquelle un compartiment (3) de la pluralité de compartiments (3, 4) a été fermé ou qu'au moins un envoi d'une personne ou pour une personne (93) a été inséré dans le compartiment (3) et le compartiment (3) a été fermé, qu'au moins ce compartiment (3) est ouvert et/ou comprenant en outre :
- l'accomplissement (517, 611) de l'ouverture au moins d'un autre compartiment (3) après que l'information selon laquelle un compartiment (3) de la pluralité de compartiments (3, 4) a été fermé ou qu'au moins un envoi d'une personne ou pour une personne (93) a été inséré dans le compartiment (3) et le compartiment (3) a été fermé, a été obtenue, et/ou après que l'enregistrement du premier identifiant (LockID) dans l'unité de commande de serrure (8) associée au compartiment (3) a été accompli, dans lequel aucun identifiant associé à une personne (93) n'est enregistré dans l'unité de commande de serrure (8) associée à l'autre compartiment (3).

4. Procédé selon l'une des revendications 1 à 3, dans lequel les compartiments (3, 4) de la pluralité de compartiments présentent au moins deux grandeurs différentes, le procédé comprenant en outre :
- l'accomplissement (517, 611), avant l'obtention de l'information selon laquelle un compartiment (3) de la pluralité de compartiments (3, 4) a été fermé ou qu'au moins un envoi d'une personne ou pour une personne (93) a été inséré dans le compartiment (3) et le compartiment (3) a été fermé, qu'au moins un compartiment (3) de chaque grandeur est ouvert.

5. Procédé selon l'une des revendications 1 à 4, comprenant en outre :
- l'accomplissement (503) de l'ouverture desdits un ou plusieurs compartiments, dans les unités de commande de serrure (8) associées respectivement desquels une information qu'elles contiennent au moins un envoi pour la collecte et/ou un identifiant associé à une personne (93) est enregistrée, et
- l'accomplissement (507), pour les unités de commande de serrure (8) desdits un ou plusieurs compartiments, de la suppression de l'information selon laquelle elles contiennent au moins un envoi pour la collecte et/ou l'identifiant associé à une personne (93), dans lequel il vaut en particulier que l'accomplissement (503) de l'ouverture et l'accomplissement (507) de la suppression après l'obtention (501) du premier identifiant (LockID) et avant l'obtention (521) de l'information selon laquelle un compartiment (3) de la pluralité de compartiments a été fermé ou qu'au moins un envoi de la personne ou pour la personne (93) a été inséré dans un compartiment (3) de la pluralité de compartiments et le compartiment (3) a été fermé, est effectué.

6. Procédé selon l'une des revendications 1 à 5, comprenant en outre :
- l'accomplissement (618) de l'enregistrement d'une information selon laquelle le compartiment (3) contient au moins un envoi pour la collecte, dans l'unité de commande de serrure (8) associée au compartiment (3),
et/ou comprenant en outre :
- l'obtention (701) d'un deuxième identifiant (LockID) qui est associé à au moins une personne (93) et coïncide avec le premier identifiant (LockID) ou est différent de celui-ci, au niveau de l'unité de commande (7),
- l'accomplissement (703, 710) de l'ouverture desdits un ou plusieurs compartiments, dans les unités de commande de serrure (8) associés respectivement desquels le deuxième identifiant (LockID) est enregistré, et de la suppression du deuxième identifiant (LockID) à partir d'une ou de plusieurs unités de commande de serrure (8) associées auxdits un ou plusieurs compartiments
et/ou comprenant en outre :
- l'obtention (801) d'un troisième identifiant (LockID) qui est associé à au moins une personne (93) et coïncide avec le premier identifiant (LockID) ou est différent de celui-ci, au niveau de l'unité de commande (7), dans lequel au moins un compartiment (4) pour une pluralité de processus de réglage et/ou de collecte n'est pas affecté dynamiquement, mais statiquement au troisième identifiant (LockID), en ce que le troisième identifiant (LockID) pour la pluralité de processus de réglage et/ou de collecte est enregistré dans l'unité de commande de serrure (8) associée à ce compartiment (4), et
- l'accomplissement (804) de l'ouverture de ce compartiment (4).

7. Procédé selon l'une des revendications 1 à 6, dans lequel la communication des unités de commande de serrure (8) avec l'unité de commande (7) par un bus, en particulier un bus CAN, est effectuée et dans lequel en particulier d'autres unités de commande de serrure (8) peuvent être raccordées au bus pour la communication avec l'unité de commande (7) sans qu'en ce qui concerne la communication des modifications sur l'unité de commande (7) ne soient nécessaires.

8. Procédé selon l'une des revendications 1 à 7, dans lequel le système à compartiments (1) fait partie d'un système de livraison et/ou de collecte (9) qui comporte une pluralité de récipients de livraison et/ou de collecte (99-1) associés aux identifiants respectifs et une unité centrale (90) pour l'attribution d'autorisations d'accès associées aux identifiants respectifs pour les récipients de livraison et/ou de collecte (99-1), dans lequel le format du premier identifiant (LockID) coïncide avec le format des identifiants associés aux récipients de livraison et/ou de collecte (99-1) et par l'enregistrement du premier identifiant (LockID) dans une unité de commande de serrure (8) du système à compartiments (1 ; 99-2) le compartiment associé à l'unité de commande de serrure (8) peut être traité en ce qui concerne les autorisations d'accès du point de vue de l'unité centrale (90) comme un récipient de livraison et/ou de collecte (99-1) individuel.

9. Procédé selon l'une des revendications 1 à 8, dans lequel le premier identifiant (LockID) est contenu dans une information d'autorisation d'accès qui comporte un ou plusieurs paramètres d'autorisation d'accès, dont le premier identifiant (LockID), et dont l'authenticité et/ou l'intégrité peut être vérifiée au moyen d'une clé enregistrée dans l'unité de commande (7).

10. Procédé selon la revendication 9, dans lequel l'information d'autorisation d'accès avec le premier identifiant (LockID) est fournie par un livreur (100) qui veut suspendre au moins un envoi pour la personne (93) associée au premier identifiant (LockID) dans le système à compartiments (1), ou par la personne (93) associée au premier identifiant (LockID) qui veut suspendre au moins un envoi pour la collecte par un livreur (100) dans le système à compartiments (1), ou par un appareil (91, 92, 98, 101) du livreur (100) ou de la personne (93) et/ou dans lequel l'authenticité et/ou l'intégrité de l'information d'autorisation d'accès est vérifiée et en cas d'authenticité et/ou d'intégrité manquante le procédé est interrompu.

11. Programme informatique comprenant des instructions de programme qui incitent un processeur (70, 80) à la réalisation et/ou la commande du procédé (500, 600, 700, 800) selon l'une des revendications 1 à 10 lorsque le programme informatique tourne sur le processeur (70, 80).

12. Dispositif (7) aménagé pour la réalisation et/ou la commande du procédé (500, 600, 700, 800) selon l'une des revendications 1 à 10 ou comprenant des moyens respectifs pour la réalisation et/ou la commande des étapes du procédé (500, 600, 700, 800) selon l'une des revendications 1 à 10, dans lequel le dispositif est en particulier l'unité de commande (7).
